(19) Europäisches Patentamt
European Patent Office
Office européen des brevets

(11) **EP 2 760 204 A1**

(12) **EUROPEAN PATENT APPLICATION**
published in accordance with Art. 153(4) EPC

(43) Date of publication:
**30.07.2014 Bulletin 2014/31**

(51) Int Cl.:
***H04N 7/32*** (0000.00)   ***H04N 13/00*** (2006.01)

(21) Application number: **12805085.3**

(86) International application number:
**PCT/JP2012/065818**

(22) Date of filing: **21.06.2012**

(87) International publication number:
**WO 2013/002109 (03.01.2013 Gazette 2013/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2011   JP 2011145565**
**26.03.2012   JP 2012069184**

(71) Applicant: **Sony Corporation**
**Tokyo 108-0075 (JP)**

(72) Inventors:
• **TAKAHASHI Yoshitomo**
**Tokyo 108-0075 (JP)**
• **HATTORI Shinobu**
**Tokyo 108-0075 (JP)**

(74) Representative: **Turner, James Arthur**
**D Young & Co LLP**
**120 Holborn**
**London EC1N 2DY (GB)**

(54) **IMAGE PROCESSING DEVICE AND METHOD**

(57) The present technology relates to an image processing device and a method capable of suppressing reduction in encoding efficiency. There are provided a restrictor for restricting, at the time of generating a predicted image for encoding of a multi-viewpoint image, according to a prediction direction of a focused region, use of a correlated region where a candidate for a prediction vector which is a prediction value of a vector of the focused region is to be obtained, and a prediction vector generator for generating the prediction vector by using a vector of a correlated region whose use is not restricted by the restrictor. The present disclosure may be applied to an image processing device.

FIG. 15

**Description**

TECHNICAL FIELD

The present disclosure is related to an image processing device and a method, and particularly, to an image processing device and a method for improving encoding efficiency.

BACKGROUND ART

In recent years, devices conforming to techniques such as MPEG (Moving Picture Experts Group) and the like that handle image information as digital information, and that perform compression through orthogonal transform, such as discrete cosine transform, and motion compensation by using redundancy unique to image information in order to perform highly efficient transmission and accumulation of information are being widely used in both information distribution by broadcast stations and information reception at general households.

Particularly, MPEG2 (ISO (International Organization for Standardization)/IEC (International Electrotechnical Commission) 13818-2) is defined as a general-purpose image encoding technique, and is a standard covering both an interlaced image and a progressive image, and also, a standard-resolution image and a high-resolution image, and is currently widely used in a wide range of applications for professional use and consumer use. By using the MPEG2 compression technique, a high compression rate and a desirable image quality may be realized by assigning an amount of encoding (bit rate) of 4 to 8 Mbps in a case of an interlaced image of a standard resolution with $720 \times 480$ pixels, and 18 to 22 Mbps pixels in a case of an interlaced image of a high resolution with $1920 \times 1088$ pixels, for example.

MPEG2 is for high-image-quality encoding suitable mainly for broadcasting, and is not compatible with an encoding technique with an amount of encoding (bit rate) lower than MPEG1, that is, a higher compression ratio. With the spread of mobile terminals, a need for such an encoding method is expected to increase in the future, and thus, an MPEG4 encoding technique has been standardized. As for an image encoding technique, ISO/IEC 14496-2 was approved as an international standard in December 1998.

Furthermore, in recent years, standardization of a standard called H.26L (ITU-T (International Telecommunication Union Telecommunication Standardization Sector) Q6/16 VCEG (Video Coding Expert Group)) has been under way initially for the purpose of image encoding for videoconferences. Compared with the conventional encoding techniques such as MPEG2 and MPEG4, H.26L requires a larger amount of calculation in encoding and decoding, but is known to achieve higher encoding efficiency. Also, as a part of activities of MPEG4, standardization for achieving high encoding efficiency based on this H.26L, while including functions not supported by H.26L, was performed as Joint Model of Enhanced-Compression Video Coding.

As for a standardization schedule, international standards were established under the names of H.264 and MPEG-4 Part 10 (Advanced Video Coding, hereinafter written as "H.264/AVC") in March 2003.

However, a macroblock size of 16 pixels $\times$ 16 pixels may not be the best for a large picture frame such as UHD (Ultra High Definition; 4000 pixels $\times$ 2000 pixels) which is targeted by the next-generation encoding technique.

Accordingly, with a view to further improve the encoding efficiency than AVC, standardization of an encoding technique called HEVC (High Efficiency Video Coding) is being promoted by JCTVC (Joint Collaboration Team-Video Coding), a joint standardization group of ITU-T and ISO/IEC (for example, see Non-Patent Document 1).

With this HEVC encoding technique, a coding unit (CU) is defined as a processing unit similar to a macroblock in AVC. The size of this CU is not fixed to $16 \times 16$ pixels like the macroblock of AVC, and is specified in image compression information in each sequence.

Now, to improve motion vector encoding using median prediction defined in AVC, a method has been considered of taking not only "Spatial Predictor", but also "Temporal Predictor" and "Spatio-Temporal Predictor" as the candidates for a prediction motion vector (for example, see Non-Patent Document 2).

Also, as one method of encoding motion information, a method called Motion Partition Merging according to which a Merge_Flag and a Merge_Left_Flag are transmitted is being proposed (for example, see Patent Document 3).

CITATION LIST

NON-PATENT DOCUMENT

Non-Patent Document 1: Thomas Wiegand, Woo-Jin Han, Benjamin Bross, Jens-Rainer Ohm, Gary J. Sullivan, "Working Draft 1 of High-Efficiency Video Coding ", JCTVC-C403, Joint Collaborative Team on Video Coding (JCT-VC)of ITU-T SG16 WP3 and ISO/IEC JTC1/SC29/WG113rd Meeting: Guangzhou, CN, 7-15 October, 2010

Non-Patent Document 2: Joel Jung, Guillaume Laroche, "Competition-Based Scheme for Motion Vector Selection and Coding", VCEG-AC06,ITU - Telecommunications Standardization Sector STUDY GROUP 16 Question 6Video Coding Experts Group (VCEG) 29th Meeting: Klagenfurt, Austria, 17-18 July, 2006

Non-Patent Document 3: Martin Winken, Sebastian Bosse, Benjamin Bross, Philipp Helle, Tobias Hinz, Heiner Kirchhoffer, Haricharan Lakshman, Detlev Marpe, Simon Oudin, Matthias Preiss, HeikoSchwarz, Mischa Siekmann, Karsten Suehring, and Thomas Wiegand, "Description of video coding technology proposed by Fraunhofer HHI",JCTVC-A116, April, 2010

## SUMMARY OF THE INVENTION

### PROBLEMS TO BE SOLVED BY THE INVENTION

However, the encoding efficiency is possibly reduced since only processing for a single viewpoint is indicated and prediction of vectors across viewpoints is not possible in the case of multi-viewpoint encoding.

In view of the above circumstances, the present disclosure has its object to suppress reduction in the encoding efficiency.

### SOLUTIONS TO PROBLEMS

An aspect of the present disclosure is an image processing device including a restrictor for restricting, according to a prediction direction of a focused region of a multi-viewpoint image, use of a correlated region where a candidate for a prediction vector which is a prediction value of a vector of the focused region is to be obtained, and a prediction vector generator for generating the prediction vector by using a vector of a correlated region whose use is not restricted by the restrictor.

The restrictor is capable of prohibiting use of a correlated region of a same view as and a different time from the focused region, for performing prediction in a parallax direction.

The restrictor is capable of prohibiting use of a correlated region of a focused region where prediction is to be performed only in a parallax direction, the correlated region being of a same view as and a different time from the focused region and being for performing prediction in a temporal direction.

The restrictor is capable of prohibiting use of a correlated region of a different view from and a same time as the focused region, for performing prediction in a parallax direction.

The restrictor is capable of generating restriction information indicating restriction of the correlated region.

A transmitter for transmitting the restriction information generated by the restrictor may further be included.

Also, an aspect of the present disclosure is an image processing method of an image processing device, the method including restricting, by a restrictor, according to a prediction direction of a focused region of a multi-viewpoint image, use of a correlated region where a candidate for a prediction vector which is a prediction value of a vector of the focused region is to be obtained, and generating, by a prediction vector generator, the prediction vector by using a vector of a correlated region whose use is not restricted.

Another aspect of the present disclosure is an image processing device including a receiver for receiving restriction information restricting a correlated region where a candidate for a prediction vector which is a prediction value of a vector of a focused region of a multi-viewpoint image is to be obtained, and a prediction vector generator for generating the prediction vector by using a vector of a correlated region whose use is not prohibited by the restriction information received by the receiver.

A further another aspect of the present disclosure is an image processing method of an image processing device, the method including receiving, by a receiver, restriction information restricting a correlated region where a candidate for a prediction vector which is a prediction value of a vector of a focused region of a multi-viewpoint image is to be obtained, and generating, by a prediction vector generator, the prediction vector by using a vector of a correlated region whose use is not prohibited by the restriction information received.

According to an aspect of the present disclosure, use of a correlated region where a candidate for a prediction vector which is a prediction value of a vector of a focused region of a multi-viewpoint image is restricted according to a prediction direction of the focused region, and a prediction vector is generated by using a vector of a correlated region whose use is not restricted.

According to another aspect of the present disclosure, restriction information restricting a correlated region where a candidate for a prediction vector which is a prediction value of a vector of a focused region of a multi-viewpoint image is to be obtained is received, and a prediction vector is generated by using a vector of a correlated region whose use is not prohibited by the restriction information received.

### EFFECTS OF THE INVENTION

According to the present disclosure, images can be processed. Particularly, reduction in the encoding efficiency may be suppressed.

BRIEF DESCRIPTION OF DRAWINGS

Fig. 1 is a diagram for explaining examples of types of prediction units.

Fig. 2 is a diagram for explaining examples of peripheral regions of a spatially correlated region in a merge mode.

Fig. 3 is a diagram for explaining examples of peripheral regions used in deciding a reference image index with respect to a temporally correlated region in a merge mode.

Fig. 4 is a diagram showing examples of conditions for deciding a reference image index of a temporally correlated block in a merge mode.

Fig. 5 is a diagram for explaining an example of a method of deciding a temporally correlated region.

Fig. 6 is a diagram for explaining a method of deciding an image including a temporally correlated region.

Fig. 7 is a diagram for explaining an example of a positional relationship between a focused region and a temporally correlated region.

Fig. 8 is a diagram showing an example of scaling of a motion vector of a temporally correlated region.

Fig. 9 is a diagram for explaining examples of peripheral regions of a spatially correlated region in other than a merge mode.

Fig. 10 is a diagram showing an example of scaling of a motion vector of a spatially correlated region with a different reference image index.

Fig. 11 is a diagram showing an example of a reference relationship of a three-viewpoint image.

Fig. 12 is a diagram for explaining an example of a restriction on a temporally correlated region.

Fig. 13 is a diagram for explaining an example of a restriction on a spatially correlated region.

Fig. 14 is a block diagram showing a typical example structure of an image encoding device.

Fig. 15 is a block diagram showing a typical example structure of a motion parallax predictor/compensator.

Fig. 16 is a diagram showing examples of use conditions of a temporally correlated block and a spatially correlated block.

Fig. 17 is a diagram showing an example of a syntax of a sequence parameter set.

Fig. 18 is a diagram showing an example of a syntax of a slice header.

Fig. 19 is a flowchart for explaining an example of a flow of an encoding process.

Fig. 20 is a flowchart for explaining an example of a flow of an inter motion prediction process.

Fig. 21 is a flowchart for explaining an example of a flow of a restriction determination process.

Fig. 22 is a flowchart for explaining an example of a flow of a merge mode process.

Fig. 23 is a flowchart for explaining an example of a flow of a spatial correlation prediction process.

Fig. 24 is a flowchart for explaining an example of a flow of a temporal parallax correlation prediction process.

Fig. 25 is a flowchart subsequent to Fig. 24, for explaining the example of the flow of the temporal parallax correlation prediction process.

Fig. 26 is a flowchart for explaining an example of a flow of a motion parallax vector prediction process.

Fig. 27 is a flowchart for explaining another example of the flow of the spatial correlation prediction process.

Fig. 28 is a flowchart for explaining an example of a flow of a peripheral region A motion vector prediction process.

Fig. 29 is a flowchart for explaining an example of a flow of a peripheral region B motion vector prediction process.

Fig. 30 is a block diagram showing a typical example structure of an image decoding device.

Fig. 31 is a block diagram showing a typical example structure of a motion parallax compensator.

Fig. 32 is a flowchart for explaining an example of a flow of a decoding process.

Fig. 33 is a flowchart for explaining an example of a flow of a decoding process.

Fig. 34 is a flowchart for explaining an example of a flow of a motion parallax compensation process.

Fig. 35 is a flowchart for explaining an example of a flow of a motion parallax vector generation process.

Fig. 36 is a diagram for explaining parallax and depth.

Fig. 37 is a block diagram showing a typical example structure of a personal computer.

Fig. 38 is a block diagram showing one example of a schematic structure of a television apparatus.

Fig. 39 is a block diagram showing one example of a schematic structure of a portable telephone device.

Fig. 40 is a block diagram showing one example of a schematic structure of a recording/reproducing device.

Fig. 41 is a block diagram showing one example of a schematic structure of an imaging device.

MODE FOR CARRYING OUT THE INVENTION

Modes for carrying out the present disclosure (hereinafter referred to as the embodiments) will be described below. The description will be made in the following order.

1. First Embodiment (image encoding device)
2. Second Embodiment (image decoding device)
3. Third Embodiment (computer)
4. Fourth Embodiment (television receiver)
5. Fifth Embodiment (portable telephone device)
6. Sixth Embodiment (recording/reproducing device)
7. Seventh Embodiment (imaging device)

<1. First Embodiment>

<Description of Depth Images (Parallax Images) in This Specification>

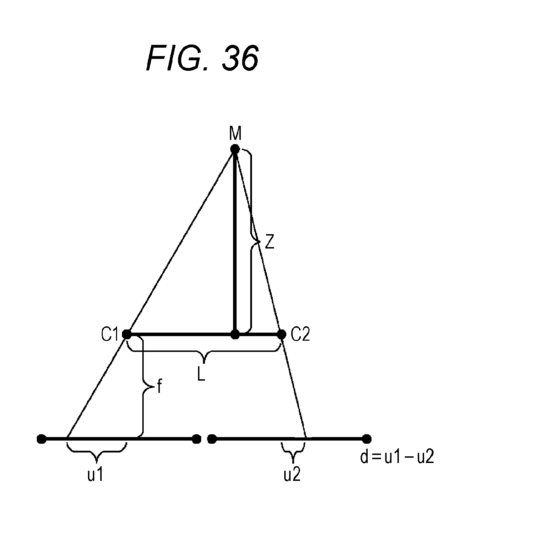

Fig. 36 is a diagram for explaining parallax and depth.

As shown in Fig. 36, when a color image of an object M is captured by a camera c1 located in a position C1 and a camera c2 located in a position C2, the object M has depth Z, which is the distance from the camera c1 (the camera c2) in the depth direction, and is defined by the following equation (a).

[Mathematical Formula 1]

$$Z = (L/d) \times f \qquad \cdots (a)$$

Here, L represents the horizontal distance between the position C1 and the position C2 (hereinafter referred to as the inter-camera distance) . Also, d is a value obtained by subtracting a horizontal distance u2 of the position of the object M on the color image captured by the camera c2 from the center of the color image from a horizontal distance u1 of the position of the object M on the color image captured by the camera c1 from the center of the color image, that is, the parallax. Further, f represents the focal length of the camera c1, and, in the equation (a), the focal lengths of the camera c1 and the camera c2 are the same.

As shown in the equation (a), the parallax d and the depth Z can be uniquely converted. Therefore, in this specification, the image representing the parallax d and the image representing the depth Z of the color image of two viewpoints captured by the camera c1 and the camera c2 are collectively referred to as depth images (parallax images).

A depth image (a parallax image) is an image representing the parallax d or the depth Z, and a pixel value in a depth image (a parallax image) is not the parallax d or the depth Z but may be a value obtained by normalizing the parallax d, a value obtained by normalizing the reciprocal 1/Z of the depth Z, or the like.

A value I obtained by normalizing the parallax d with 8 bits (0 through 255) can be calculated according to the equation (b) shown below. Here, the number of normalization bits of the parallax d is not limited to 8, and may be some other number, such as 10 or 12.

[Mathematical Formula 2]

$$I = \frac{255 \times (d - D_{min})}{D_{max} - D_{min}} \qquad \cdots (b)$$

Additionally, in the equation (b), $D_{max}$ is the maximum value of the parallax d, and $D_{min}$ is the minimum value of the parallax d. The maximum value $D_{max}$ and the minimum value $D_{min}$ may be set for a unit of one screen or of a plurality of screens.

A value y obtained by normalizing the reciprocal 1/Z of the depth Z with 8 bits (0 through 255) can be determined according to the equation (c) shown below. Here, the number of normalization bits of the reciprocal 1/Z of the depth Z is not limited to 8, and may be some other number, such as 10 or 12.

[Mathematical Formula 3]

$$y = 255 \times \frac{\dfrac{1}{Z} - \dfrac{1}{Z_{far}}}{\dfrac{1}{Z_{near}} - \dfrac{1}{Z_{far}}} \qquad \cdots(c)$$

Additionally, in the equation (c), $Z_{far}$ is the maximum value of the depth Z, and $Z_{near}$ is the minimum value of the depth Z. The maximum value $Z_{far}$, and the minimum value $Z_{near}$ may be set for a unit of one screen or of a plurality of screens.

As described above, in this specification, an image having a pixel value I obtained by normalizing the parallax d, and an image having a pixel value y obtained by normalizing the reciprocal 1/Z of the depth Z are collectively referred to as depth images (parallax images), as the parallax d and the depth Z can be uniquely converted. The color format of the depth images (parallax images) is YUV420 or YUV400 format, but may be some other color format.

When attention is focused on the value I or the value y as information, instead of a pixel value in a depth image (a parallax image), the value I or the value y is set as depth information (parallax information). Further, a map formed by mapping the value I or the value y is set as a depth map (a parallax map).

[Motion Prediction]

According to image encoding such as AVC (Advanced Video Coding) or HEVC (High Efficiency Video Coding), motion prediction using the correlation in the temporal direction (inter frames) is performed.

As a unit of processing of such a prediction process, blocks in a hierarchical structure, such as macroblocks and sub-blocks are specified in AVC, and coding units (CU) are specified in HEVC.

The CU is referred to also as a Coding Tree Block (CTB), and is a partial region of an image on a per-picture basis which serves the same role as the macroblock of AVC. Whereas the latter is fixed to a size of 16 × 16 pixels, the size of the former is not fixed, and is specified in image compression information in each sequence.

For example, in a sequence parameter set (SPS) included in encoded data which is to be output, the maximum size (LCU (Largest Coding Unit)) and the minimum size (SCU (Smallest Coding Unit)) of the CU are specified.

In each LCU, by setting split-flag = 1 where the size does not fall below the size of the SCU, division into a smaller CU is allowed. When the value of the split-flag is "1", a CU whose size is 2N × 2N is divided into CUs in a layer that is one layer below whose sizes are N × N.

Furthermore, the CU is divided into prediction units (PU) which are regions (partial regions of an image on a per-picture basis) which are units of processing for intra or inter prediction, and is also divided into transform units (TU) which are regions (partial regions of an image on a per-picture basis) which are units of processing for orthogonal transform. Currently, according to HEVC, 16 × 16 and 32 × 32 orthogonal transform may be used, in addition to 4 × 4 and 8 × 8.

In the case of an encoding method such as HEVC as described above according to which a CU is defined and various processes are performed in units of the CUs, a macroblock of AVC is assumed to correspond to the LCU. However, since the CU has a hierarchical structure, the size of the LCU in the uppermost layer is generally set to be greater than the macroblock of AVC, such as 128 × 128 pixels, for example.

Additionally, in the following, a "region" includes all of the various regions described above (for example, the macroblock, the sub-block, the LCU, the CU, the SCU, the PU, the TU, and the like) (the region may be any of these). Of course, units other than those described above may also be included, and units that are not possible are omitted as appropriate according to the contents of the description.

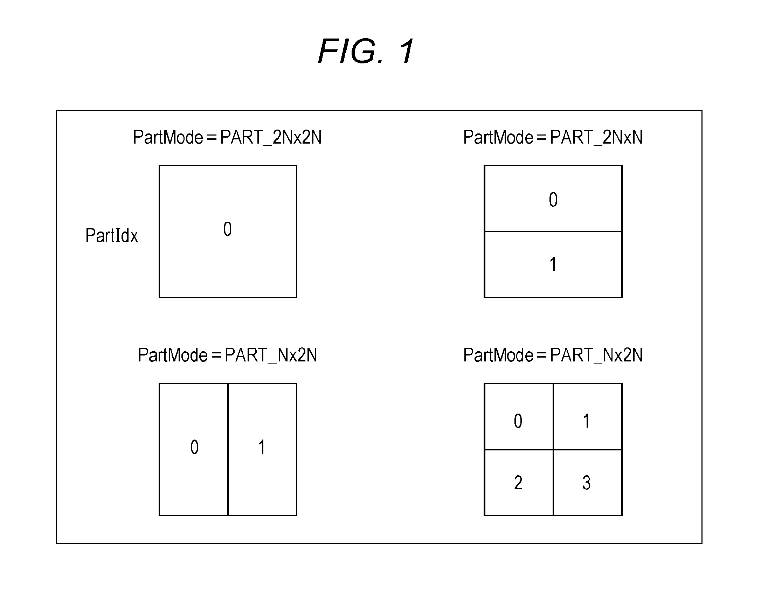

Fig. 1 shows an example structure of a prediction unit (PU) which is a unit of a prediction process, in contrast to the CU which is a unit of an encoding process. As shown in Fig. 1, four types of PUs may be formed for one CU. The four large squares shown in Fig. 1 are the CUs, and the rectangles or the squares inside the large squares are the PUs. The numbers represent the indices of respective PUs, and do not represent the contents of the image.

As shown in Fig. 1, in the case of the example at the top left, the CU is configured from one PU (2N × 2N). That is, in this case, the CU and the PU are equivalent. Also, in the case of the example at the top right, the CU is horizontally divided into two, and is configured from two horizontally long PUs (2N × N). Furthermore, in the case of the example at the bottom left, the CU is vertically divided into two, and is configured from two vertically long PUs (N × 2N).

Moreover, in the case of the example at the bottom right, the CU is divided into two horizontally and vertically (divided into four in total), and is configured from four square PUs (N $\times$ N). Which of these patterns is to be applied is decided according to the contents of the image (the cost function value of a prediction result).

Now, Non-Patent Document 3 proposes a method (a merge mode) called Motion Partition Merging as one encoding method for motion information. According to this method, two flags, a Merge Flag and a Merge Left Flag, are transmitted as merge information which is information about the merge mode. If the Merge Flag is 1, it is indicated that motion information of a focused region X, which is a processing target, is the same as the motion information of a peripheral region T immediately above the focused region or of a peripheral region L immediately on the left of the focused region. At this time, the Merge Left Flag is included in the merge information and is transmitted. If the Merge Flag is 0, it is indicated that motion information of the focused region X is different from the motion information of the peripheral region T and the peripheral region L. In this case, the motion information of the focused region X is transmitted.

In the case the motion information of the focused region X is the same as the motion information of the peripheral region L, the Merge Flag is 1, and the Merge Left Flag is 1. In the case the motion information of the focused region X is the same as the motion information of the peripheral region T, the Merge Flag is 1, and the Merge Left Flag is 0.

Additionally, in this merge mode, not only the spatially peripheral regions L and T, but also, a temporally peripheral region (a temporally correlated region) is considered to be made a candidate region to be merged with the focused region X.

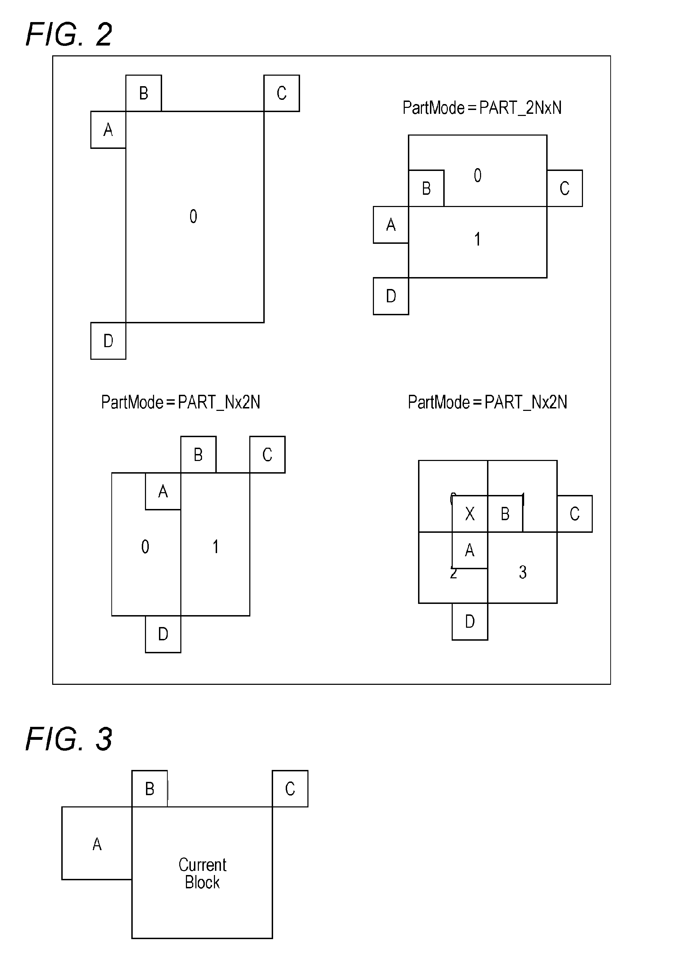

The peripheral regions of each prediction unit (PU) in the example of Fig. 1 are as shown in Fig. 2. For example, with respect to the prediction unit of the example at the top left of Fig. 1 whose index is 0, regions A to D of the example shown at the top left of Fig. 2 are given as the peripheral regions. Also, for example, with respect to the prediction unit of the example at the top right of Fig. 1 whose index is 1, regions A to D of the example shown at the top right of Fig. 2 are given as the peripheral regions. Furthermore, for example, with respect to the prediction unit of the example at the bottom left of Fig. 1 whose index is 1, regions A to D of the example shown at the bottom left of Fig. 2 are given as the peripheral regions. Moreover, for example, with respect to the prediction unit of the example at the bottom right of Fig. 1 whose index is 3, regions A to D of the example shown at the bottom right of Fig. 2 are given as the peripheral regions.

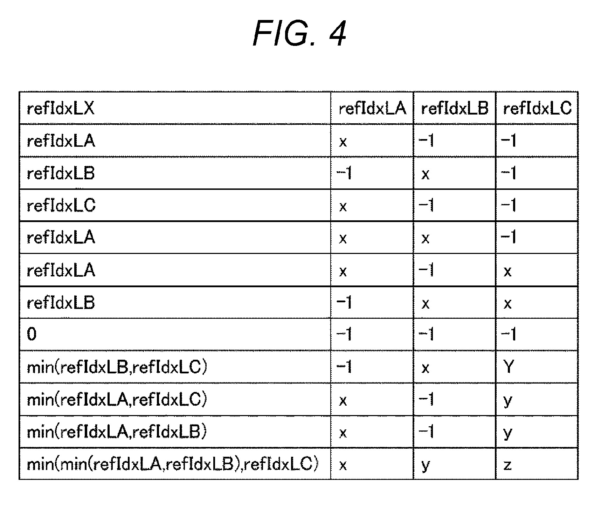

Also, a reference image index is decided based on the reference image indices of a peripheral region A that is adjacent on the left of a focused region (a current block), which is a processing target, a peripheral region B that is adjacent at the top of the focused region, and a peripheral region C that is adjacent at the top right of the focused region as shown in Fig. 3, in the manner of the table shown in Fig. 4.

In the table shown in Fig. 4, the second to fourth columns from the left show the states of the reference image indices of the peripheral regions A to C, respectively. The first column on the left is the reference image index which has been decided. Each of "x", "y", and "z" represents an arbitrary natural number, and "-1" indicates that reference is not possible.

In the case there is only one region that can be referred to among the peripheral regions A to C, the reference image index of this block is used. Also, in the case there are two regions that can be referred to among the peripheral regions A to C, the smallest reference image index is used. Moreover, in the case all of the peripheral regions A to C are not to be referred to, the reference image index is zero.

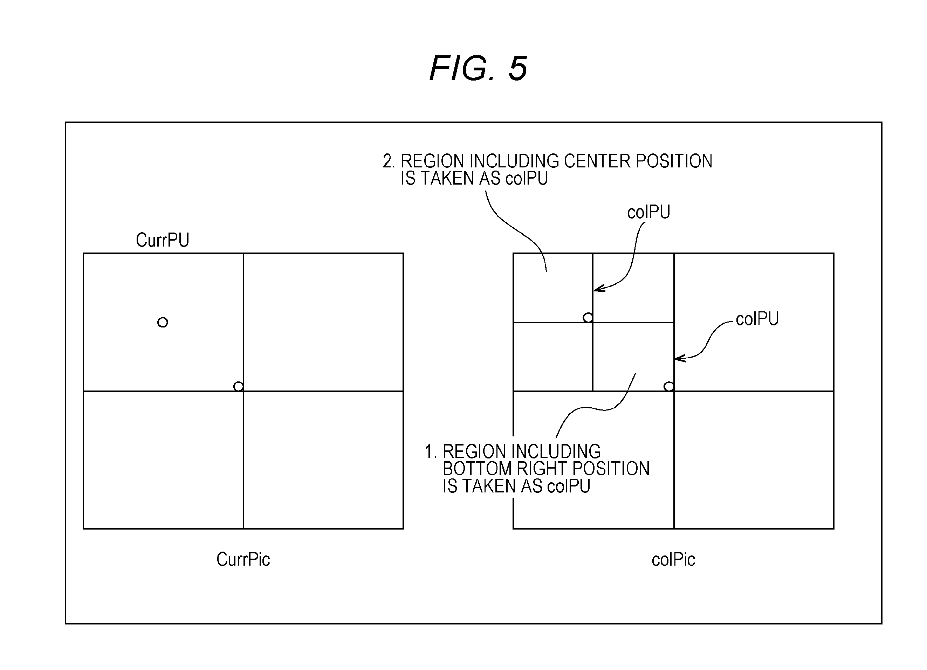

A temporally correlated region located at a temporal periphery of a focused region, which is a processing target, is decided as shown in Fig. 5. In Fig. 5, a partial region of a focused picture (CurrPic), which is a processing target, is shown on the left, and a quadrangle at the top left in the focused picture is a focused region (CurrPU). Also, a partial region of a temporally correlated picture (colPic) located at a temporal periphery of the focused picture is shown on the right in Fig. 5. In this temporally correlated picture, a region including a pixel at the same position as the pixel on the bottom right of the focused region is given as the temporally correlated region (colPU). In the case this region cannot be referred to, a region including a pixel at the same position as the pixel at the center of a decoded region is given as the temporally correlated region (colPU).

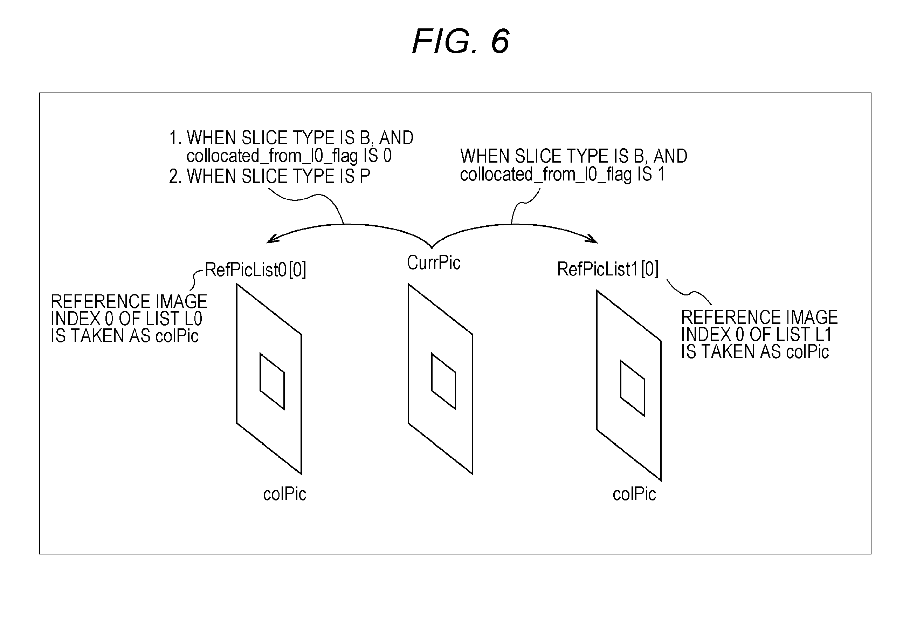

Furthermore, the temporally correlated picture is decided as shown in Fig. 6. For example, in the case the focused picture is a B picture, and a collocated_from_10_flag is 0, a picture in a list L1 whose reference image index is 0 is given as the temporally correlated picture. Also, in the case the focused picture is a P picture or a B picture, and a collocated_from_10_flag is 1, a picture in a list L0 whose reference image index is 0 is given as the temporally correlated picture.

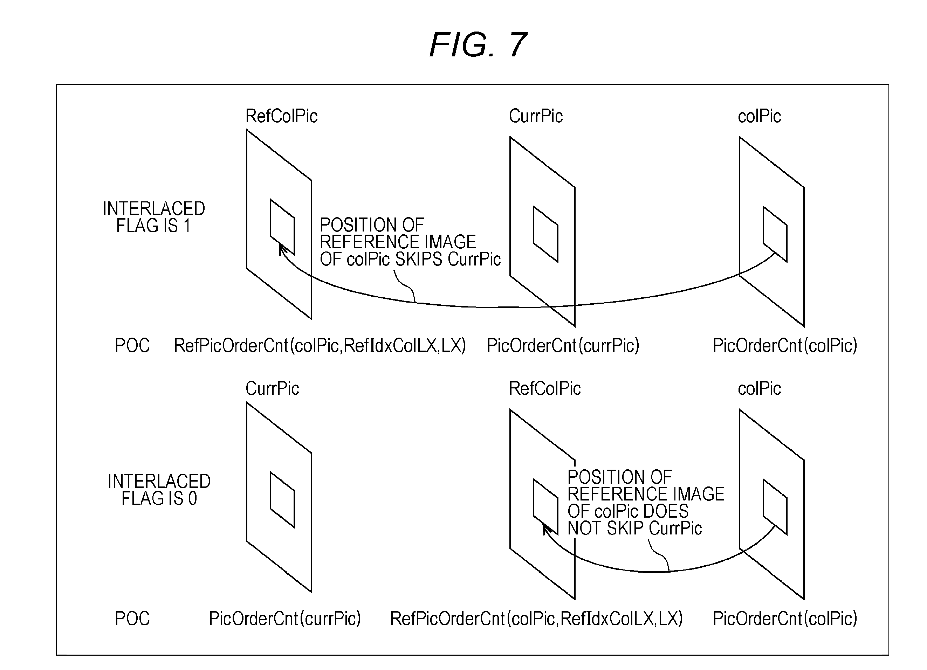

Furthermore, as shown in Fig. 7, depending on the positional relationship between a focused picture and a temporally correlated picture, an interlaced flag is set. For example as shown at the top in Fig. 7, in the case the temporal position of a reference image of the temporally correlated picture skips the focused picture (in the case the focused picture is present between the temporally correlated picture and the reference image), the interlaced flag is set to 1.

Also, in the case the temporal position of a reference image of the temporally correlated picture does not skip the focused picture (in the case the focused picture is not present between the temporally correlated picture and the reference image), the interlaced flag is set to 0 . In the case the interlaced flag is 1, the focused region is interpolated between the temporally correlated region and the reference image of the temporally correlated region, and the reliability of a prediction vector is high.

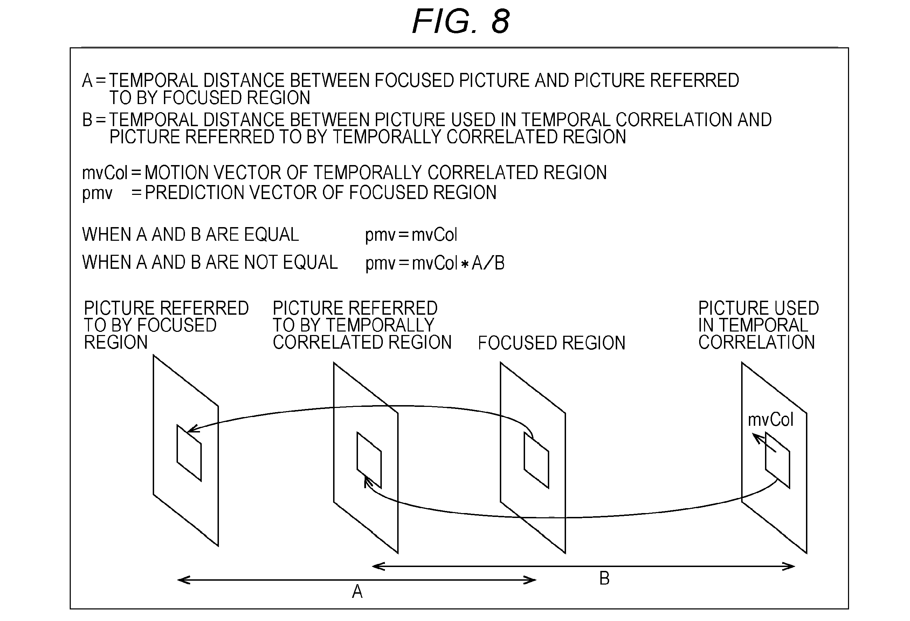

Moreover, a motion vector mvCol of a temporally correlated region is sometimes used at the time of generating a prediction vector pmv, and in this case, scaling of the motion vector of the temporally correlated region is performed as in the example shown in Fig. 8. That is, scaling is performed according to the following equations (1) and (2), based on a temporal distance A between the focused region and the reference image of the focused region, and a temporal distance B between the temporally correlated region and the reference image of the temporally correlated region.

$$\text{In the case A and B are equal, pmv} = \text{mvCol} \quad ...(1)$$

$$\text{In the case A and B are not equal, pmv} = \text{mvCol} \times \text{A/B} \quad ...(2)$$

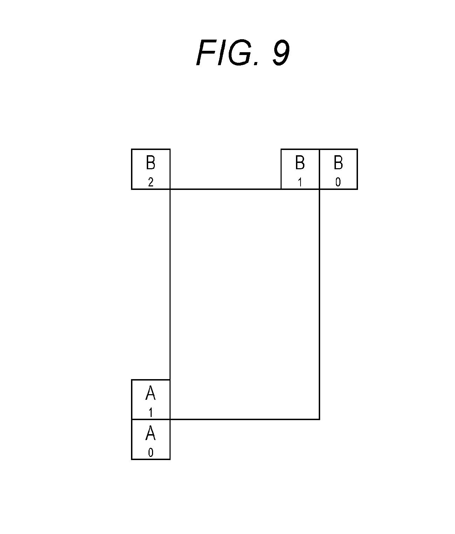

Now, the peripheral regions of a spatially correlated region in other than the merge mode are as the example shown in Fig. 9. That is, a region A0, a region A1, a region B0 a region B1, and a region B2 are made the candidates for the peripheral region.

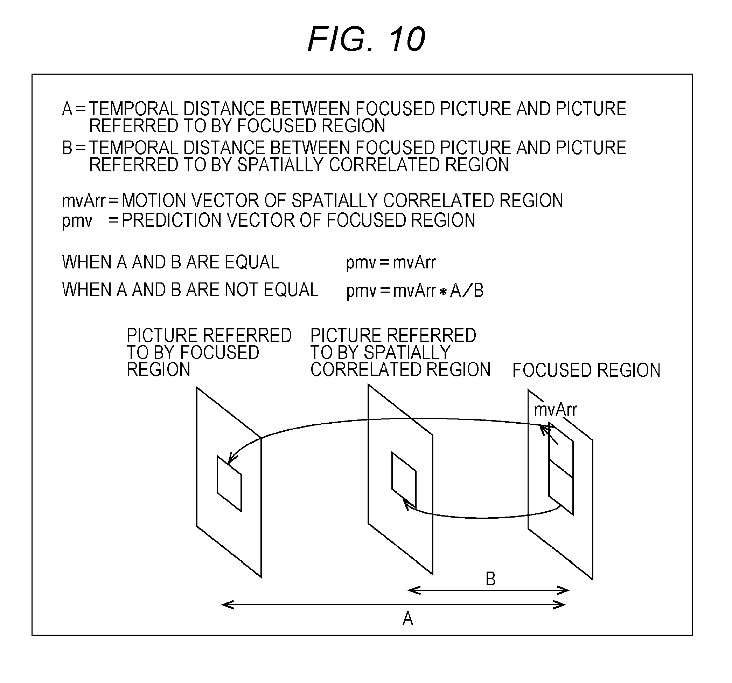

Moreover, a motion vector mvArr of a spatially correlated region is sometimes used at the time of generating a prediction vector pmv, and in this case, scaling of the motion vector of the spatially correlated region is performed as in the example shown in Fig. 10. That is, scaling is performed according to the following equations (3) and (4), based on a temporal distance A between the focused region and the reference image of the focused region, and a temporal distance B between the spatially correlated region and the reference image of the spatially correlated region.

$$\text{In the case A and B are equal, pmv} = \text{mvArr} \quad ...(3)$$

$$\text{In the case A and B are not equal, pmv} = \text{mvArr} \times \text{A/B} \quad ...(4)$$

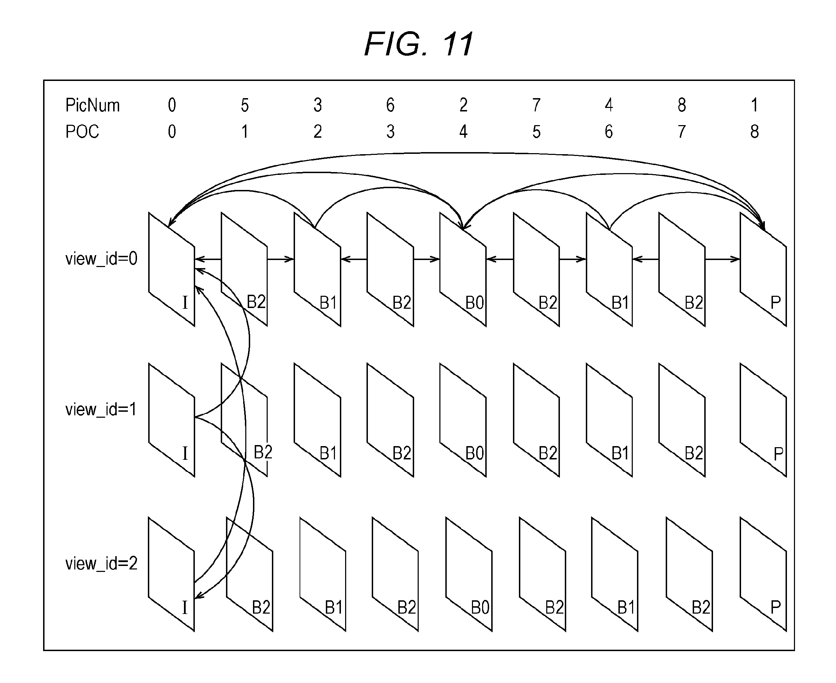

Now, in the case of a multi-viewpoint image, an image is formed from a plurality of views, and parallax prediction using the correlation between the views (parallax direction) is also performed. Fig. 11 shows an example of a reference relationship of a three-viewpoint image.

The three-viewpoint image shown in Fig. 11 is formed from three views, a view 0, a view 1, and a view 2. In Fig. 11, POC is the index of time. Also, PicNum is the index of a decoding order.

The view 0 is called a base view, and is encoded by using temporal prediction of performing prediction using a temporal correlation. The view 1 is called a non-base view, and is encoded by using the temporal prediction and parallax prediction. In the parallax prediction, the view 0 and the view 2 which have been encoded may be referred to. The view 2 is called a non-base view, and is encoded by using the temporal prediction and the parallax prediction. In the parallax prediction, the view 0 which has been encoded may be referred to.

However, as described above, a conventional prediction vector is related only to the motion vector, and no consideration is given to encoding (prediction) of a parallax vector, indicating a positional relationship of the same or the most approximate partial images of views, generated in the parallax prediction across viewpoints (views). This parallax vector is information corresponding to a motion vector in the temporal prediction, and is used in the temporal prediction of generating a predicted image of a focused region using an image of the same time and of a different view. Thus, prediction of a parallax vector is possibly not appropriately performed, and the encoding efficiency is possibly reduced.

Accordingly, in the present technology, candidates for the prediction vector are restricted in the following manner in order to efficiently generate a prediction vector and to improve the encoding efficiency with respect to a multi-viewpoint image.

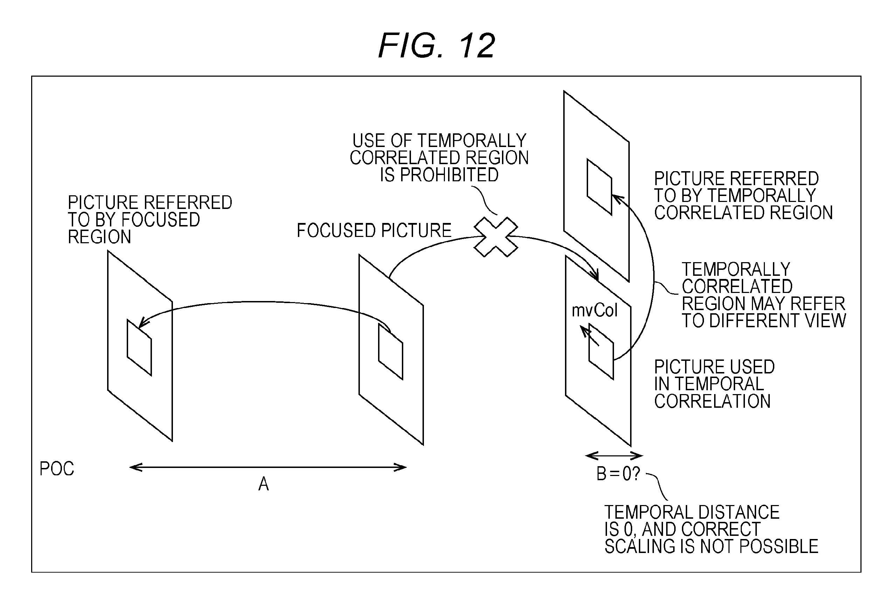

A more detailed description will be given. First, a restriction method regarding a temporally correlated region will be described. An example is shown in Fig. 12. In the case only the temporal prediction is performed in a focused region, which is a processing target, and only the parallax prediction is performed in a temporally correlated region, even if a process is performed using the temporally correlated region, and a prediction vector is obtained, the prediction accuracy is poor due to the difference in the property to an encoding vector. Thus, a temporally correlated region use restriction flag is set to 1. The temporally correlated region is thus removed from the candidates for the prediction vector. Accordingly, merits may be obtained with respect to the processing time, the storage memory, and the encoding efficiency.

For example, by omitting the calculation process of the prediction vector that uses the temporally correlated region, the processing time may be reduced. Also, for example, since information about the temporally correlated region does not have to be maintained, the amount of memory usage may be reduced. Moreover, for example, since the candidates for the prediction vector are reduced, the bit rate assigned to the prediction vector index flag may be reduced, and the encoding efficiency may be improved.

Furthermore, in the similar manner, when only the parallax prediction is performed in the focused region, and only the temporal prediction is performed in the temporally correlated region, the temporally correlated region use restriction flag is set to 1. The temporally correlated region use restriction flag is set to 1, also when the parallax prediction and the temporal prediction are performed in the temporally correlated region. This is because, in a case the parallax prediction for the same time is performed with respect to the temporally correlated region, scaling of a prediction vector according to a conventional method cannot be performed. That is, since the temporal distance between the temporally correlated region and the reference image of the temporally correlated region is zero, subtraction necessary for scaling cannot be performed.

On the other hand, in the case the temporal prediction and the parallax prediction are performed in the focused region, and only the temporal prediction is performed in the temporally correlated region, the temporally correlated region use restriction flag is set to 0, and the motion vector of the temporally correlated region is made the candidate for the prediction vector. At this time, a conventional scaling method may be used. For example, in the case the temporal prediction is performed in the focused region, the same effect as with the conventional method is obtained. Also, for example, in the case the parallax prediction is performed in the focused region, since the temporal distance between the focused region and its reference image is zero, the prediction vector of the temporally correlated region after scaling is zero.

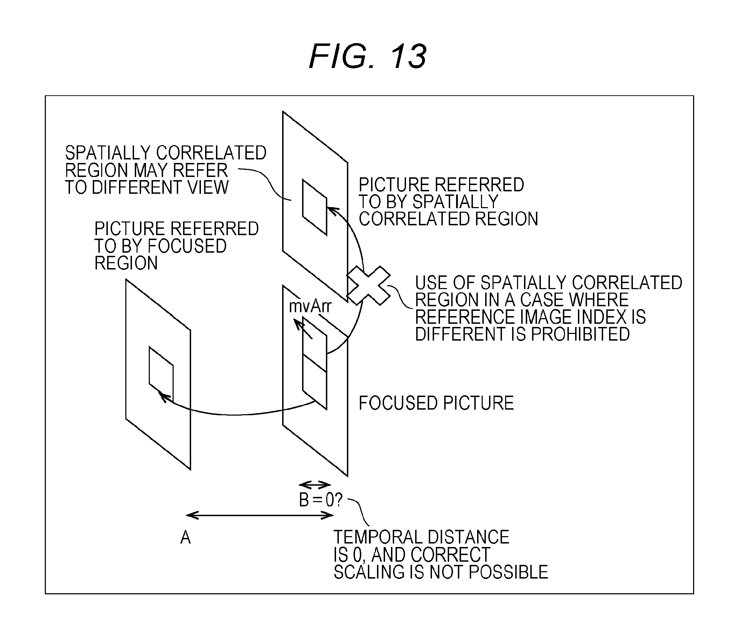

Next, a restriction method regarding a spatially correlated region will be described. An example is shown in Fig. 13. In the case the temporal prediction and the parallax prediction are performed in a focused region, the property of a peripheral region with a different reference image index will be different, and thus, a spatially correlated region use flag is set to 1. Accordingly, the spatially correlated region with a different reference image index is removed from the candidates for the prediction vector. Thus, merits may be obtained with respect to the processing time, and the encoding efficiency.

For example, by omitting the calculation process of the prediction vector that uses the spatially correlated region with a different reference image index, the processing time may be reduced. Also, for example, since the candidates for the prediction vector are reduced, the bit rate assigned to the prediction vector index flagmay be reduced, and the encoding efficiency may be improved.

Furthermore, for example, in the case only the temporal prediction is performed in the focused region, or only the parallax prediction is performed in the focused region, the spatially correlated region use restriction flag is set to 0, and the motion vector of the spatially correlated region with a different reference image index is made a candidate for the prediction vector. At this time, a conventional scaling method may be used. For example, in the case the temporal prediction is performed in the focused region, the same effect as with the conventional method is obtained. Also, for example, in the case the parallax prediction is performed in the focused region, since the temporal distance between the focused region and its reference image is zero, the prediction vector of the spatially correlated region after scaling is zero.

[Image Encoding Device]

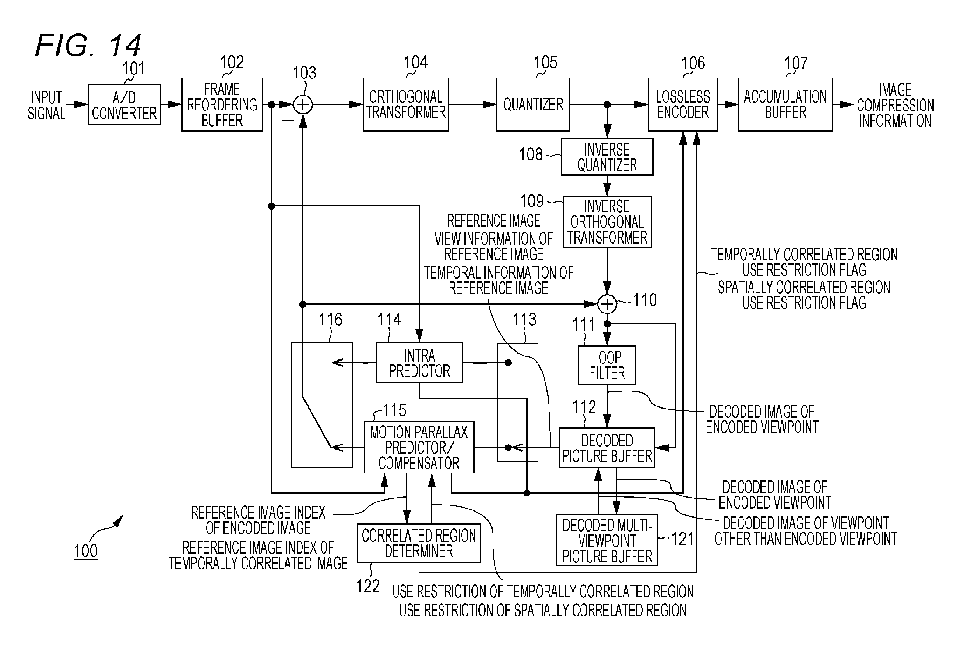

Fig. 14 is a block diagram showing a typical example structure of an image encoding device which is an image processing device.

An image encoding device 100 shown in Fig. 14 encodes image data by using a prediction process like the encoding systems such as AVC and HEVC, for example. Additionally, the image encoding device 100 encodes a multi-viewpoint image formed from a plurality of views. In the following, a case of processing a three-viewpoint image formed from three views, as an example of the multi-viewpoint image, will be described. Incidentally, in reality, the image encoding device 100 may encode a multi-viewpoint image of an arbitrary number of viewpoints (views).

As shown in Fig. 14, the image encoding device 100 includes an A/D converter 101, a frame reordering buffer 102, an arithmetic operation unit 103, an orthogonal transformer 104, a quantizer 105, a lossless encoder 106, and an accumulation buffer 107. Also, the image encoding device 100 includes an inverse quantizer 108, an inverse orthogonal transformer 109, an arithmetic operation unit 110, a loop filter 111, a decoded picture buffer 112, a selector 113, an intra predictor 114, a motion parallax predictor/compensator 115, a predicted image selector 116, a decoded multi-viewpoint picture buffer 121, and a correlated region determiner 122.

The A/D converter 101 performs A/D conversion on input image data, supplies the image data (digital data) obtained by the conversion to the frame reordering buffer 102, and stores the image data therein. The frame reordering buffer 102 performs reordering on the stored image whose frames are in the order of display into the order of frames for encoding according to GOP (Group Of Picture), and supplies the image whose frames have been reordered to the arithmetic operation unit 103 together with the view ID and the POC of the image.

Also, the frame reordering buffer 102 supplies the image whose frames have been reordered to the intra predictor 114 and the motion parallax predictor/compensator 115 together with the view ID and the POC of the image. Additionally, the view ID is information for identifying a viewpoint, and the POC is information for identifying the time.

The arithmetic operation unit 103 subtracts a predicted image supplied from the intra predictor 114 or the motion parallax predictor/compensator 115 via the predicted image selector 116 from an image read from the frame reordering buffer 102, and outputs resulting difference information to the orthogonal transformer 104.

For example, in the case of an image on which intra encoding is to be performed, the arithmetic operation unit 103 subtracts a predicted image supplied from the intra predictor 114 from an image read from the frame reordering buffer 102. Also, in the case of an image on which inter encoding is to be performed, the arithmetic operation unit 103 subtracts a predicted image supplied from the motion parallax predictor/compensator 115 from an image read from the frame reordering buffer 102.

The orthogonal transformer 104 performs orthogonal transform such as discrete cosine transform or Karhunen-Loeve transform on the difference information supplied from the arithmetic operation unit 103. Additionally, an arbitrary method of orthogonal transform may be used. The orthogonal transformer 104 supplies the transform coefficient to the quantizer 105.

The quantizer 105 quantizes the transform coefficient supplied from the orthogonal transformer 104. The quantizer 105 sets a quantization parameter based on information regarding a target value of the bit rate, and performs quantization. Any method may be used for the quantization. The quantizer 105 supplies the quantized transform coefficient to the lossless encoder 106.

The lossless encoder 106 encodes the transform coefficient quantized by the quantizer 105 according to a coding technique. Also, the lossless encoder 106 acquires intra prediction information including information indicating the mode of intra prediction and the like from the intra predictor 114, and acquires inter prediction information including information indicating the mode of inter prediction, motion parallax vector information and the like from the motion parallax predictor/compensator 115. The lossless encoder 106 further acquires a filter coefficient used by the loop filter 111, etc.

The lossless encoder 106 encodes these various information pieces according to a coding technique, so that the various information pieces are contained as part of header information of encoded data (multiplexes the information pieces) . The lossless encoder 106 supplies the encoded data obtained by the encoding to the accumulation buffer 107 and accumulates the encoded data therein.

Examples of the coding technique used by the lossless encoder 106 include variable-length coding and arithmetic coding. Examples of the variable-length coding include CAVLC (Context-Adaptive Variable Length Coding) defined in the H. 264/AVC standard. Examples of the arithmetic coding include CABAC (Context-Adaptive Binary Arithmetic Coding).

The accumulation buffer 107 temporarily holds the encodeddata supplied from the lossless encoder 106. The accumulation buffer 107 outputs at a predetermined timing, as a bit stream, the encoded data that is held to a recording device (a recording medium) not shown, a transmission path, and the like in the following stage, for example. That is, various pieces of encoded information are supplied to the decoding side.

The transform coefficient quantized by the quantizer 105 is also supplied to the inverse quantizer 108. The inverse quantizer 108 inverse-quantizes the quantized transform coefficient according to a method corresponding to the quantization by the quantizer 105. The method of inverse-quantization may be any method as long as it is a method corresponding to the quantization process by the quantizer 105. The inverse quantizer 108 supplies the obtained transform coefficient to the inverse orthogonal transformer 109.

The inverse orthogonal transformer 109 inverse orthogonal-transforms the transform coefficient supplied from the inverse quantizer 108 by a method corresponding to the orthogonal transform process by the orthogonal transformer 104. The method of inverse orthogonal transform may be any method as long as it is a method corresponding to the orthogonal transform by the orthogonal transformer 104. The output which has been inverse orthogonal-transformed (locally restored difference information) is supplied to the arithmetic operation unit 110.

The arithmetic operation unit 110 adds the predicted image supplied from the intra predictor 114 or the motion parallax predictor/compensator 115 via the predicted image selector 116 to the result of inverse orthogonal transform supplied from the inverse orthogonal transformer 109, that is, the locally restored difference information, and obtains a locally reconstructed image (hereinafter, referred to as a reconstructed image). The reconstructed image is supplied to the loop filter 111 or the decoded picture buffer 112.

The loop filter 111 includes a deblocking filter, an adaptive loop filter or the like, and performs appropriate filtering on the decoded image supplied from the arithmetic operation unit 110. For example, the loop filter 111 performs deblocking filtering on the decoded image to remove block distortion from the decoded image. In addition, for example, the loop filter 111 performs loop filtering on the result of deblocking filtering (the decoded image from which block distortion is removed) by using a Wiener filter to improve the image quality.

Alternatively, the loop filter 111 may perform certain filtering on the decoded image. The loop filter 111 may also supply information such as a filter coefficient used for the filtering, where necessary, to the lossless encoder 106, so that the information will be encoded.

The loop filter 111 supplies the result of the filtering process (hereinafter, referred to as a decoded image) to the decoded picture buffer 112.

The decoded picture buffer 112 stores each of the reconstructed image supplied from the arithmetic operation unit 110, and the decoded image supplied from the loop filter 111. Also, the decoded picture buffer 112 stores the view IDs and the POCs of the images.

The decoded picture buffer 112 supplies, at a predetermined timing or based on a request from outside, for example, the intra predictor 114, the stored reconstructed image (and the view ID and the POC of the image) to the intra predictor 114 via the selector 113. Also, the decoded picture buffer 112 supplies, at a predetermined timing or based on a request from outside, for example, the motion parallax predictor/compensator 115, the stored decoded image (and the view ID and the POC of the image) to the motion parallax predictor/compensator 115 via the selector 113.

The selector 113 shows the supply destination of an image output from the decoded picture buffer 112. For example, in the case of the intra prediction, the selector 113 reads an image on which the filtering process is not performed (the reconstructed image) from the decoded picture buffer 112, and supplies the same as a peripheral pixel to the intra predictor 114.

Also, for example, in the case of the inter prediction, the selector 113 reads an image on which the filtering process has been performed (the decoded image) from the decoded picture buffer 112, and supplies the same as a reference image to the motion parallax predictor/compensator 115.

When an image (a peripheral image) of a peripheral region positioned in the periphery of a processing target region is acquired from the decoded picture buffer 112, the intra predictor 114 performs the intra prediction (intra-screen prediction) of generating a predicted image by using the pixel value of the peripheral image, with basically the prediction unit (PU) as the unit of processing. The intra predictor 114 performs the intra prediction in a plurality of modes (intra prediction modes) prepared in advance.

The intra predictor 114 generates the predicted images in all the candidate intra prediction modes, evaluates the cost function value of each predicted image by using an input image supplied from the frame reordering buffer 102, and selects an optimal mode. When the optimal intra prediction mode is selected, the intra predictor 114 supplies the predicted image generated in the optimal mode to the predicted image selector 116.

Furthermore, the intra predictor 114 supplies the intra prediction information including information about the intra prediction, such as the optimal intra prediction mode, to the lossless encoder 106 as appropriate so as to have the information encoded.

The motion parallax predictor/compensator 115 performs the motion prediction or the parallax prediction (the inter prediction) by using an input image supplied from the frame reordering buffer 102 and a reference image supplied from the decoded picture buffer 112, with basically the PU as the unit of processing, performs a compensation process according to a motion parallax vector detected, and generates a predicted image (inter-predicted image information). The motion parallax predictor/compensator 115 performs such inter prediction (inter-screen prediction) in a plurality of modes (inter prediction modes) prepared in advance.

The motion parallax predictor/compensator 115 generates predicted images in all the candidate interpredictionmodes, evaluates the cost function value of each predicted image, and selects an optimal mode. When the optimal inter prediction mode is selected, the motion parallax predictor/compensator 115 supplies the predicted image generated in the optimal mode to the predicted image selector 116.

Furthermore, the motion parallax predictor/compensator 115 supplies the inter prediction information including information about the inter prediction, such as the optimal inter prediction mode, to the lossless encoder 106 so as to have the information encoded.

The predicted image selector 116 selects the source of the predicted imaged to be supplied to the arithmetic operation unit 103 and the arithmetic operation unit 110. For example, in the case of intra encoding, the predicted image selector 116 selects the intra predictor 114 as the supply source of a predicted image, and supplies the predicted image supplied from the intra predictor 114 to the arithmetic operation unit 103 and the arithmetic operation unit 110. Also, in the case of inter encoding, the predicted image selector 116 selects the motion parallax predictor/compensator 115 as the supply source of a predicted image, and supplies the predicted image supplied from the motion parallax predictor/compensator 115 to the arithmetic operation unit 103 and the arithmetic operation unit 110.

The decoded picture buffer 112 stores only the image of the view which is a processing target (and the view ID and the POC of the image), but the decoded multi-viewpoint picture buffer 121 stores the image of each viewpoint (view) (and the view ID and the POC of the image). That is, the decoded multi-viewpoint picture buffer 121 acquires the decoded image (and the view ID and the POC of the image) supplied to the decoded picture buffer 112, and stores the decoded image (and the view ID and the POC of the image) along with the decoded picture buffer 112.

When the view which is a processing target changes, the decoded picture buffer 112 erases the decoded image, but the decoded multi-viewpoint picture buffer 121 keeps the image. Then, the decoded image that is stored (and the view ID and the POC of the image) is supplied to the decoded picture buffer 112 as the "decoded image of a view which is not a processing target", according to a request from the decoded picture buffer 112 or the like. The decoded picture buffer 112 supplies the "decoded image of a view which is not a processing target (and the view ID and the POC of the image)" read from the decoded multi-viewpoint picture buffer 121 to the motion parallax predictor/compensator 115 via the selector 113.

The correlated region determiner 122 sets the value of the temporally correlated region use restriction flag or the spatially correlated region use restriction flag according to the type of prediction (spatial prediction, temporalprediction, parallaxprediction, etc.) performed in a focused region or a correlated region. The correlated region determiner 122 supplies the temporally correlated region use restriction flag and the spatially correlated region use restriction flag whose values have been set to the motion parallax predictor/compensator 115. The motion parallax predictor/compensator 115 generates a prediction vector under the restrictions of the flags.

Also, the correlated region determiner 122 supplies the temporally correlated region use restriction flag and the spatially correlated region use restriction flag whose values have been set to the lossless encoder 106 so as to have the flags encoded. That is, these pieces of flag information are encoded by the lossless encoder 106, added to the slice header or the like, for example, and are transmitted to the decoding side. That is, reconstruction of a prediction vector in the motion parallax compensation process at the time of decoding is also performed under the restrictions of these flags.

[Motion Parallax Predictor/Compensator]

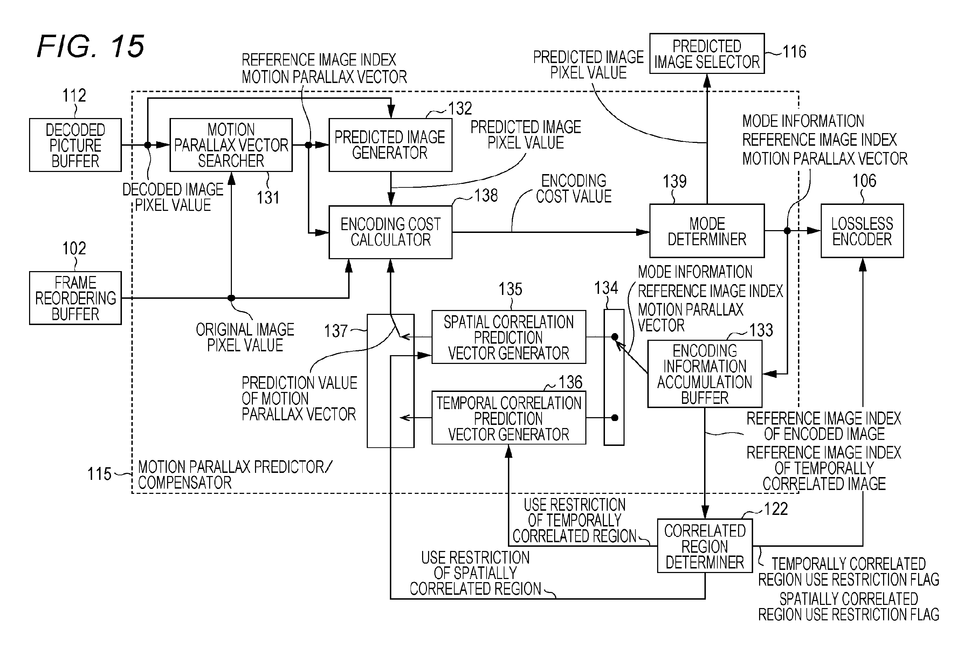

Fig. 15 is a block diagram showing a typical example structure of the motion parallax predictor/compensator in Fig. 1.

As shown in Fig. 15, the motion parallax predictor/compensator 115 includes a motion parallax vector searcher 131, a predicted image generator 132, an encoding information accumulation buffer 133, and a selector 134. Also, the motion parallax predictor/compensator 115 includes a spatial correlation prediction vector generator 135, a temporal parallax correlation prediction vector generator 136, a selector 137, an encoding cost calculator 138, and a mode determiner 139.

The motion parallax vector searcher 131 acquires a decoded image pixel value from the decoded picture buffer 112, and acquires an original image pixel value from the frame reordering buffer 102. The motion parallax vector searcher 131 decides the reference image index of a focused image, which is a processing target, by using the values, performs motion search in the temporal direction and the parallax direction, and generates a motion vector and a parallax vector.

Additionally, in the following, in the case there is no need to distinguish between, or in the case of referring to both of, a motion vector indicating the motion in the temporal direction, that is, the motion between frames (pictures) , and a parallax vector indicating the motion in the parallax direction, that is, the motion between the views, they are referred to as the motion parallax vector.

The motion parallax vector searcher 131 supplies a reference image index and a motion parallax vector to the predicted image generator 132 and the encoding cost calculator 138.

The predicted image generator 132 acquires the reference image index and the motion parallax vector from the motion parallax vector searcher 131, and also, acquires a decoded image pixel value from the decoded picture buffer 112. The predicted image generator 132 generates a predicted image of a focused region using these. The predicted image generator 132 supplies the predicted image pixel value to the encoding cost calculator 138.

The encoding information accumulation buffer 133 stores the mode information indicating the mode selected as the optimal mode by the mode determiner 139, and the reference image index and the motion parallax vector of the mode. The encoding information accumulation buffer 133 supplies these pieces of information stored to the selector 134 at a predetermined timing or according to a request from outside.

The selector 134 supplies the mode information, the reference index and the motion parallax vector supplied from the encoding information accumulation buffer 133 to the spatial correlation prediction vector generator 135 or the temporal parallax correlation prediction vector generator 136.

The spatial correlation prediction vector generator 135 and the temporal parallax correlation prediction vector generator 136 each generates a prediction value (a prediction vector) of a motion vector of a focused region, which is a processing target.

The spatial correlation prediction vector generator 135 generates a prediction value (a spatial correlation prediction vector) by using a spatial correlation. More specifically, the spatial correlation prediction vector generator 135 acquires information (the mode information, the reference image index, the motion parallax vector, and the like) about the motion information of a peripheral region, of a frame (a focused frame) same as that in the focused region, positioned in the spatial periphery of the focused region from the encoding information accumulation buffer 133 via the selector 134.

For example, the spatial correlation prediction vector generator 135 performs median calculation by using motion vectors of a plurality of spatially peripheral regions (spatially peripheral motion vectors), and generates a spatial correlation prediction vector. The spatial correlation prediction vector generator 135 supplies the spatial correlation prediction vector generated to the selector 137.

Additionally, the spatial correlation prediction vector generator 135 performs the process as described above according to the control by the correlated region determiner 122. That is, in the case the value of the spatially correlated region use restriction flag is 1, the spatial correlation prediction vector generator 135 does not generate the spatial correlation prediction vector. Also, in the case the value of the spatially correlated region use restriction flag is 0, the spatial correlation prediction vector generator 135 generates the spatial correlation prediction vector.

The temporal parallax correlation prediction vector generator 136 generates a prediction vector (a temporal parallax correlation prediction vector (a temporal correlation prediction vector or a parallax correlation prediction vector) by using a temporal correlation or a parallax correlation. More specifically, for example, the temporal parallax correlation prediction vector generator 136 acquires information about the motion information of a peripheral region (a temporally peripheral region) positioned in a temporal periphery of a focused region from the encoding information accumulation buffer 133 via the selector 134. A temporally peripheral region is a region of the same view (a focused view) as the focused region and at a position corresponding to the focused region of a frame (a picture) different from the focused frame, or a region in its periphery.

Also, for example, the temporal parallax correlation prediction vector generator 136 acquires information about the motion information of a peripheral region (a parallax peripheral region) positioned in a parallax periphery of the focused region from the encoding information accumulation buffer 133 via the selector 134. A parallax peripheral region is a region of a view different from the view of the focused region (a focused view) and at a position corresponding to the focused region of a frame (a picture) at the same time as the focused frame, or a region in its periphery.

For example, the temporal parallax correlation prediction vector generator 136 performs median calculation by using motion vectors of a plurality of temporally peripheral regions (temporally peripheral motion vectors), and generates a temporal correlation prediction vector. Also, for example, the temporal parallax correlation prediction vector generator 136 performs median calculation by using motion vectors of a plurality of parallax peripheral regions (parallax peripheral motion vectors), and generates a parallax correlation prediction vector.

The temporal parallax correlation prediction vector generator 136 supplies the temporal parallax correlation prediction vector thus generated to the selector 137.

Additionally, the temporal parallax correlation prediction vector generator 136 performs the process as described above according to the control by the correlated region determiner 122. That is, in the case the value of the temporally correlated region use restriction flag is 1, the temporal parallax correlation prediction vector generator 136 does not generate the temporal parallax correlation prediction vector. Also, in the case the value of the temporally correlated region use restriction flag is 0, the temporal parallax correlation prediction vector generator 136 generates the temporal parallax correlation prediction vector.

The spatial correlation prediction vector generator 135 and the temporal parallax correlation prediction vector generator 136 each generates the prediction vector in each inter prediction mode.

The selector 137 supplies the spatial correlation prediction vector supplied from the spatial correlation prediction vector generator 135, and the temporal parallax correlation prediction vector supplied from the temporal parallax correlation prediction vector generator 136 to the encoding cost calculator 138.

The encoding cost calculator 138 calculates a difference value (a difference image) between the predicted image and the original image for each inter prediction mode by using the predicted image pixel value supplied from the predicted image generator 132 and the original image pixel value supplied from the frame reordering buffer 102. Also, the encoding cost calculator 138 calculates the cost function value (referred to also as an encoding cost value) for each inter prediction mode by using the difference image pixel value.

Furthermore, the encoding cost calculator 138 selects one of the spatial correlation prediction vector and the temporal parallax correlation prediction vector supplied from the selector 137 that is closer to the motion parallax vector of the focused region supplied from the motion parallax vector searcher 131, as the prediction vector for the focused region. Also, the encoding cost calculator 138 generates a difference motion parallax vector which is a difference value between the prediction vector and the motion parallax vector of the focused region. The encoding cost calculator 138 generates the difference motion parallax vector in each inter prediction mode.

The encoding cost calculator 138 supplies difference motion parallax information including the encoding cost value, the predicted image pixel value and the difference motion parallax vector, and prediction information including the prediction vector and the reference image index in each inter prediction mode to the mode determiner 139.

The mode determiner 139 selects an inter prediction mode whose encoding cost value is the smallest as the optimal mode. The mode determiner 139 supplies the predicted image pixel value of the inter prediction mode selected as the optimal mode to the predicted image selector 116.

In the case inter prediction is selected by the predicted image selector 116, the mode determiner 139 supplies mode information which is information about the inter prediction mode selected as the optimal mode, and the difference motion parallax information and the prediction information of the inter prediction mode to the lossless encoder 106 so as to have the pieces of information encoded. These pieces of information are encoded, and are transmitted to the decoding side.

Also, the mode determiner 139 supplies the mode information, the difference motion parallax information and the prediction information of the inter prediction mode selected as the optimal mode to the encoding information accumulation buffer 133, and causes the encoding information accumulation buffer 133 to store these pieces of information. These pieces of information are used as the information about a peripheral region when processing other regions that are to be processed temporally after the focused region.

In this manner, the temporal parallax correlation prediction vector generator 136 may generate not only the motion correlation prediction vector, but also the parallax correlation prediction vector. Accordingly, even if the vector of a focused region is a parallax vector, the motion parallax predictor/compensator 115 may generate a prediction vector with a high prediction accuracy. The image encoding device 100 may thus suppress reduction in the encoding efficiency.

Also, with the correlated region determiner 122 controlling the use of a correlated region based on the relationship in the prediction direction, the spatial correlation prediction vector generator 135 and the temporal parallax correlation prediction vector generator 136 are enabled to suppress occurrence of unnecessary load, such as generation of a prediction vector with a low prediction accuracy or interruption of the process, when generating a prediction vector, and the processing time and the amount of memory usage may be reduced. Also, because of this restriction, the spatial correlation prediction vector generator 135 and the temporal parallax correlation prediction vector generator 136 are enabled to appropriately generate a prediction vector with a high prediction accuracy, and the encoding efficiency may be improved. Additionally, in the case of the present technology, the restriction is imposed on the base view prediction method, and extension from a conventional method is facilitated.

Furthermore, by transmitting the use restriction flag of a correlated region to the decoding side, prediction of a vector may be performed on the decoding side in the same manner as the image encoding device 100. That is, the encoded data generated by the image encoding device 100 may be correctly decoded, and also, the processing time and the amount of memory usage may be reduced also at the time of decoding.

[Example of Use Restriction]

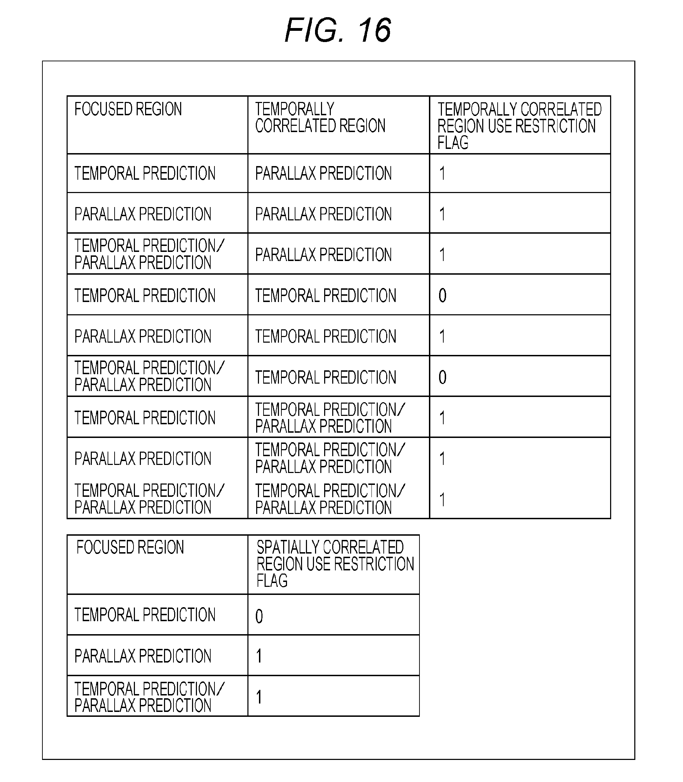

Example settings of the spatially correlated region use restriction flag and the temporally correlated region use restriction flag are shown in Fig. 16.

As shown in Fig. 16, in the case the parallax prediction is performed in the temporally correlated region, use of the temporally correlated region is prohibited. That is, the value of the temporally correlated region use restriction flag is set to 1.

Also, in the case the temporal prediction is performed in the temporally correlated region, and only the temporal prediction is performed in the focused region, use of the temporally correlated region is prohibited. That is, the value of the temporally correlated region use restriction flag is set to 1.

In other cases, use of the temporally correlated region is allowed. That is, the value of the temporally correlated region use restriction flag is set to 0.

Furthermore, in the case the parallax prediction is performed in the spatially correlated region, use of the spatially correlated region is prohibited. That is, the value of the spatially correlated region use restriction flag is set to 1.

In other cases, use of the spatially correlated region is allowed. That is, the value of the spatially correlated region use restriction flag is set to 0.

[Syntax]

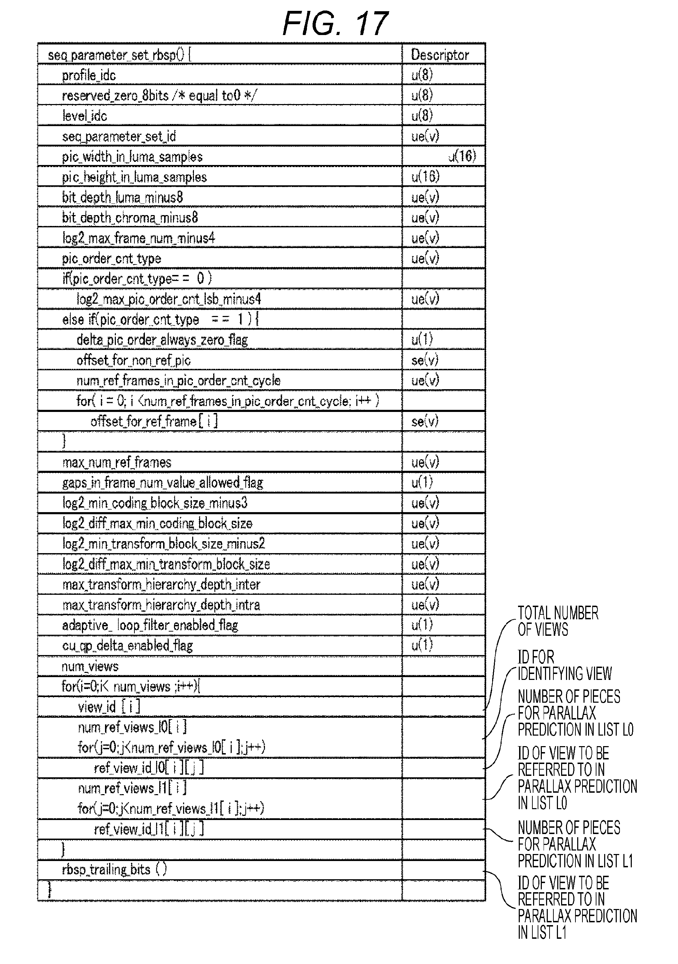

An example of the syntax of a sequence parameter set for this case is shown in Fig. 17. As shown in Fig. 17, the sequence parameter set includes, from the twelfth to the third lines from the bottom, information such as the total number of views, the ID for identifying a view, the number of pieces for parallax prediction in the list L0, the ID of a view to be referred to in the parallax prediction in the list L0, the number of pieces for parallax prediction in the list L1, and the ID of a view to be referred to in the parallax prediction in the list L1. These pieces of information are information necessary to a multi-viewpoint image. In other words, the present technology may be applied without adding a new syntax to the sequence parameter set.

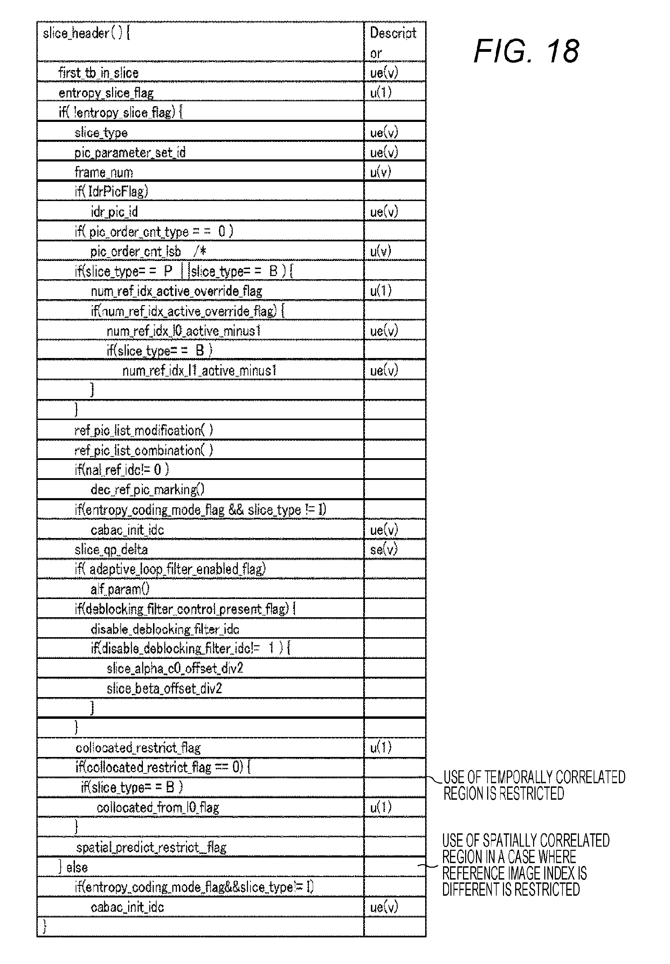

An example of the syntax of a slice header for this case is shown in Fig. 18 . As shown in Fig. 18, in the slice header, the temporally correlated region use restriction flag is set in the ninth and the tenth lines from the bottom. Also, the spatially correlated region use restriction flag is set in the fifth line from the bottom.

[Flow of Encoding Process]

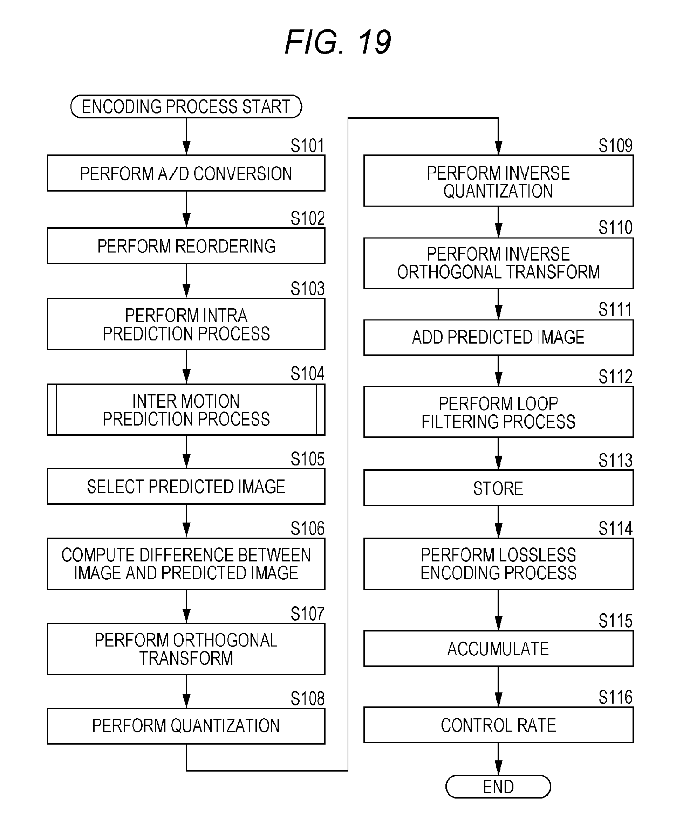

Next, flows of processes performed by the image encoding device 100 as described above will be described. First, an example of a flow of an encoding process will be described with reference to the flowchart of Fig. 19.

In step S101, the A/D converter 101 performs A/D conversion on an input image. In step S102, the frame reordering buffer 102 stores the image obtained by the A/D conversion and reorders respective pictures in display order into encoding order.

In step S103, the intra predictor 114 performs an intra prediction process. In step S104, the motion parallax predictor/compensator 115 performs an inter motion prediction process. In step S105, the predicted image selector 116 selects one of the predicted image generated by the intra prediction and the predicted image generated by the inter prediction.

In step S106, the arithmetic operation unit 103 computes a difference between the reordered image obtained by the processing in step S102 and the predicted image selected by the processing in step S105 (generates a difference image). The data amount of the difference image generated is reduced compared to the original image. Accordingly, the data amount can be made smaller than in a case where images are directly encoded.

In step S107, the orthogonal transformer 104 performs orthogonal transform on the difference information generated by the processing in step S106. Specifically, orthogonal transform such as discrete cosine transform or Karhunen-Loeve transform is performed, and an orthogonal transform coefficient is output. In step S108, the quantizer 105 quantizes the orthogonal transform coefficient obtained by the processing in step S107.

The difference information quantized by the processing in step S108 is locally decoded as follows. In step S109, the inverse quantizer 108 performs inverse quantization on the quantized orthogonal transform coefficient (also referred to as a quantized coefficient) generated by the processing in step S108 with characteristics corresponding to those of the quantizer 105. In step S110, the inverse orthogonal transformer 109 performs inverse orthogonal transform on the orthogonal transform coefficient obtained by the processing in step S109 with characteristics corresponding to those of the orthogonal transformer 104. The difference image is thus restored.

In step S111, the arithmetic operation unit 110 adds the predicted image selected in step S105 to the difference image generated in step S110, and generates a decoded image (a reconstructed image) which is locally decoded. In step S112, the loop filter 111 performs, as appropriate, a loop filtering process including a deblocking filtering process, an adaptive loop filtering process or the like on the reconstructed image obtained by the processing in step S111, and generates a decoded image.

In step S113, the decoded picture buffer 112 and the decoded multi-viewpoint picture buffer 121 store the decoded image generated by the processing in step S112 or the reconstructed image generated by the processing in step S111.

In step S114, the lossless encoder 106 encodes the transform coefficient quantized by the processing in step S108. Specifically, lossless coding such as variable-length coding or arithmetic coding is performed on the difference image. Additionally, the lossless encoder 106 encodes information about prediction, information about quantization, information about a filtering process or the like, and adds the same to a bit stream.

In step S115, the accumulation buffer 107 accumulates the bit stream obtained by the processing in step S114. The encoded data accumulated in the accumulation buffer 107 is read out as necessary and transmitted to the decoding side via a transmission path or a recording medium.

In step S116, the quantizer 105 controls the rate of the quantization operation based on the bit rate (the generated bit rate) of the encoded data accumulated in the accumulation buffer 107 by the processing in step S115 such that overflow or underflow does not occur.

The encoding process is terminated when the processing in step S116 ends.

[Flow of Inter Motion Prediction Process]

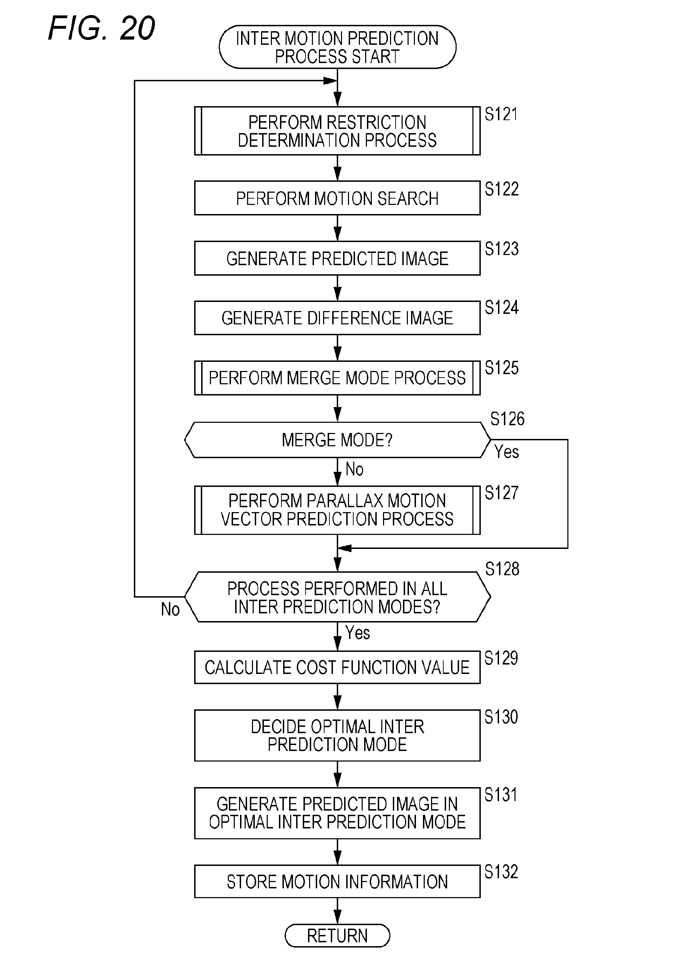

Next, an example of a flow of the inter motion prediction process performed in step S104 of Fig. 19 will be described with reference to the flowchart of Fig. 20.

In step S121, the correlated region determiner 122 performs a restriction determination process of setting the value of the correlated region restriction flag. In step S122, the motion parallax vector searcher 131 performs a motion search with respect to an inter prediction mode which is a processing target, and generates a motion parallax vector (a motion vector or a parallax vector) of a focused region, which is a processing target. In step S123, the predicted image generator 132 performs a compensation process by using the motion parallax vector generated in step S122, and generates a predicted image. In step S124, the encoding cost calculator 138 generates a difference image of the predicted image generated in step S123 and the original image (the input image).

In step S125, the encoding cost calculator 138 performs a merge mode process by using the spatial correlation prediction vector generator 135, the temporal parallax correlation prediction vector generator 136, or the like.

In step S126, the encoding cost calculator 138 compares the motion parallax vector of the focused region generated in step S122 and the prediction vector of the focused region generated by the processing in step S125, and determines whether the merge mode is to be applied in the focused region.

If the two do not match, and it is determined that the merge mode is not to be applied, the encoding cost calculator 138 proceeds to step S127, and performs a motion parallax vector prediction process by using the spatial correlation prediction vector generator 135, the temporal parallax correlation prediction vector generator 136, or the like.

When the processing in step S127 is terminated, the encoding cost calculator 138 proceeds to step S128.

Also, if, in step S126, the motion parallax vector and the prediction vector of the focused region match, and application of the merge mode in the focused region is determined, the encoding cost calculator 138 skips the processing in step S127, and proceeds to step S128.

In step S128, the encoding cost calculator 138 determines whether the processes described above have been performed in all the inter prediction modes, and in the case it is determined that there is still an inter prediction mode not yet processed, the process returns to step S121, and control is performed such that the processes of step S121 and later are performed for the inter prediction mode not yet processed. That is, each of the processes from step S121 to step S128 is performed for each inter prediction mode.

In the case it is determined in step S128 that the processes have beenperformedfor all the inter prediction modes, the encoding cost calculator 138 proceeds to step S129. In step S129, the encoding cost calculator 138 calculates the cost function value of each inter prediction mode.

In step S130, the mode determiner 139 decides the inter prediction mode whose cost function value (the encoding cost value) calculated in step S129 is the smallest as the optimal mode (the optimal inter prediction mode) .

In step S131, the predicted image generator 132 generates a predicted image in the optimal inter prediction mode. This predicted image is supplied to the predicted image selector 116.

In the case the inter prediction is selected in step S105 of Fig. 19, the encoding information accumulation buffer 133 stores, in step S132, the mode information and the motion information (the motion parallax vector, the reference image index, and the like) of the optimal inter prediction mode. In the cases the intra prediction mode is selected, a zero vector is stored as the motion parallax vector. Additionally, in the case the inter prediction is selected in step S105 of Fig. 19, these pieces of information are also supplied to the lossless encoder 106, and are transmitted to the decoding side after being encoded.

When the processing in step S132 is terminated, the encoding information accumulation buffer 133 ends the inter motion prediction process, and returns the process to Fig. 19.

[Flow of Restriction Determination Process]

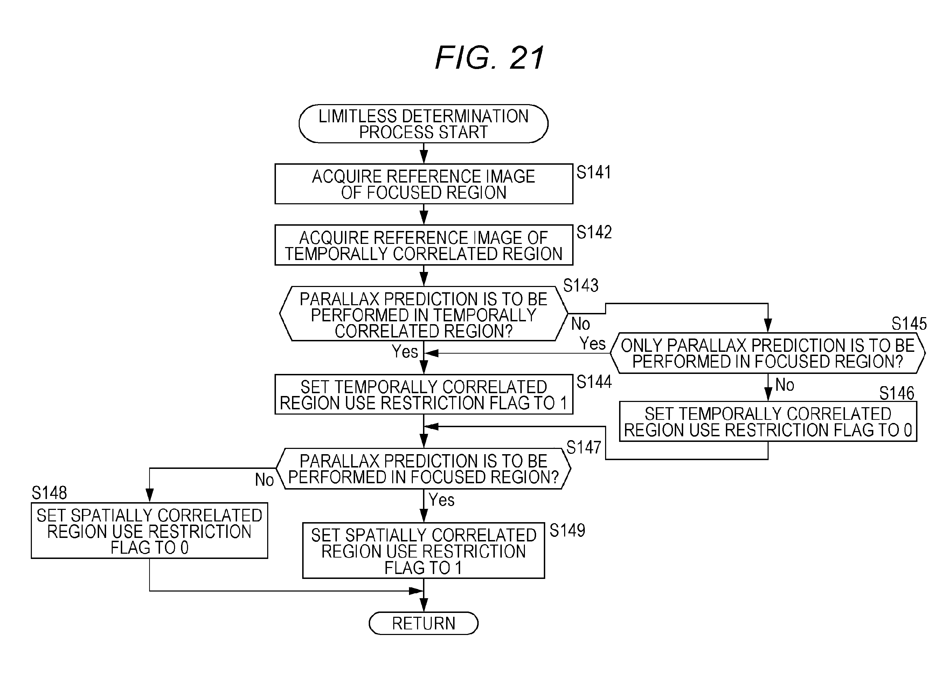

Next, an example of a flow of the restriction determination process performed in step S121 of Fig. 20 will be described with reference to the flowchart of Fig. 21. When a restriction determination process is started, the correlated region determiner 122 acquires, in step S141, a reference image of the focused region from the decoded picture buffer 112 by using a reference image index acquired from the encoding information accumulation buffer 133.

In step S142, the correlated region determiner 122 acquires a reference image of a temporally correlated region from the decoded picture buffer 112 by using a reference image index acquired from the encoding information accumulation buffer 133.

In step S143, the correlated region determiner 122 determines, by using these pieces of information, whether the parallax prediction is to be performed in the temporally correlated region. In the case it is determined that the parallax prediction is to be performed in the temporally correlated region, the correlated region determiner 122 proceeds to step S144, and sets the temporally correlated region use restriction flag to 1. When the processing in step S144 is terminated, the correlated region determiner 122 proceeds to step S147.

Also, in the case the parallax prediction is determined in step S143 not to be performed in the temporally correlated region, the correlated region determiner 122 proceeds to step S145. In step S145, the correlated region determiner 122 determines whether only the parallax prediction is to be performed in the focused region. In the case it is determined that only the parallax prediction is to be performed in the focused region, the correlated region determiner 122 returns the process to step S144. That is, the temporally correlated region use restriction flag is set to 1.

Also, in the case it is determined in step S145 that other than the parallax prediction is also to be performed in the focused region, the correlated region determiner 122 proceeds to step S146. In step S146, the correlated region determiner 122 sets the temporally correlated region use restriction flag to 0. When the processing in step S146 is terminated, the correlated region determiner 122 proceeds to step S147.

In step S147, the correlated region determiner 122 determines whether the parallax prediction is to be performed in the focused region. In the case it is determined that the parallax prediction is not to be performed in the focused region, the correlated region determiner 122 proceeds to step S148, sets the value of the spatially correlated region use restriction flag to 0, ends the restriction determination process, and returns the process to Fig. 20.

Also, in the case it is determined in step S147 that the parallax prediction is to be performed in the focused region, the correlated region determiner 122 proceeds to step S149, sets the spatially correlated region use restriction flag to 1, ends the restriction determination process, and returns the process to Fig. 20.

[Flow of Merge Mode Process]

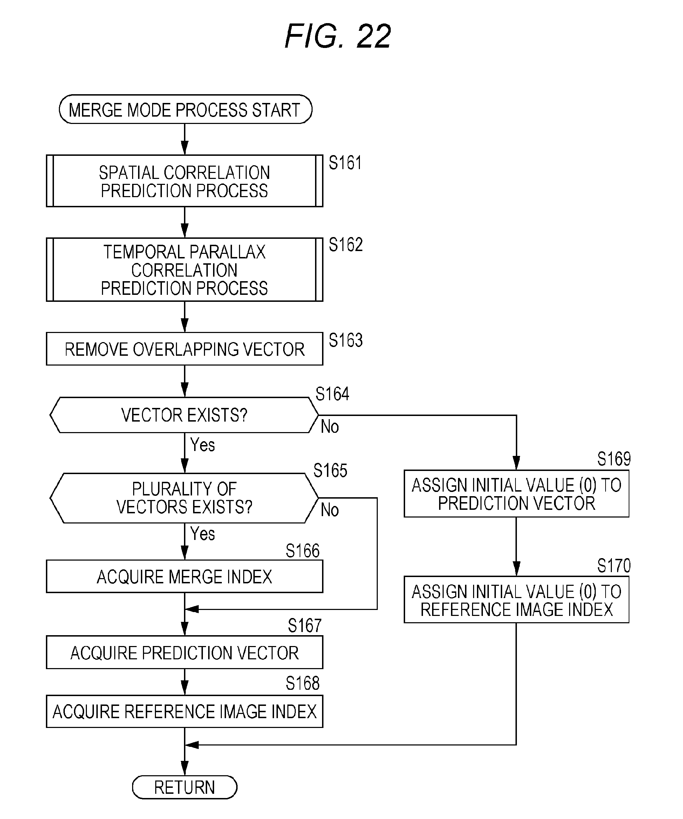

Next, an example of a flow of the merge mode process performed in step S125 of Fig. 20 will be described with reference to the flowchart of Fig. 22.

When a merge mode process is started, the spatial correlation prediction vector generator 135 performs, in step S161, a spatial correlation prediction process of generating a spatial correlation prediction vector by using the correlation to a spatially peripheral region. In step S162, the temporal parallax correlation prediction vector generator 136 performs a temporal correlation prediction process of generating a temporal parallax correlation prediction vector by using the correlation to a temporally peripheral region or a parallax peripheral region.

In step S163, the encoding cost calculator 138 removes the overlapping vector among spatial correlation prediction vectors generated in step S161 and the temporal parallax prediction vectors generated in step S162.

In step S164, the encoding cost calculator 138 determines whether there is a vector. If even one spatial correlation prediction vector or a temporal parallax correlation prediction vector is determined to exist, the encoding cost calculator 138 proceeds to step S165.

In step S165, the encoding cost calculator 138 determines whether there are a plurality of vectors. In the case a plurality of vectors is determined to exist, the encoding cost calculator 138 proceeds to step S166, and acquires a merge index. In the case it is determined that a plurality of vectors do not exist, the encoding cost calculator 138 skips the processing in step S166.

In the case there is a spatial correlation prediction vector or a temporal parallax correlation prediction vector that matches the motion vector of the focused region, the encoding cost calculator 138 acquires the matching vector as a prediction vector in step S167, and acquires a reference image index in step S168.

When the processing in step S168 is terminated, the encoding cost calculator 138 ends the merge mode process, and returns the process to Fig. 20.

Also, in the case it is determined in step S164 that not even one spatial correlation prediction vector or a temporal parallax correlation prediction vector exists, the encoding cost calculator 138 proceeds to step S169.

In step S169, the encoding cost calculator 138 assigns an initial value (for example, a zero vector) to the prediction vector. Also, in step S170, the encoding cost calculator 138 assigns an initial value (for example, 0) to the reference image index.

When the processing in step S170 is terminated, the encoding cost calculator 138 ends the merge mode process, and returns the process to Fig. 20.

[Flow of Spatial Correlation Prediction Process]

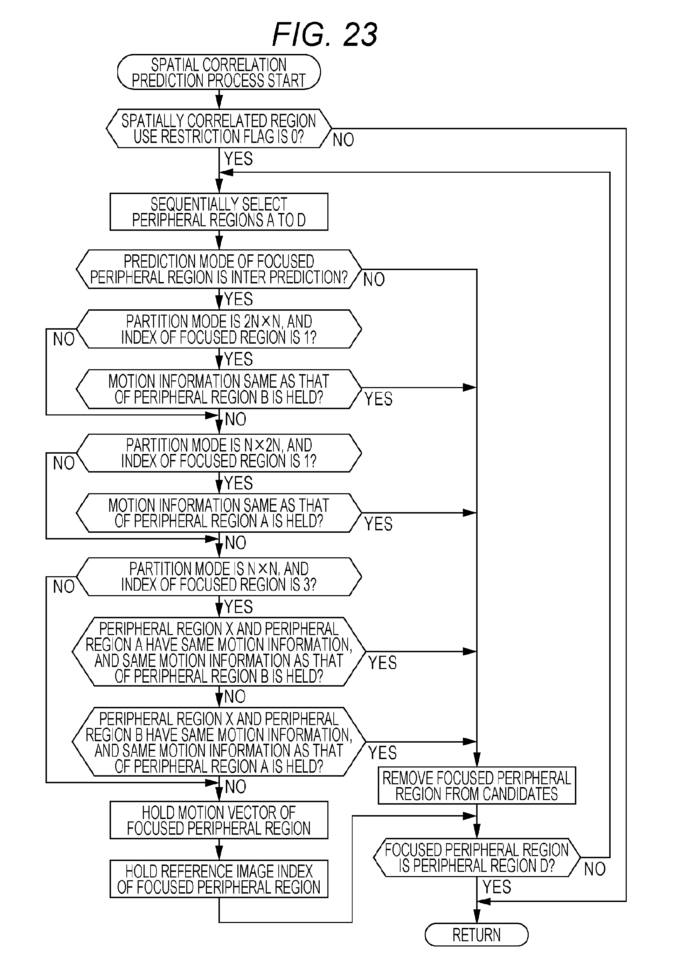

Next, an example of a flow of the spatial correlation prediction process performed in step S161 of Fig. 22 will be described with reference to the flowchart of Fig. 23.

When a spatial correlation prediction process is started, the spatial correlation prediction vector generator 135 determines, in step S181, whether a spatially correlated region use restriction flag is 0. In the case the spatially correlated region use restriction flag is determined to be 1, the spatial correlation prediction vector generator 135 ends the spatial correlation prediction process, and returns the process to Fig. 22.

Also, in the case the spatially correlated region use restriction flag is determined in step S181 to be 0, the spatial correlation prediction vector generator 135 proceeds to step S182, and sequentially selects the peripheral regions A to D (Fig. 2) one by one. The selected peripheral region is referred to as a focused peripheral region.

In step S183, the spatial correlation prediction vector generator 135 determines whether the prediction mode of the focused peripheral region selected in step S182 (that is, one of the peripheral regions A to D) is the inter prediction. In the case the mode is determined to be not the inter prediction, the spatial correlation prediction vector generator 135 proceeds to step S184. In step S184, the spatial correlation prediction vector generator 135 removes the motion vector of the focused peripheral region from the candidates for the prediction vector.

In step S185, the spatial correlation prediction vector generator 135 determines whether the focused peripheral region is the peripheral region D, and in the case the focused peripheral region is determined to be the peripheral region D, the spatial correlation prediction process is ended, and the process is returned to Fig. 22.

Also, in the case it is determined in step S185 that the focused peripheral region is not the peripheral region D, the spatial correlation prediction vector generator 135 returns the process to step S182, and repeats the processes from step S182. That is, the focused peripheral region is updated, and the same processes are repeated.

Furthermore, in the case the prediction mode of the focused peripheral region is determined in step S183 to be the inter prediction, the spatial correlation prediction vector generator 135 proceeds to step S186.

In step S186, the spatial correlation prediction vector generator 135 determines whether the partition mode of a prediction unit is $2N \times N$ (the example at the top right in Fig. 1), and the index of the focused region (a prediction unit which is a processing target) is 1. In the case it is determined that the partition mode of the prediction unit is $2N \times N$,

and that the index of the focused region is 1, the spatial correlation prediction vector generator 135 proceeds to step S187.

In step S187, the spatial correlation prediction vector generator 135 determines whether the focused region has the same motion information as the peripheral region B. In the case the motion information is determined to be the same, the spatial correlation prediction vector generator 135 returns the process to step S184.

Furthermore, in the case it is determined in step S187 that the motion information of the focused region is different from that of the peripheral region B, the spatial correlation prediction vector generator 135 proceeds to step S188. Also, in the case it is determined in step S186 that the partition mode of the prediction unit is not 2N x N, or that the partition mode of the prediction unit is 2N $\times$ N but the index of the focused region is not 1, the spatial correlation prediction vector generator 135 proceeds to step S188.

In step S188, the spatial correlation prediction vector generator 135 determines whether the partition mode of the prediction unit is N $\times$ 2N (the example at the bottom left in Fig. 1), and the index of a focused region (the prediction unit which is a processing target) is 1. In the case it is determined that the partition mode of the prediction unit is N $\times$ 2N, and that the index of the focused region is 1, the spatial correlation prediction vector generator 135 proceeds to step S189.

In step S189, the spatial correlation prediction vector generator 135 determines whether the focused region has the same motion information as the peripheral region A. In the case the motion information is determined to be the same, the spatial correlation prediction vector generator 135 returns the process to step S184.

Furthermore, in the case it is determined in step S189 that the motion information of the focused region is different from that of the peripheral region A, the spatial correlation prediction vector generator 135 proceeds to step S190. Also, in the case it is determined in step S188 that the partition mode of the prediction unit is not N $\times$ 2N, or that the partition mode of the prediction unit is N $\times$ 2N but the index of the focused region is not 1, the spatial correlation prediction vector generator 135 proceeds to step S190.

In step S190, the spatial correlation prediction vector generator 135 determines whether the partition mode of the prediction unit is N $\times$ N (the example at the bottom right in Fig. 1), and the index of a focused region (the prediction unit which is a processing target) is 3. In the case it is determined that the partition mode of the prediction unit is N $\times$ N, and that the index of the focused region is 3, the spatial correlation prediction vector generator 135 proceeds to step S191.

In step S191, the spatial correlation prediction vector generator 135 determines whether a peripheral region X and the peripheral region A have the same motion information, and the focused region has the same motion information as the peripheral region B. In the case it is determined that the peripheral region X and the peripheral region A have the same motion information, and that the focused region has the same motion information as the peripheral region B, the spatial correlation prediction vector generator 135 returns the process to step S184.

Also, in the case it is determined in step S191 that the motion information of the peripheral region X is not the same as that of the peripheral region A, or that the motion information of the focused region is different from that of the peripheral region B, the spatial correlation prediction vector generator 135 proceeds to step S192.

In step S192, the spatial correlation prediction vector generator 135 determines whether the peripheral region X and the peripheral region B have the same motion information, and the focused region and the peripheral region A have the same motion information. In the case it is determined that the peripheral region X and the peripheral region B have the same motion information, and that the focused region has the same motion information as the peripheral region A, the spatial correlation prediction vector generator 135 returns the process to step S184.

Furthermore, in the case it is determined in step S192 that the motion information of the peripheral region X is not the same as that of the peripheral region B, or that the motion information of the focused region is not the same as that of the peripheral region A, the spatial correlation prediction vector generator 135 proceeds to step S193.

Also, in the case it is determined in step S190 that the partition mode of the prediction unit is not N $\times$ N, or that the partition mode of the prediction unit is N $\times$ N but the index of the focused region is not 3, the spatial correlation prediction vector generator 135 proceeds to step S193.

The spatial correlation prediction vector generator 135 holds the motion vector of the focused peripheral region in step S193, and holds the reference image index of the focused peripheral region in step S194. When the processing in step S194 is terminated, the spatial correlation prediction vector generator 135 returns the process to step S185.

The spatial correlation prediction vector generator 135 narrows down the candidates for a prediction vector (spatial correlation prediction vectors) in the manner described above.

[Flow of Temporal Parallax Correlation Prediction Process]

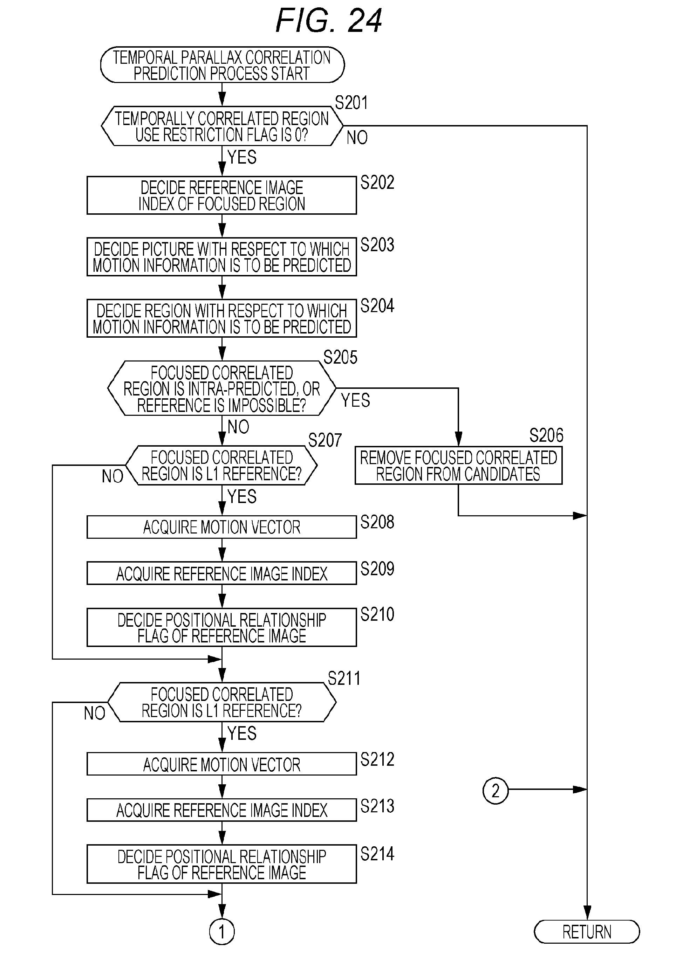

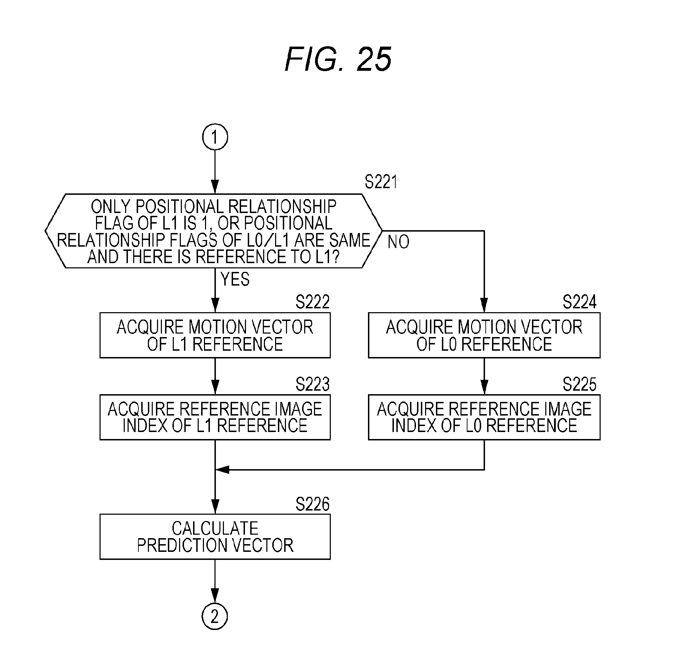

Next, an example of a flow of the temporal parallax correlation prediction process performed in step S162 of Fig. 22 will be described with reference to the flowcharts of Figs. 24 and 25.

When the temporal parallax correlation prediction process is started, the temporal parallax correlation prediction vector generator 136 determines, in step S201, whether the temporally correlated region use restriction flag is 0. In the case the temporal parallax correlated region use restriction flag is determined to be 1, the temporal parallax correlation prediction vector generator 136 ends the temporal parallax correlation prediction process, and returns the process to Fig. 22.

Also, in the case the temporal parallax correlated region use restriction flag is determined in step S201 to be 0, the temporal parallax correlation prediction vector generator 136 proceeds to step S202, and decides the reference image index of the focused region. Also, in step S203, the temporal parallax correlation prediction vector generator 136 decides a picture with respect to which motion information is to be predicted. Furthermore, in step S204, the temporal parallax correlation prediction vector generator 136 decides a region (a focused correlated region) with respect to which motion information is to be predicted.

In step S205, the temporal parallax correlation prediction vector generator 136 determines whether the focused correlated region is an intra-predicted region, or whether it cannot be referred to. In the case the focused correlated region is determined to be an intra-predicted region, or in the case reference to the focused correlated region is determined to be not allowed, the temporal parallax correlation prediction vector generator 136 proceeds to step S206.

In step S206, the temporal parallax correlation prediction vector generator 136 removes the motion vector of the focused correlated region from the candidates for the prediction vector, ends the temporal parallax correlation prediction process, and returns the process to Fig. 22.

Furthermore, in the case it is determined in step S205 that the focused correlated region is an inter-predicted region which can be referred to, the temporal parallax correlation prediction vector generator 136 proceeds to step S207.

In step S207, the temporal parallax correlation prediction vector generator 136 determines whether the focused correlated region is a region of an L1 reference. In the case the focused correlated region is determined to be a region of the L1 reference, the temporal parallax correlation prediction vector generator 136 proceeds to step S208.

The temporal parallax correlation prediction vector generator 136 acquires a motion vector of the focused correlated region in step S208, acquires a reference image index in step S209, decides an interlaced flag of a reference image in step S210, and proceeds to step S211. Also, in the case the focused correlated region is determined in step S207 to be not a region of the L1 reference, the temporal parallax correlation prediction vector generator 136 proceeds to step S211.

In step S211, the temporal parallax correlation prediction vector generator 136 determines whether the focused correlated region is a region of an L0 reference. In the case the focused correlated region is determined to a region of the L0 reference, the temporal parallax correlation prediction vector generator 136 proceeds to step S212.

The temporal parallax correlation prediction vector generator 136 acquires a motion vector of the focused correlated region in step S212, acquires a reference image index in step S213, decides an interlaced flag of a reference image in step S214, and proceeds to step S221 of Fig. 25. Also, in the case it is determined in step S211 of Fig. 24 that the focused correlated region is not a region of the L0 reference, the temporal parallax correlation prediction vector generator 136 proceeds to step S221 of Fig. 25.

In step S221 of Fig. 25, the temporal parallax correlation prediction vector generator 136 determines whether only the interlaced flag of L1 is 1, or the values of the interlaced flags of L0/L1 are the same and there is reference to L1.

In the case it is determined that only the interlaced flag of L1 is 1, or in the case it is determined that the values of the interlaced flags of L0/L1 are the same and there is reference to L1, the temporal parallax correlation prediction vector generator 136 proceeds to step S222.

In step S222, the temporal parallax correlation prediction vector generator 136 acquires a vector of the L1 reference. In step S223, the temporal parallax correlation prediction vector generator 136 acquires the reference image index of the L1 reference, and proceeds to step S226.

Also, in the case it is determined in step S221 that the interlaced flag of L1 is not 1 or that the interlaced flag of L0 is also 0, and it is determined that the values of the interlaced flags of L0/L1 are not the same or that there is no reference to L1, the temporal parallax correlation prediction vector generator 136 proceeds to step S224.

In step S224, the temporal parallax correlation prediction vector generator 136 acquires the vector of the L0 reference. In step S225, the temporal parallax correlation prediction vector generator 136 acquires the reference image index of the L0 reference, and proceeds to step S226.

In step S226, the temporal parallax correlation prediction vector generator 136 takes the acquired vector of the L1 reference or the acquired vector of the L0 reference as thepredictionvector. At this time, the temporal parallax correlation prediction vector generator 136 performs scaling of the vector by using the distance to the reference image in the focused region or the correlated region, and takes the result of the scaling as the prediction vector.

When the process of step S226 is terminated, the temporal parallax correlation prediction vector generator 136 returns the process to Fig. 24, ends the temporal parallax correlation prediction process, and returns the process to Fig. 22.

[Flow of Motion Parallax Vector Prediction Process]

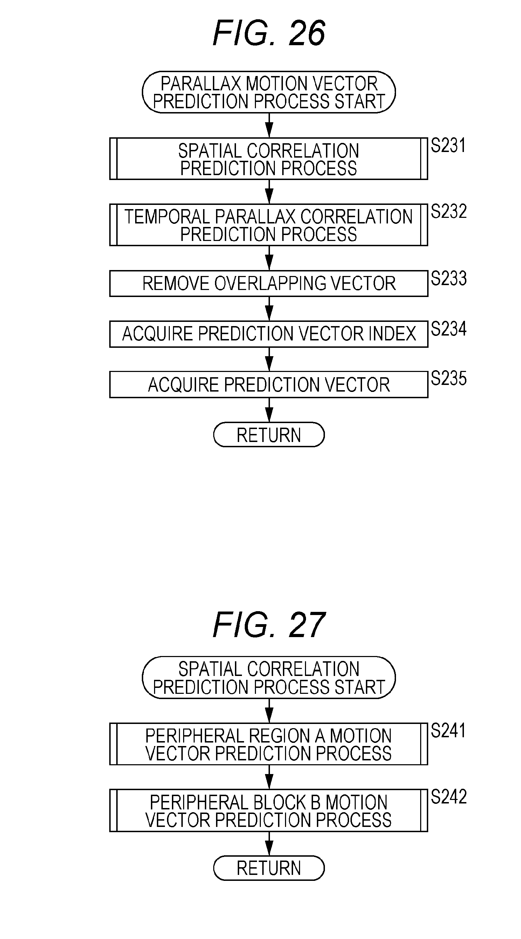

Next, an example of a flow of the motion parallax vector prediction process performed in step S127 of Fig. 20 will be described with reference to the flowchart of Fig. 26.

When the motion parallax vector prediction process is started, the spatial correlation prediction vector generator 135 performs the spatial correlation prediction process in step S231, and generates a spatial correlation prediction vector. In step S232, the temporal parallax correlation prediction vector generator 136 performs the temporal parallax correlation prediction process, and generates a temporal parallax correlation prediction vector. Additionally, the temporal parallax correlation prediction process in this case is performed in the same manner as in the case described with reference to the flowcharts of Figs. 24 and 25.

In step S233, the encoding cost calculator 138 removes the overlapping vector among spatial correlation prediction vectors generated in step S231 and the temporal parallax prediction vectors generated in step S232.

The encoding cost calculator 138 selects, from the remaining vectors, the vector closest to the motion vector of the focused region, generates a prediction vector index indicating the vector in step S234, and in step S235, makes the vector the prediction vector. When the processing in step S235 is terminated, the encoding cost calculator 138 ends the motion parallax vector prediction process, and returns the process to Fig. 20.

[Flow of Spatial Correlation Prediction Process]

Next, an example of a flow of the spatial correlation prediction process performed in step S231 of Fig. 26 will be described with reference to the flowchart of Fig. 27.

When the spatial correlation prediction process is started, the spatial correlation prediction vector generator 135 performs, in step S241 of Fig. 27, a peripheral region A motion vector prediction process, which is a motion vector prediction process for peripheral regions A (A0 and AI in Fig. 9) .

Also, in step S242, the spatial correlation prediction vector generator 135 performs a peripheral region B motion vector prediction process, which is a motion vector prediction process for peripheral regions B (B0 to B2 in Fig. 9).

When the processing in step S242 is terminated, the spatial correlation prediction vector generator 135 ends the spatial correlation prediction process, and returns the process to Fig. 26.

[Flow of Peripheral Region A Motion Vector Prediction Process]

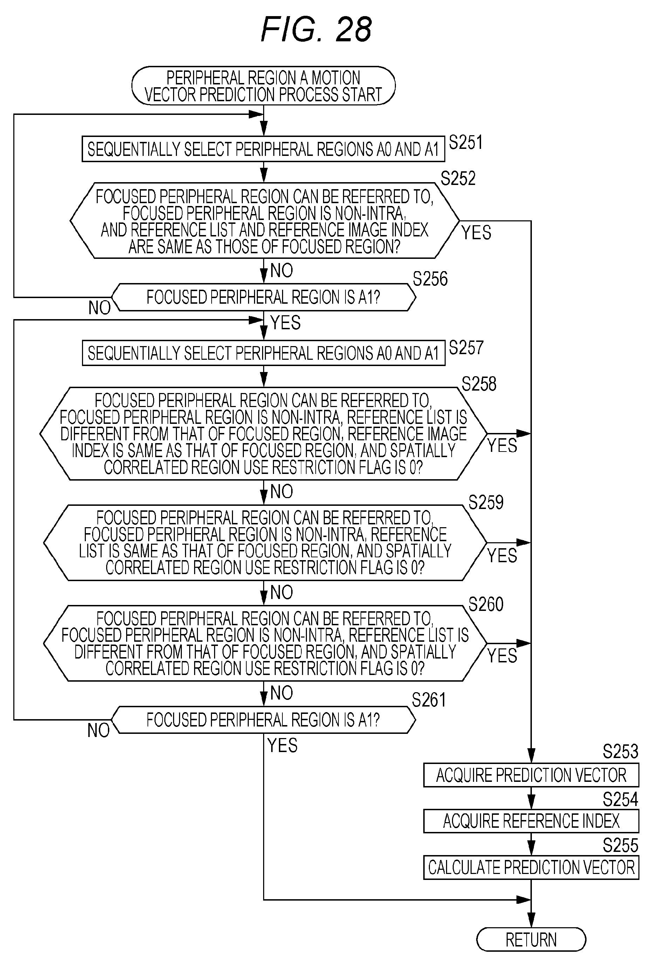

Next, an example of a flow of the peripheral region A motion vector prediction process will be described with reference to the flowchart of Fig. 28.

When the peripheral region A motion vector prediction process is started, the spatial correlation prediction vector generator 135 sequentially selects the peripheral regions A0 and A1 (Fig. 9) one by one in step S251.

The selected peripheral region is referred to as a focused peripheral region.

In step S252, the spatial correlation prediction vector generator 135 determines whether a focused peripheral region can be referred to, the focused peripheral region is non-intra, and the reference list and the reference image index are the same as those of the focused region.

In the case it is determined that the focused peripheral region is an inter-predicted region that can be referred to, and that the reference list and the reference image index of the focused peripheral region are the same as those of the focused region, the spatial correlation prediction vector generator 135 proceeds to step S253.

In step S253, the spatial correlation prediction vector generator 135 acquires a motion vector of the focused peripheral region as a prediction vector. In step S254, the spatial correlation prediction vector generator 135 acquires a reference index of the focused peripheral region. In step S255, the spatial correlation prediction vector generator 135 performs scaling and calculates a prediction vector by using the distance between the focused region and its reference image, the distance between the spatially correlated region and its reference image, and the like. When the processing in step S255 is terminated, the spatial correlation prediction vector generator 135 ends the peripheral region A motion vector prediction process, and returns the process to Fig. 27.

Also, in the case it is determined in step S252 that the focused peripheral region is not an inter-predicted region that can be referred to, or that the reference list and the reference image index of the focused peripheral region are different from those of the focused region, the spatial correlation prediction vector generator 135 proceeds to step S256.

In step S256, the spatial correlation prediction vector generator 135 determines whether the focused peripheral region is the peripheral region A1, and in the case the focused peripheral region is determined to be not the peripheral region A1, the process is returned to step S251.

Furthermore, in the case it is determined in step S256 that the focused peripheral region is the peripheral region A1, the spatial correlation prediction vector generator 135 proceeds to step S257.

In step S257, the spatial correlation prediction vector generator 135 sequentially selects the peripheral regions A0 and A1 (Fig. 9) one by one.

In step S258, the spatial correlation prediction vector generator 135 determines whether the focused peripheral region can be referred to, the focused peripheral region is non-intra, the reference list is different from that of the focused region, the reference image index is the same as that of the focused region, and the spatially correlated region use restriction flag is 0.

In the case it is determined that the focused peripheral region can be referred to, that the focused peripheral region is non-intra, that the reference list is different fromthat of the focused region, that the reference image index is the same as that of the focused region, and that the spatially correlated region use restriction flag is 0, the spatial correlation prediction vector generator 135 returns the process to step S253.

Also, in the case it is determined in step S258 that the focused peripheral region is not an inter-predicted region that can be referred to, or that the reference list is the same as that of the focused region, or that the reference image index is different from that of the focused region, or that the spatially correlated region use restriction flag is 1, the spatial correlation prediction vector generator 135 proceeds to step S259.

In step S259, the spatial correlation prediction vector generator 135 determines whether the focused peripheral region can be referred to, the focused peripheral region is non-intra, the reference list is the same as that of the focused region, and the spatially correlated region use restriction flag is 0.

In the case it is determined that the focused peripheral region can be referred to, that the focused peripheral region is non-intra, that the reference list is the same as that of the focused region, and that the spatially correlated region use restriction flag is 0, the spatial correlation prediction vector generator 135 returns the process to step S253.

Also, in the case it is determined in step S259 that the focused peripheral region is not an inter-predicted region that can be referred to, or that the reference list is different from that of the focused region, or that the spatially correlated region use restriction flag is 1, the spatial correlation prediction vector generator 135 proceeds to step S260.

In step S260, the spatial correlation prediction vector generator 135 determines whether the focused peripheral region can be referred to, the focused peripheral region is non-intra, the reference list is different from that of the focused region, and the spatially correlated region use restriction flag is 0.

In the case it is determined that the focused peripheral region can be referred to, that the focused peripheral region is non-intra, that the reference list is different from that of the focused region, and that the spatially correlated region use restriction flag is 0, the spatial correlation prediction vector generator 135 returns the process to step S253.

Also, in the case it is determined in step S260 that the focused peripheral region is not an inter-predicted region that can be referred to, or that the reference list is the same as that of the focused region, or that the spatially correlated region use restriction flag is 1, the spatial correlation prediction vector generator 135 proceeds to step S261.

In step S261, the spatial correlation prediction vector generator 135 determines whether the focused peripheral region is A1, and in the case it is determined that the focused peripheral region is not A1, the process is returned to step S257.

Also, in the case it is determined in step S261 that the focused peripheral region is A1, the spatial correlation prediction vector generator 135 ends the peripheral region Amotion vector prediction process, and returns the process to Fig. 27.

[Flow of Peripheral Region B Motion Vector Prediction Process]

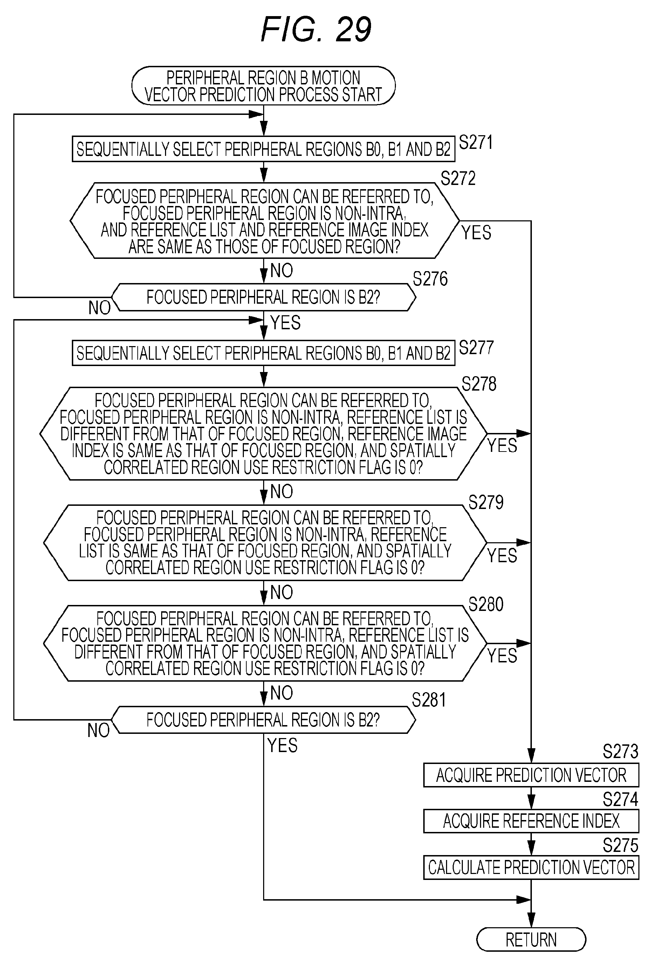

An example of a flow of the peripheral region B motion vector prediction process will be described with reference to the flowchart of Fig. 29.

This peripheral region B motion vector prediction process is performed in the same manner as the peripheral region A motion vector prediction process which has been described with reference to the flowchart of Fig. 28 except that the peripheral regions which are the processing targets are B0 to B2. That is, each processing from step S271 to step S281 of Fig. 29 is performed in the same manner as each processing from step S251 to step S261 of Fig. 28.

When the peripheral region B motion vector prediction process is terminated, the spatial correlation prediction vector generator 135 returns the process to Fig. 27.

By performing each processing described above, the temporal parallax correlation prediction vector generator 136 may generate not only the motion correlation prediction vector, but also the parallax correlation prediction vector. Accordingly, even if the vector of a focused region is a parallax vector, the motion parallax predictor/compensator 115 may generate a prediction vector with a high prediction accuracy. The image encoding device 100 may thus suppress reduction in the encoding efficiency.

Also, with the correlated region determiner 122 controlling the use of a correlated region based on the relationship in the prediction direction, the spatial correlation prediction vector generator 135 and the temporal parallax correlation prediction vector generator 136 are enabled to suppress occurrence of unnecessary load, such as generation of a prediction vector with a low prediction accuracy or interruption of the process, when generating a prediction vector, and the processing time and the amount of memory usage may be reduced. Also, because of this restriction, the spatial correlation prediction vector generator 135 and the temporal parallax correlation prediction vector generator 136 are enabled to appropriately generate a prediction vector with a high prediction accuracy, and the encoding efficiency may be improved. Additionally, in the case of the present technology, the restriction is imposed on the base view prediction method, and extension from a conventional method is facilitated.

Furthermore, by transmitting the use restriction flag of a correlated region to the decoding side, prediction of a vector may be performed on the decoding side in the same manner as the image encoding device 100. That is, the encoded data generated by the image encoding device 100 may be correctly decoded, and also, the processing time and the amount of memory usage may be reduced also at the time of decoding.

<2. Second Embodiment>

[Image Decoding Device]

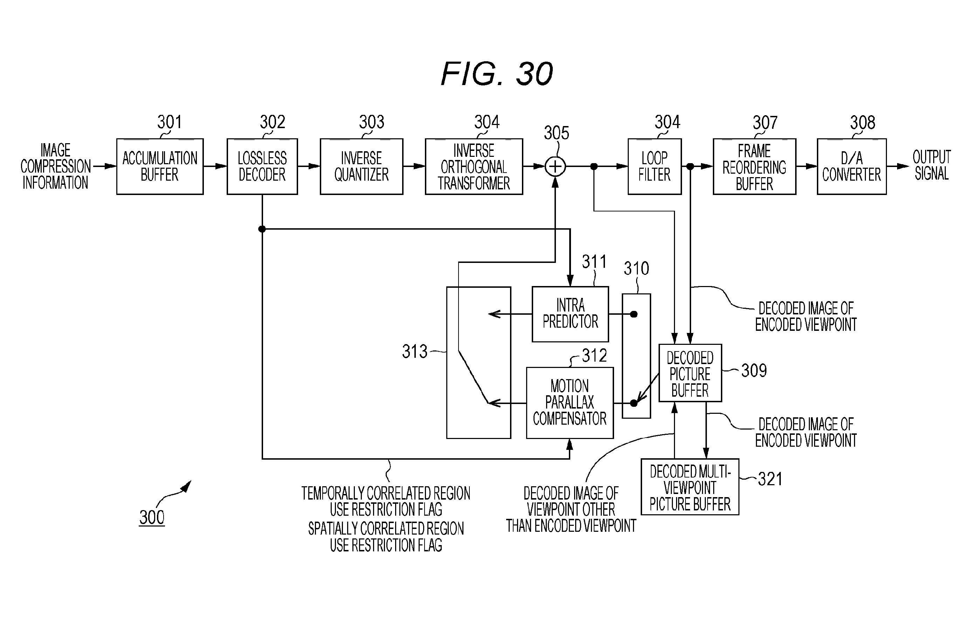

Fig. 30 is a block diagram showing a typical example structure of an image decoding device which is an image processing device. An image decoding device 300 shown in Fig. 30 is a device corresponding to the image encoding device 100 in Fig. 14. That is, the image decoding device 300 decodes encoded data (a bit stream) which the image encoding device 100 generated by encoding a multi-viewpoint image, by a decoding method corresponding to the encoding method of the image encoding device 100 to thereby obtain a decoded multi-viewpoint image.

As shown in Fig. 30, the image decoding device 300 includes an accumulation buffer 301, a lossless decoder 302, an inverse quantizer 303, an inverse orthogonal transformer 304, an arithmetic operation unit 305, a loop filter 306, a frame reordering buffer 307, and a D/A converter 308. Also, the image decoding device 300 includes a decoded picture buffer 309, a selector 310, an intra predictor 311, a motion parallax compensator 312, and a selector 313.

Furthermore, the image decoding device 300 includes a decoded multi-viewpoint picture buffer 321.

The accumulation buffer 301 accumulates transmitted encoded data, and supplies the encoded data to the lossless decoder 302. The lossless decoder 302 decodes information encoded by the lossless encoder 106 of Fig. 14 and supplied from the accumulation buffer 301 by a method corresponding to the encoding method of the lossless encoder 106. The lossless decoder 302 supplies quantized coefficient data of a difference image obtained by decoding to the inverse quantizer 303.

Also, the lossless decoder 302 refers to the information about the optimal prediction mode obtained by decoding the encoded data, and determines whether the intra prediction mode or the inter prediction mode is selected as the optimal prediction mode. The lossless decoder 302 supplies the information about the optimal prediction mode to the intra predictor 311 or the motion parallax compensator 312 based on the determination result. That is, for example, in the case the intra prediction mode is selected by the image encoding device 100 as the optimal prediction mode, intra prediction information, which is the information about the optimal prediction mode, and the like are supplied to the intra predictor 311. Also, for example, in the case the inter prediction mode is selected by the image encoding device 100 as the optimal prediction mode, inter prediction information, which is the information about the optimal prediction mode, and the like are supplied to the motion parallax compensator 312.

Furthermore, the lossless decoder 302 supplies the spatial correlation use restriction flag or the temporal correlation use restriction flag to the motion parallax compensator 312.

The inverse quantizer 303 performs inverse quantization on the quantized coefficient data obtained by decoding by the lossless decoder 302 according to a technique corresponding to the quantization technique of the quantizer 105 in Fig. 14, and supplies the resulting coefficient data to the inverse orthogonal transformer 304. The inverse orthogonal transformer 304 performs inverse orthogonal transform on the coefficient data supplied from the inverse quantizer 303 according to a technique corresponding to the orthogonal transform technique of the orthogonal transformer 104 in Fig. 14. The inverse orthogonal transformer 304 obtains, by this inverse orthogonal transform process, a difference image corresponding to the difference image before orthogonal transform by the image encoding device 100.

The difference image obtained by the inverse orthogonal transform is supplied to the arithmetic operation unit 305. In addition, a predicted image is supplied to the arithmetic operation unit 305 from the intra predictor 311 or the motion parallax compensator 312 via the selector 313.

The arithmetic operation unit 305 adds the difference image and the predicted image, and obtains a reconstructed image corresponding to the image before subtraction of the predicted image by the arithmetic operation unit 103 of the image encoding device 100. The arithmetic operation unit 305 supplies the reconstructed image to the loop filter 306.

The loop filter 306 generates a decoded image by appropriately performing a loop filtering process including a deblocking filtering process, an adaptive loop filtering process or the like on the reconstructed image which has been supplied. For example, the loop filter 306 removes block distortion by performing the deblocking filtering process on the reconstructed image. In addition, for example, the loop filter 306 performs loop filtering on the result of deblocking filtering (the decoded image from which block distortion is removed) by using a Wiener filter to improve the image quality.

Additionally, the type of filtering process to be performed by the loop filter 306 is arbitrary, and any other filtering process than described above may be performed. Furthermore, the loop filter 306 may perform filtering by using a filter coefficient supplied from the image encoding device 100 of Fig. 14.

The loop filter 306 supplies a decoded image which is a result of the filtering process to the frame reordering buffer 307 and the decoded picture buffer 309. Additionally, it is also possible to omit the filtering process by the loop filter 306. That is, the output of the arithmetic operation unit 305 may be stored in the decoded picture buffer 309 without being filtered. For example, the intra predictor 311 uses the pixel value of a pixel included in the image as the pixel value of a peripheral pixel.

The frame reordering buffer 307 performs reordering with respect to the supplied decoded image. Specifically, the frames reordered into the encoding order by the frame reordering buffer 102 in Fig. 14 are reordered into the original display order. The D/A converter 308 D/A converts the decoded image supplied from the frame reordering buffer 307, and outputs the same to a display, not shown, to be displayed.

The decoded picture buffer 309 stores the supplied reconstructed image (and the view ID and the POC of the image) and the supplied decoded image (and the view ID and the POC of the image). Also, the decoded picture buffer 309 supplies, at a predetermined timing or based on a request from outside, for example, the intra predictor 311 or the motion parallax compensator 312, the stored reconstructed image (and the view ID and the POC of the image) and the stored decoded image (and the view ID and the POC of the image) to the intra predictor 311 or the motion parallax compensator 312 via the selector 310.

The intra predictor 311 performs processing basically the same as that of the intra predictor 114 of Fig. 14. However, the intra predictor 311 performs the intra prediction only on a region where a predicted image was generated by the intra prediction at the time of encoding.

The motion parallax compensator 312 performs motion parallax compensation based on the inter prediction information supplied from the lossless decoder 302, and generates a predicted image. Additionally, the motion parallax compensator 312 performs the motion parallax compensation only on a region where the inter prediction was performed at the time of encoding, based on the inter prediction information supplied from the lossless decoder 302.

The motion parallax compensator 312 supplies a generated predicted image to the arithmetic operation unit 305 via the selector 313 for each region which is a unit of the prediction processing.

The selector 313 supplies the predicted image supplied from the intra predictor 311 or the predicted image supplied from the motion parallax compensator 312 to the arithmetic operation unit 305.

The decoded picture buffer 309 stores only the image of the view which is a processing target (and the view ID and the POC of the image), but the decoded multi-viewpoint picture buffer 321 stores the image of each viewpoint (view) (and the view ID and the POC of the image). That is, the decoded multi-viewpoint picture buffer 321 acquires the decoded image (and the view ID and the POC of the image) supplied to the decoded picture buffer 309, and stores the decoded image (and the view ID and the POC of the image) along with the decoded picture buffer 309.

When the view which is a processing target changes, the decoded picture buffer 309 erases the decoded image, but the decoded multi-viewpoint picture buffer 321 keeps the image. Then, the decoded image that is stored (and the view ID and the POC of the image) is supplied to the decoded picture buffer 309 as the "decoded image of a view which is not a processing target", according to a request from the decoded picture buffer 309 or the like. The decoded picture buffer 309 supplies the "decoded image of a view which is not a processing target (and the view ID and the POC of the image)" read from the decoded multi-viewpoint picture buffer 321 to the motion parallax compensator 312 via the selector 310.

[Motion Parallax Compensator]

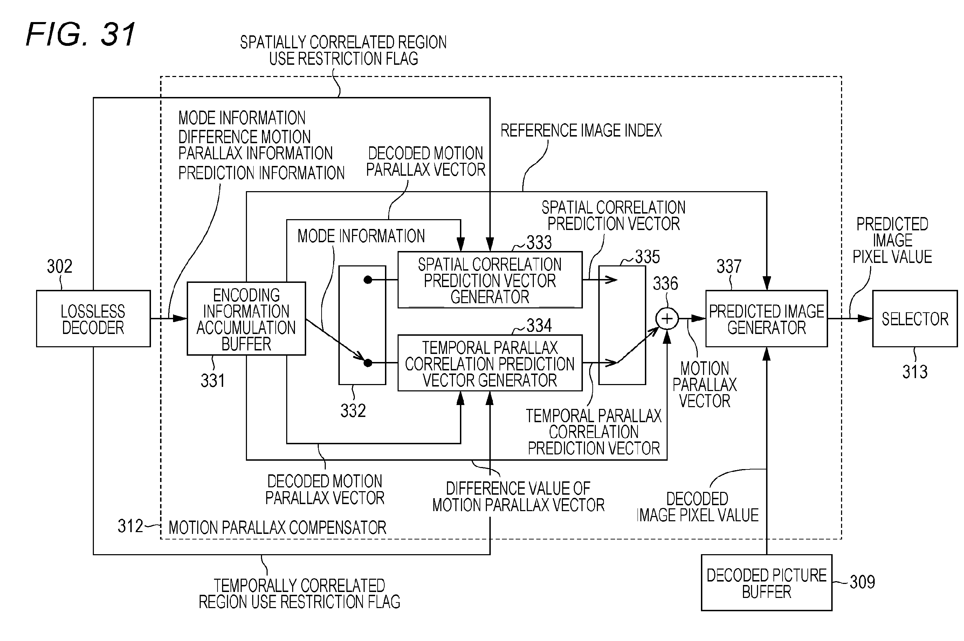

Fig. 31 is a block diagram showing a typical example structure of the motion parallax compensator 312.

As shown in Fig. 30, the motion parallax compensator 312 includes an encoding information accumulation buffer 331, a selector 332, a spatial correlation prediction vector generator 333, a temporal parallax correlation prediction vector generator 334, a selector 335, an arithmetic operation unit 336, and a predicted image generator 337.

The encoding information accumulation buffer 331 acquires mode information, difference motion parallax information, and prediction information obtained by the lossless decoder 302. Also, the encoding information accumulation buffer 331 stores an encoded motion parallax vector used by the predicted image generator 337. This motion parallax vector is used as the motion parallax vector of a peripheral region when performing a process on another region.

The encoding information accumulation buffer 331 supplies the mode information to one, of the spatial correlation prediction vector generator 333 and temporal parallax correlation prediction vector generator 334, corresponding to the type of the prediction vector (the spatial correlation prediction vector or the temporal parallax correlation prediction vector) specified by the prediction information, via the selector 332.

Also, the encoding information accumulation buffer 331 supplies the motion parallax vector of a peripheral region which has been decoded to the spatial correlation prediction vector generator 333 and the temporal parallax correlation prediction vector generator 334.

Furthermore, the encoding information accumulation buffer 331 supplies the difference motion parallax vector included in the difference motion parallax information to the arithmetic operation unit 336. Also, the encoding information accumulation buffer 331 supplies the reference image index included in the prediction information to the predicted image generator 337.

The spatial correlation prediction vector generator 333 acquires the spatially correlated region use restriction flag extracted from the encoded data by the lossless decoder 302. Also, the spatial correlation prediction vector generator 333 acquires, according to the spatially correlated region use restriction flag, the mode information, the decoded motion parallax vector and the like from the encoding information accumulation buffer 331, and generates a spatial correlation prediction vector based on these pieces of information. This generation method is the same as that of the spatial correlation prediction vector generator 135. However, in the case of the spatial correlation prediction vector generator 333, the optimal inter prediction mode is determined in advance, and thus, the spatial correlation prediction vector has to be generated only for the mode. The spatial correlation prediction vector generator 333 supplies the generated spatial correlation prediction vector to the arithmetic operation unit 336 via the selector 335.

The temporal parallax correlation prediction vector generator 334 acquires the temporally correlated region use restriction flag extracted from the encoded data by the lossless decoder 302. Also, temporal parallax correlation prediction vector generator 334 acquires, according to the temporally correlated region use restriction flag, the mode information, the decoded motion parallax vector and the like from the encoding information accumulation buffer 331, and generates a temporal parallax correlation prediction vector based on these pieces of information. This generation method is the same as that of the temporal parallax correlation prediction vector generator 136. However, in the case of the temporal parallax correlation prediction vector generator 334, the optimal inter prediction mode is determined in advance, and thus, the temporal parallax correlation prediction vector has to be generated only for the mode. The temporal parallax correlation prediction vector generator 334 supplies the generated temporal parallax correlation prediction vector to the arithmetic operation unit 336 via the selector 335.

In the case the spatial correlation prediction vector is supplied from the spatial correlation prediction vector generator 333, the selector 335 supplies the same to the arithmetic operation unit 336. Also, in the case the temporal parallax correlation prediction vector is supplied from the temporal parallax correlation prediction vector generator 334, the selector 335 supplies the same to the arithmetic operation unit 336.

The arithmetic operation unit 336 adds the difference motion parallax vector supplied from the encoding information accumulation buffer 331 to the spatial correlation prediction vector or the temporal parallax correlation prediction vector supplied from the selector 335, and reconstructs the motion parallax vector of the focused region. The arithmetic operation unit 336 supplies the motion parallax vector of the focused region which has been reconstructed to the predicted image generator 337.

The predicted image generator 337 generates a predicted image by using the reconstructed motion parallax vector of the focused region supplied from the arithmetic operation unit 336, the reference image index supplied from encoding information accumulation buffer 331, and the pixel value of the peripheral image which is an image of a peripheral region supplied from the decoded picture buffer 309. The predicted image generator 337 supplies the generated predicted image pixel value to the selector 313.

In this manner, the temporal parallax correlation prediction vector generator 334 may generate not only the motion correlation prediction vector, but also the parallax correlation prediction vector. Accordingly, even if the vector of a focused region is a parallax vector, the motion parallax compensator 312 may generate a prediction vector with a high prediction accuracy. The image decoding device 300 may thus improve the encoding efficiency.

Also, by controlling the use of a correlated region by using a correlated region use restriction flag generated by the correlated region determiner 122, the spatial correlation prediction vector generator 333 and the temporal parallax correlation prediction vector generator 334 are enabled to suppress occurrence of unnecessary load, such as reconstruction of a prediction vector with a low prediction accuracy or interruption of the process, when reconstructing a prediction vector, and the processing time and the amount of memory usage may be reduced. Also, because of this restriction, the spatial correlation prediction vector generator 333 and the temporal parallax correlation prediction vector generator 334 are enabled to appropriately generate a prediction vector with a high prediction accuracy, and the encoding efficiency may be improved. Additionally, in the case of the present technology, the restriction is imposed on the base view prediction method, and extension from a conventional method is facilitated.

[Flow of Decoding Process]

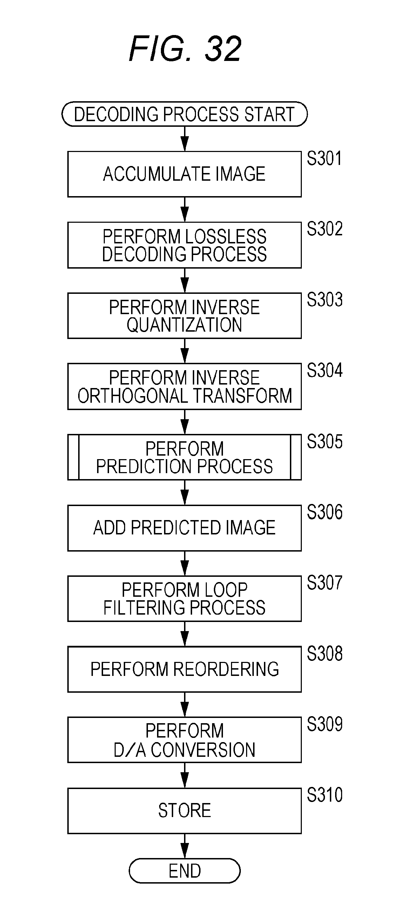

Next, flows of processes performed by the image decoding device 300 as described above will be described. First, an example of a flow of a decoding process will be described with reference to the flowchart of Fig. 32.

When the decoding process is started, the accumulation buffer 301 accumulates a transmitted code stream in step S301. In step S302, the lossless decoder 302 decodes the bit stream (encoded difference image information) supplied from the accumulation buffer 301. At this time, various pieces of information included in the bit stream, other than the difference image information, such as the intra prediction information, the inter prediction information and the like are also decoded.

In step S303, the inverse quantizer 303 performs inverse quantization on the quantized orthogonal transform coefficient obtained by the processing in step S302. In step S304, the inverse orthogonal transformer 304 performs inverse orthogonal transform on the orthogonal transform coefficient obtained by the inverse quantization in step S303.

In step S305, the intra predictor 311 or the motion parallax compensator 312 performs a prediction process using the supplied information. In step S306, the arithmetic operation unit 305 adds the predicted image selected in step S305 to the difference image information obtained by the inverse orthogonal transform in step S304. A reconstructed image is thereby generated.

In step S307, the loop filter 306 performs, as necessary, a loop filtering process including deblocking filtering, adaptive loop filtering, and the like on the decoded image obtained in step S306.

In step S308, the frame reordering buffer 307 performs reordering on a decoded image generated by the filtering process of step S307. Specifically, the frames reordered into the encoding order by the frame reordering buffer 102 of the image encoding device 100 are reordered into the original display order.

In step S309, the D/A converter 308 D/A converts the decoded image whose frames have been reordered. This decoded image is output to and displayed by a display not shown.

In step S310, the decoded picture buffer 309 stores the decoded image obtained by the filtering process of step S307. This decoded image is used as a reference image in the inter prediction process.

The decoding process is terminated when the processing in step S310 is terminated.

[Flow of Prediction Process]

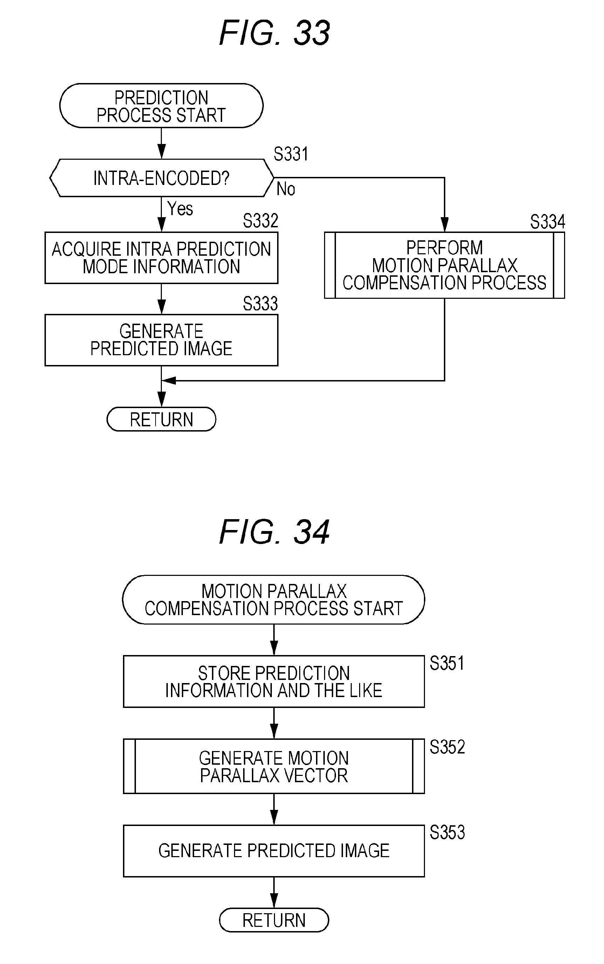

Next, an example of a flow of the prediction process performed in step S305 of Fig. 32 will be described with reference to the flowchart of Fig. 33.

When a prediction process is started, the lossless decoder 302 determines in step S331 whether the intra prediction was performed at the time of encoding of the focused region, which is a processing target. In the case it is determined that the intra prediction was performed, the lossless decoder 302 proceeds to step S332.

In this case, the intra predictor 311 acquires the intra prediction mode information from the lossless decoder 302 in step S332, and generates a predicted image by the intra prediction in step S333. When the predicted image is generated, the intra predictor 311 ends the prediction process, and returns the process to Fig. 32.

Also, in the case it is determined in step S331 that the focused region is a region where the inter prediction was performed, the lossless decoder 302 proceeds to step S334. In step S334, the motion parallax compensator 312 performs a motion parallax compensation process. When the motion parallax compensation process is terminated, the motion parallax compensator 312 ends the prediction process, and returns the process to Fig. 32.

[Flow of Motion Parallax Compensation Process]

Next, an example of a flow of the motion parallax compensation process performed in step S334 of Fig. 33 will be described with reference to the flowchart of Fig. 34.

When the motion parallax compensation process is started, the encoding information accumulation buffer 331 stores, in step S351, the mode information, the motion parallax information, the prediction information and the like which have been decoded, in step S351.

In step S352, the spatial correlation prediction vector generator 333, the temporal parallax correlation prediction vector generator 334, the selector 335, and the arithmetic operation unit 336 perform the motion parallax vector generation process, and reconstruct the motion parallax vector of the focused region.

When the motion parallax vector is reconstructed, the predicted image generator 337 generates, in step S353, a predicted image by using the motion parallax vector.

When the predicted image is generated, the predicted image generator 337 ends the motion parallax compensation process, and returns the process to Fig. 33.

[Flow of Motion Parallax Vector Generation Process]

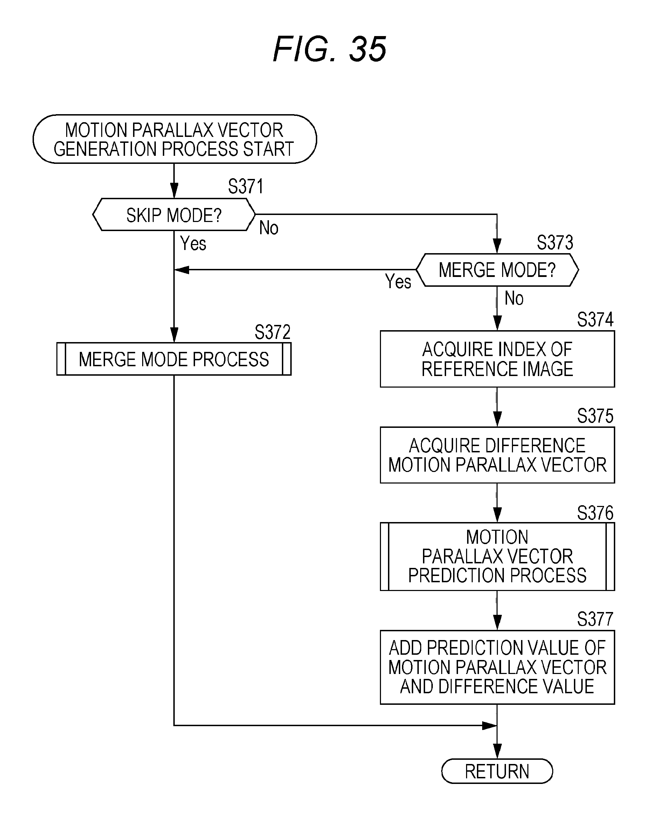

Next, an example of a flow of the motion parallax vector generation process performed in step S352 of Fig. 34 will be described with reference to the flowchart of Fig. 35.

When the motion parallax vector generation process is started, the encoding information accumulation buffer 331 determines, in step S371, whether the mode is a skip mode, based on the prediction information. In the case the mode is determined to be the skip mode, the encoding information accumulation buffer 331 proceeds to step S372. In step S372, the spatial correlation prediction vector generator 333 to the arithmetic operation unit 336 perform a merge mode process, and reconstruct the motion parallax vector in the merge mode. Additionally, in this merge mode process, processing same as each processing described with reference to the flowchart of Fig. 22 is performed. When the merge mode process is terminated, the arithmetic operation unit 336 ends the motion parallax vector generation process, and returns the process to Fig. 34.

Also, in the case the mode is determined in step S371 of Fig. 35 to be not the skip mode, the encoding information accumulation buffer 331 proceeds to step S373. In step S373, the encoding information accumulation buffer 331 determines whether the mode is the merge mode, based on the prediction information. In the case the mode is determined to be the merge mode, the encoding information accumulation buffer 331 returns the process to step S372, and performs the merge mode process.

Furthermore, in the case the mode is determined in step S373 to be not the merge mode, the encoding information accumulation buffer 331 proceeds to step S374.

In step S374, the encoding information accumulation buffer 331 acquires the index of the reference image. In step S375, the encoding information accumulation buffer 331 acquires the difference motion parallax vector.

In step S376, the spatial correlation prediction vector generator 333 or the temporal parallax correlation prediction vector generator 334 performs the motion parallax vector prediction process. This motion parallax vector prediction process is performed in the same manner as in the case described with reference to the flowchart of Fig. 26. However, in this case, since the prediction method is determined in advance, only one of the spatial correlation prediction process and the temporal parallax correlation prediction process (one that is specified by the prediction information) is performed.

In step S377, the arithmetic operation unit 336 adds the prediction vector reconstructed in step S376 and the difference motion parallax vector, and reconstructs the motion parallax vector.

When the processing in step S377 is terminated, the arithmetic operation unit 336 ends the motion parallax vector generation process, and returns the process to Fig. 34.

By performing each processing described above, the temporal parallax correlation prediction vector generator 334 may generate not only the motion correlation prediction vector, but also the parallax correlation prediction vector. Accordingly, even if the vector of a focused region is a parallax vector, the motion parallax compensator 312 may generate a prediction vector with a high prediction accuracy. The image decoding device 300 may thus improve the encoding efficiency.

Also, by controlling the use of a correlated region by using a correlated region use restriction flag generated by the correlated region determiner 122, the spatial correlation prediction vector generator 333 and the temporal parallax correlation prediction vector generator 334 are enabled to suppress occurrence of unnecessary load, such as reconstruction of a prediction vector with a low prediction accuracy or interruption of the process, when reconstructing a prediction vector, and the processing time and the amount of memory usage may be reduced. Also, because of this restriction, the spatial correlation prediction vector generator 333 and the temporal parallax correlation prediction vector generator 334 are enabled to appropriately generate a prediction vector with a high prediction accuracy, and the encoding efficiency may be improved.

The present technique can be applied to image encoding devices and image decoding devices used for receiving image information (bit stream) compressed using orthogonal transform such as discrete cosine transform and motion compensation as in MPEG or H.26x, for example, via network media such as satellite broadcasting, cable television, the Internet, or portable telephone devices. The present technique can also be applied to image encoding devices and image decoding devices that are used when compressed image information is processed on a storage medium such as an optical or magnetic disk or a flash memory. Furthermore, the present technique can also be applied to motion estimator/compensator included in the image encoding devices, the image decoding devices, and the like.

<3. Third Embodiment>

[Computer]

The series of processes described above can be performed either by hardware or by software. When the series of processes described above is performed by software, programs constituting the software are installed in a computer. Note that examples of the computer include a computer embedded in dedicated hardware and a general-purpose personal computer capable of executing various functions by installing various programs therein.

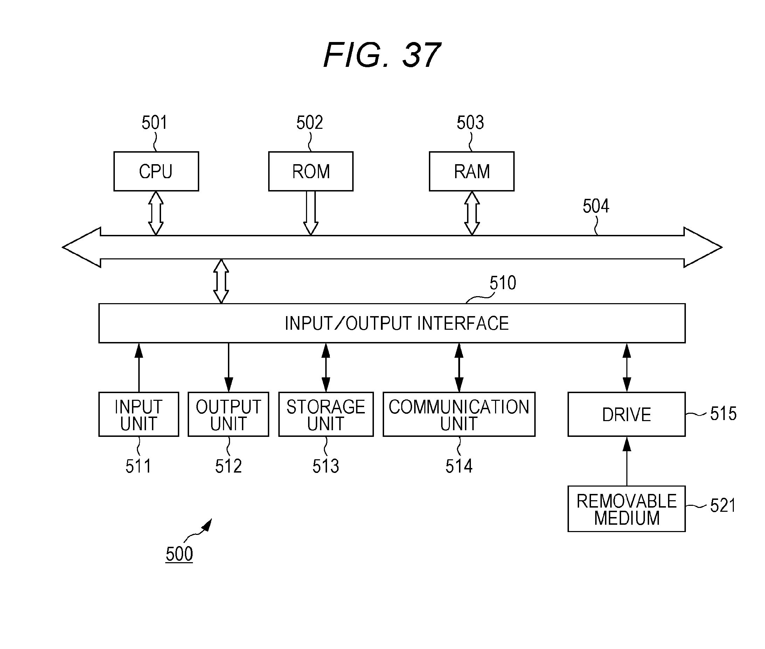

In Fig. 37, a CPU (central processing unit) 501 of a personal computer 500 performs various processes according to programs stored in a ROM (read only memory) 502 or programs loaded onto a RAM (random access memory) 503 from a storage unit 513. The RAM 503 also stores data necessary for the CPU 501 to perform various processes and the like as necessary.

The CPU 501, the ROM 502, and the RAM 503 are connected to one another via a bus 504. An input/output interface 510 is also connected to the bus 504.

The input/output interface 510 has the following components connected thereto: an input unit 511 including a keyboard, a mouse, or the like; an output unit 512 including a display such as a CRT (cathode ray tube) or a LCD (liquid crystal display), and a speaker; the storage unit 513 including a hard disk or the like; and a communication unit 514 including a modem orthelike. The communication unit 514 performs communications via networks including the Internet.

A drive 515 is also connected to the input/output interface 510 where necessary, a removable medium 521 such as a magnetic disk, an optical disk, a magneto optical disk, or a semiconductor memory is mounted on the drive as appropriate, and a computer program read from such a removable disk is installed in the storage unit 513 where necessary.

When the above described series of processes is performed by software, the programs constituting the software are installed from a network or a recording medium.

As shown in Fig. 37, examples of the recording medium include the removable medium 521 that is distributed for delivering programs to users separately from the device, such as a magnetic disk (including a flexible disk), an optical disk (including a CD-ROM (compact disc - read only memory) or a DVD (digital versatile disc)), a magneto optical disk (including an MD (mini disc)), and a semiconductor memory, which has programs recorded thereon, and alternatively, the ROM 502 having programs recorded therein and a hard disk included in the storage unit 513, which are incorporated beforehand into the device prior to delivery to users.

Programs to be executed by the computer may be programs for carrying out processes in chronological order in accordance with the sequence described in this specification, or programs for carrying out processes in parallel or at necessary timing such as in response to a call.

In this specification, steps describing programs to be recorded in a recording medium include processes to be performed in parallel or independently of one another if not necessarily in chronological order, as well as processes to be performed in chronological order in accordance with the sequence described herein.

In this specification, a system refers to the entirety of equipment including more than one device.

Furthermore, any structure described above as one device (or one processing unit) may be divided into two or more devices (or processing units). Conversely, any structure described above as two or more devices (or processing units) may be combined into one device (or processing unit). Furthermore, it is of course possible to add components other than those described above to the structure of any of the devices (or processing units). Furthermore, some components of a device (or processing unit) may be incorporated into the structure of another device (or processing unit) as long as the structure and the function of the system as a whole are substantially the same. That is, the present technique is not limited to the embodiments described above, but various modifications may be made thereto without departing from the scope of the technique.

The image encoding devices and the image decoding devices according to the embodiments described above can be applied to various electronic devices such as transmitters and receivers in satellite broadcasting, cable broadcasting such as cable TV, distribution via the Internet, distribution to terminals via cellular communication, or the like, recording devices configured to record images in media such as magnetic discs and flash memory, and reproduction devices configured to reproduce images from the storage media. Four examples of applications will be described below.

<4. Fourth Embodiment>

[First Application: Television Receiver]

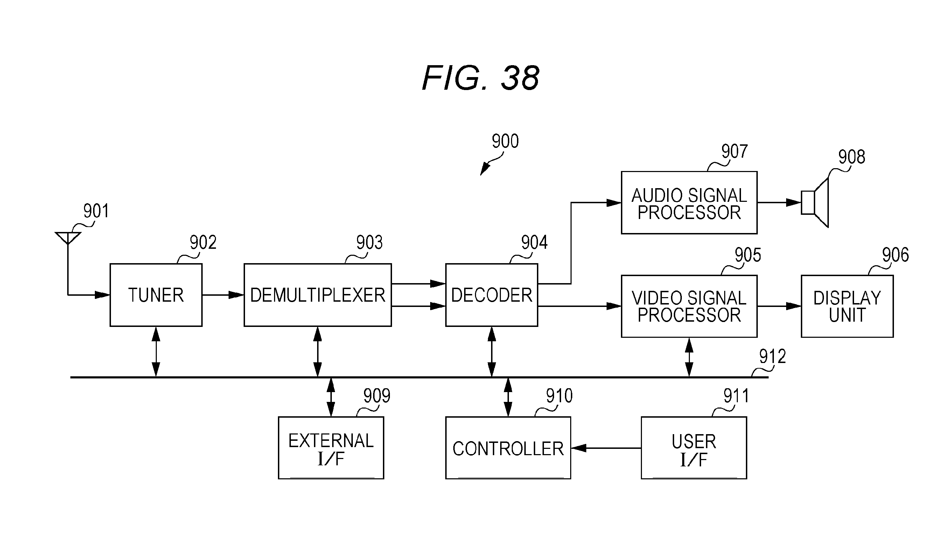

Fig. 38 shows an example of a schematic structure of a television apparatus to which the embodiments described above are applied. The television apparatus 900 includes an antenna 901, a tuner 902, a demultiplexer 903, a decoder 904, a video signal processor 905, a display unit 906, an audio signal processor 907, a speaker 908, an external interface 909, a controller 910, a user interface 911, and a bus 912.

The tuner 902 extracts a signal of a desired channel from broadcast signals received via the antenna 901, and demodulates the extracted signal. The tuner 902 then outputs an encoded bit stream obtained by the demodulation to the demultiplexer 903. That is, the tuner 902 serves as transmitting means in the television apparatus 900 that receives an encoded stream of encoded images.

The demultiplexer 903 separates a video stream and an audio stream of a program to be viewed from the encoded bit stream, and outputs the separated streams to the decoder 904. The demultiplexer 903 also extracts auxiliary data such as an EPG (electronic program guide) from the encoded bit stream, and supplies the extracted data to the controller 910. If the encoded bit stream is scrambled, the demultiplexer 903 may descramble the encoded bit stream.

The decoder 904 decodes the video stream and the audio stream input from the demultiplexer 903. The decoder 904 then outputs video data generated by the decoding to the video signal processor 905. The decoder 904 also outputs audio data generated by the decoding to the audio signal processor 907.

The video signal processor 905 reproduces video data input from the decoder 904, and displays the video data on the display unit 906. The video signal processor 905 may also display an application screen supplied via the network on the display unit 906. Furthermore, the video signal processor 905 may perform additional processing such as noise removal on the video data depending on settings. The video signal processor 905 may further generate an image of a GUI (graphical user interface) such as a menu, a button or a cursor and superimpose the generated image on the output images.

The display unit 906 is driven by a drive signal supplied from the video signal processor 905, and displays video or images on a video screen of a display device(such as a liquid crystal display, a plasma display, or an OELD (organic electroluminescence display).

The audio signal processor 907 performs reproduction processing such as D/A conversion and amplification on the audio data input from the decoder 904, and outputs audio through the speaker 908. Furthermore, the audio signal processor 907 may perform additional processing such as noise removal on the audio data.

The external interface 909 is an interface for connecting the television apparatus 900 with an external device or a network. For example, a video stream or an audio stream received via the external interface 909 may be decoded by the decoder 904. That is, the external interface 909 also serves as transmitting means in the television apparatus 900 that receives an encoded stream of encoded images.

The controller 910 includes a processor such as a CPU, and a memory such as a RAM and a ROM. The memory stores programs to be executed by the CPU, program data, EPG data, data acquired via the network, and the like. Programs stored in the memory are read and executed by the CPU when the television apparatus 900 is activated, for example. The CPU controls the operation of the television apparatus 900 according to control signals input from the user interface 911, for example, by executing the programs.

The user interface 911 is connected to the controller 910. The user interface 911 includes buttons and switches for users to operate the television apparatus 900 and a receiving unit for receiving remote control signals, for example. The user interface 911 detects operation by a user via these components, generates a control signal, and outputs the generated control signal to the controller 910.

The bus 912 connects the tuner 902, the demultiplexer 903, the decoder 904, the video signal processor 905, the audio signal processor 907, the external interface 909, and the controller 910 to one another.

In the television apparatus 900 having such a structure, the decoder 904 has the functions of the image decoding devices according to the embodiments described above. Accordingly, reduction in the encoding efficiency may be suppressed at the time of decoding of an image by the television apparatus 900.

<5. Fifth Embodiment>

[Second Application: Portable Telephone Device]

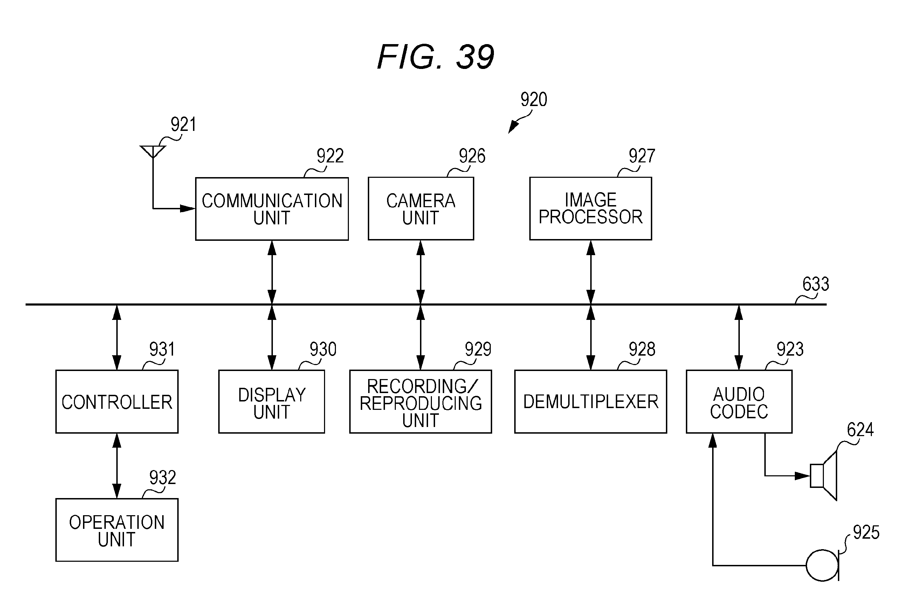

Fig. 39 shows an example of a schematic structure of a portable telephone device to which the embodiments described above are applied. The portable telephone device 920 includes an antenna 921, a communication unit 922, an audio codec 923, a speaker 924, a microphone 925, a camera unit 926, an image processor 927, a demultiplexer 928, a recording/reproducing unit 929, a display unit 930, a controller 931, an operation unit 932, and a bus 933.

The antenna 921 is connected to the communication unit 922. The speaker 924 and the microphone 925 are connected to the audio codec 923. The operation unit 932 is connected to the controller 931. The bus 933 connects the communication unit 922, the audio codec 923, the camera unit 926, the image processor 927, the demultiplexer 928, the recording/reproducing unit 929, the display unit 930, and the controller 931 to one another.

The portable telephone device 920 performs operation such as transmission/reception of audio signals, transmission/reception of electronic mails and image data, capturing of images, recording of data, and the like in various operation modes including a voice call mode, a data communication mode, an imaging mode, and a video telephone mode.

In the voice call mode, an analog audio signal generated by the microphone 925 is supplied to the audio codec 923. The audio codec 923 converts the analog audio signal to audio data, performs A/D conversion on the converted audio data, and compresses the audio data. The audio codec 923 then outputs the audio data resulting from the compression to the communication unit 922. The communication unit 922 encodes and modulates the audio data to generate a signal to be transmitted. The communication unit 922 then transmits the generated signal to be transmitted to a base station (not shown) via the antenna 921. The communication unit 922 also amplifies and performs frequency conversion on a radio signal received via the antenna 921 to obtain a received signal. The communication unit 922 then demodulates and decodes the received signal to generate audio data, and outputs the generated audio data to the audio codec 923. The audio codec 923 decompresses and performs D/A conversion on the audio data to generate an analog audio signal. The audio codec 923 then supplies the generated audio signal to the speaker 924 to output audio therefrom.

In the data communication mode, the controller 931 generates text data to be included in an electronic mail according to operation by a user via the operation unit 932, for example. The controller 931 also displays the text on the display unit 930. The controller 931 also generates electronic mail data in response to an instruction for transmission from a user via the operation unit 932, and outputs the generated electronic mail data to the communication unit 922. The communication unit 922 encodes and modulates the electronic mail data to generate a signal to be transmitted. The communication unit 922 then transmits the generated signal to be transmitted to a base station (not shown) via the antenna 921. The communication unit 922 also amplifies and performs frequency conversion on a radio signal received via the antenna 921 to obtain a received signal. The communication unit 922 then demodulates and decodes the received signal to restore electronic mail data, and outputs the restored electronic mail data to the controller 931. The controller 931 displays the content of the electronic mail on the display unit 930 and stores the electronic mail data into a storage medium of the recording/reproducing unit 929.

The recording/reproducing unit 929 includes a readable/writable storage medium. For example, the storage medium may be an internal storage medium such as a RAM or flash memory, or may be an externally mounted storage medium such as a hard disk, a magnetic disk, a magneto optical disk, a USB (unallocated space bitmap) memory, or a memory card.

In the imaging mode, the camera unit 926 images a subject to generate image data, and outputs the generated image data to the image processor 927, for example. The image processor 927 encodes the image data input from the camera unit 926, and stores an encoded stream in the storage medium of the recording/reproducing unit 929.

In the video telephone mode, the demultiplexer 928 multiplexes a video stream encoded by the image processor 927 and an audio stream input from the audio codec 923, and outputs the multiplexed stream to the communication unit 922, for example. The communication unit 922 encodes and modulates the stream to generate a signal to be transmitted. The communication unit 922 then transmits the generated signal to be transmitted to a base station (not shown) via the antenna 921. The communication unit 922 also amplifies and performs frequency conversion on a radio signal received via the antenna 921 to obtain a received signal. The signal to be transmitted and the received signal may include encoded bit streams. The communication unit 922 then demodulates and decodes the received signal to restore the stream and outputs the restored stream to the demultiplexer 928. The demultiplexer 928 separates a video stream and an audio stream from the input stream, and outputs the video stream to the image processor 927 and the audio stream to the audio codec 923. The image processor 927 decodes the video stream to generate video data. The video data is supplied to the display unit 930, and a series of images is displayed by the display unit 930. The audio codec 923 decompresses and performs D/A conversion on the audio stream to generate an analog audio signal. The audio codec 923 then supplies the generated audio signal to the speaker 924 to output audio therefrom.

In the portable telephone device 920 having such a structure, the image processor 927 has the functions of the image encoding devices and the image decoding devices according to the embodiments described above. Accordingly, reduction in the encoding efficiency may be suppressed at the time of encoding and decoding of an image by the portable telephone device 920.

<6. Sixth Embodiment>

[Third Application: Recording/Reproducing Device]

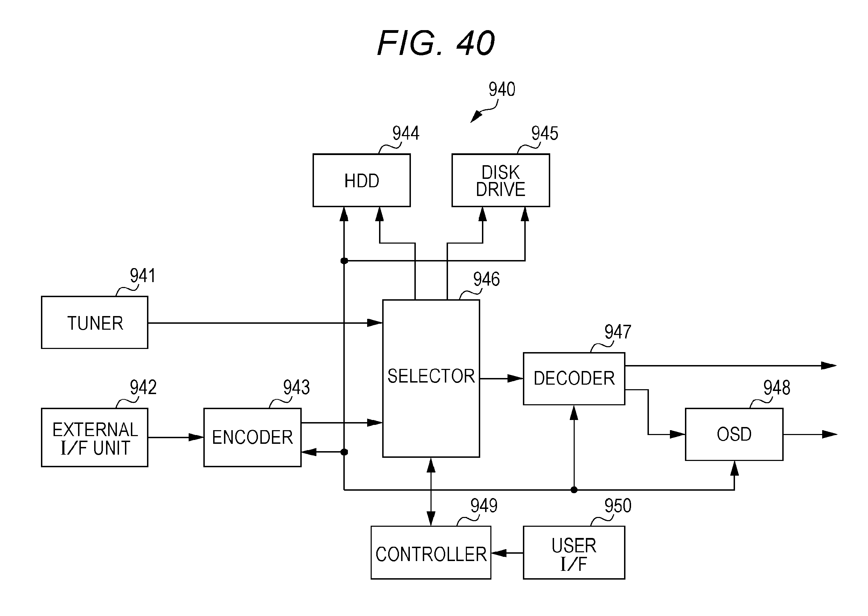

Fig. 40 shows an example of a schematic structure of a recording/reproducing device to which the embodiments described above are applied. The recording/reproducing device 940 encodes audio data and video data of a received broadcast program and records the encoded data into a recording medium, for example. The recording/reproducing device 940 may also encode audio data and video data acquired from another device and record the encoded data into a recording medium, for example. The recording/reproducing device 940 also reproduces data recorded in the recording medium on a monitor and through a speaker in response to an instruction from a user, for example. In this case, the recording/reproducing device 940 decodes audio data and video data.

The recording/reproducing device 940 includes a tuner 941, an external interface 942, an encoder 943, an HDD (hard disk drive) 944, a disk drive 945, a selector 946, adecoder 947, anOSD (on-screen display) 948, a controller 949, and a user interface 950.

The tuner 941 extracts a signal of a desired channel from broadcast signals received via an antenna (not shown), and demodulates the extracted signal. The tuner 941 then outputs an encoded bit stream obtained by the demodulation to the selector 946. That is, the tuner 941 has a role as transmission means in the recording/reproducing device 940.

The external interface 942 is an interface for connecting the recording/reproducing device 940 with an external device or a network. The external interface 942 may be an IEEE 1394 interface, a network interface, a USB interface, or a flash memory interface, for example. For example, video data and audio data received via the external interface 942 are input to the encoder 943. That is, the external interface 942 has a role as transmission means in the recording/reproducing device 940.

The encoder 943 encodes the video data and the audio data if the video data and the audio data input from the external interface 942 are not encoded. The encoder 943 then outputs the encoded bit stream to the selector 946.

The HDD 944 records an encoded bit stream of compressed content data such as video and audio, various programs and other data in an internal hard disk. The HDD 944 also reads out the data from the hard disk for reproduction of video and audio.

The disk drive 945 records and reads out data into/from a recording medium mounted thereon. The recording medium mounted on the disk drive 945 may be a DVD disk (such as a DVD-Video, a DVD-RAM, a DVD-R, a DVD-RW, a DVD+R, or a DVD+RW) or a Blu-ray (registered trademark) disc, for example.

For recording video and audio, the selector 946 selects an encoded bit stream input from the tuner 941 or the encoder 943 and outputs the selected encoded bit stream to the HDD 944 or the disk drive 945. For reproducing video and audio, the selector 946 selects an encoded bit stream input from the HDD 944 or the disk drive 945 to the decoder 947.

The decoder 947 decodes the encoded bit stream to generate video data and audio data. The decoder 947 then outputs the generated video data to the OSD 948. The decoder 904 also outputs the generated audio data to an external speaker.

The OSD 948 reproduces the video data input from the decoder 947 and displays the video. The OSD 948 may also superimpose a GUI image such as a menu, a button or a cursor on the video to be displayed.

The controller 949 includes a processor such as a CPU, and a memory such as a RAM and a ROM. The memory stores programs to be executed by the CPU, program data, and the like. Programs stored in the memory are read and executed by the CPU when the recording/reproducing device 940 is activated, for example. The CPU controls the operation of the recording/reproducing device 940 according to control signals input from the user interface 950, for example, by executing the programs.

The user interface 950 is connected to the controller 949. The user interface 950 includes buttons and switches for users to operate the recording/reproducing device 940 and a receiving unit for receiving remote control signals, for example. The user interface 950 detects operation by a user via these components, generates a control signal, and outputs the generated control signal to the controller 949.

In the recording/reproducing device 940 having such a structure, the encoder 943 has the functions of the image encoding devices according to the embodiments described above. Furthermore, the decoder 947 has the functions of the image decoding devices according to the embodiments described above. Accordingly, reduction in the encoding efficiency may be suppressed at the time of encoding and decoding of an image by the recording/reproducing device 940.

<7. Seventh Embodiment>

[Fourth Application: Imaging Device]

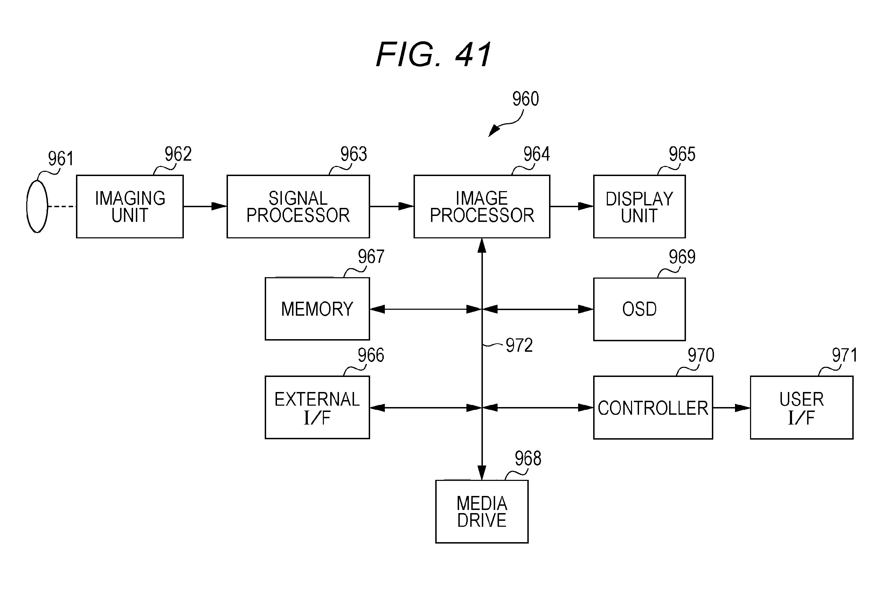

Fig. 41 shows one example of a schematic structure of an imaging device to which the embodiments described above are applied. The imaging device 960 images a subject to generate an image, encodes the image data, and records the encoded image data in a recording medium.

The imaging device 960 includes an optical block 961, an imaging unit 962, a signal processor 963, an image processor 964, a display unit 965, an external interface 966, a memory 967, a media drive 968, an OSD 969, a controller 970, a user interface 971, and a bus 972.

The optical block 961 is connected to the imaging unit 962. The imaging unit 962 is connected to the signal processor 963. The display unit 965 is connected to the image processor 964. The user interface 971 is connected to the controller 970. The bus 972 connects the image processor 964, the external interface 966, the memory 967, the media drive 968, the OSD 969, and the controller 970 to one another.

The optical block 961 includes a focus lens, a diaphragm, and the like. The optical block 961 forms an optical image of a subject on the imaging surface of the imaging unit 962. The imaging unit 962 includes an image sensor such as a CCD (charge coupled device) or a CMOS (complementary metal oxide semiconductor), and converts the optical image formed on the imaging surface into an image signal that is an electric signal through photoelectric conversion. The imaging unit 962 then outputs the image signal to the signal processor 963.

The signal processor 963 performs various kinds of camera signal processing such as knee correction, gamma correction, and color correction on the image signal input from the imaging unit 962. The signal processor 963 outputs image data subjected to the camera signal processing to the image processor 964.

The image processor 964 encodes the image data input from the signal processor 963 to generate encoded data. The image processor 964 then outputs the generated encoded data to the external interface 966 or the media drive 968. The image processor 964 also decodes encoded data input from the external interface 966 or the media drive 968 to generate image data. The image processor 964 then outputs the generated image data to the display unit 965. The image processor 964 may output image data input from the signal processor 963 to the display unit 965 to display images. The image processor 964 may also superimpose data for display acquired from the OSD 969 on the images to be output to the display unit 965.

The OSD 969 may generate a GUI image such as a menu, a button or a cursor and output the generated image to the image processor 964, for example.

The external interface 966 is a USB input/output terminal, for example. The external interface 966 connects the imaging device 960 and a printer for printing of an image, for example. In addition, a drive is connected to the external interface 966 as necessary. A removable medium such as a magnetic disk or an optical disk is mounted to the drive, for example, and a program read out from the removable medium can be installed in the imaging device 960. Furthermore, the external interface 966 may be a network interface connected to a network such as a LAN or the Internet. That is, the external interface 966 has a role as transmission means in the imaging device 960.

The recording medium to be mounted on the media drive 968 may be a readable/writable removable medium such as a magnetic disk, a magneto optical disk, an optical disk or a semiconductor memory. Alternatively, a recording medium may be mounted on the media drive 968 in a fixed manner to form an immobile storage unit such as an internal hard disk drive or an SSD (solid state drive), for example.

The controller 970 includes a processor such as a CPU, and a memory such as a RAM and a ROM. The memory stores programs to be executed by the CPU, program data, and the like. Programs stored in the memory are read and executed by the CPU when the imaging device 960 is activated, for example. The CPU controls the operation of the imaging device 960 according to control signals input from the user interface 971, for example, by executing the programs.

The user interface 971 is connected with the controller 970. The user interface 971 includes buttons and switches for users to operate the imaging device 960, for example. The user interface 971 detects operation by a user via these components, generates a control signal, and outputs the generated control signal to the controller 970.

In the imaging device 960 having such a structure, the image processor 964 has the functions of the image encoding devices and the image decoding devices according to the embodiments described above. Accordingly, reduction in the encoding efficiency may be suppressed at the time of encoding and decoding of an image by the imaging device 960.

Additionally, in the present specification, a case where various types of information, such as a threshold, are multiplexed into the header of an encoded stream and transmitted from the encoding side to the decoding side has been described. The method in which the information pieces are transmitted, however, is not limited to these examples. For example, the information pieces may be transmitted or recorded as separate data associated with the encoded bit stream without being multiplexed with the encoded bit stream. Note that the term "associate" means to allow images (which may be part of images such as slices or blocks) contained in a bit stream to be linkedwith information on the images in decoding. That is, the information may be transmitted via a transmission path different from that for the images (or bit stream). Alternatively, the information may be recorded in a recording medium other than that for the images (or bit stream) (or on a different area of the same recording medium). Furthermore, the information and the images (or bit stream) may be associated with each other in any units such as in units of some frames, one frame or part of a frame.

While preferred embodiments of the present disclosure have been described above with reference to the accompanying drawings, the present disclosure is not limited to these examples. It is apparent that a person ordinary skilled in the art to which the present disclosure belongs can conceive various variations and modifications within the technical idea described in the claims, and it is naturally appreciated that these variations and modification belongs within the technical scope of the present disclosure.

The present technique can also have the following structures.

(1) An image processing device including:

a restrictor for restricting, according to a prediction direction of a focused region of a multi-viewpoint image, use of a correlated region where a candidate for a prediction vector which is a prediction value of a vector of the focused region is to be obtained; and
a prediction vector generator for generating the prediction vector by using a vector of a correlated region whose use is not restricted by the restrictor.

(2) The image processing device according to (1), wherein the restrictor prohibits use of a correlated region of a same view as and a different time from the focused region, for performing prediction in a parallax direction.
(3) The image processing device according to(1) or (2), wherein the restrictor prohibits use of a correlated region of a focused region where prediction is to be performed only in a parallax direction, the correlated region being of a same view as and a different time from the focused region and being for performing prediction in a temporal direction.
(4) The image processing device according to any of (1) to (3), wherein the restrictor prohibits use of a correlated region of a different view from and a same time as the focused region, for performing prediction in a parallax direction.
(5) The image processing device according to any of (1) to (4), wherein the restrictor generates restriction information indicating restriction of the correlated region.
(6) The image processing device according to (5), further including:

a transmitter for transmitting the restriction information generated by the restrictor.

(7) An image processing method of an image processing device, the method including:

restricting, by a restrictor, according to a prediction direction of a focused region of a multi-viewpoint image, use of a correlated region where a candidate for a prediction vector which is a prediction value of a vector of the focused region is to be obtained; and

generating, by a prediction vector generator, the prediction vector by using a vector of a correlated region whose use is not restricted.

(8) An image processing device including:

a receiver for receiving restriction information restricting a correlated region where a candidate for a prediction vector which is a prediction value of a vector of a focused region of a multi-viewpoint image is to be obtained; and

a prediction vector generator for generating the prediction vector by using a vector of a correlated region whose use is not prohibited by the restriction information received by the receiver.

(9) An image processing method of an image processing device, the method including:

receiving, by a receiver, restriction information restricting a correlated region where a candidate for a prediction vector which is a prediction value of a vector of a focused region of a multi-viewpoint image is to be obtained; and

generating, by a prediction vector generator, the prediction vector by using a vector of a correlated region whose use is not prohibited by the restriction information received.

REFERENCE SIGNS LIST

| 100 | Image encoding device |
| 115 | Motion parallax predictor/compensator |
| 121 | Decoded multi-viewpoint picture buffer |
| 122 | Correlated region determiner |
| 131 | Motion parallax vector searcher |
| 132 | Predicted image generator |
| 133 | Encoding information accumulation buffer |
| 134 | Selector |
| 135 | Spatial correlation prediction vector generator |
| 136 | Temporal parallax correlation prediction vector generator |
| 137 | Selector |
| 138 | Encoding cost calculator |
| 139 | Mode determiner |
| 300 | Image decoding device |
| 312 | Motion parallax compensator |
| 321 | Decoded multi-viewpoint picture buffer |
| 331 | Encoding information accumulation buffer |
| 332 | Selector |
| 333 | Spatial correlation prediction vector generator |
| 334 | Temporal parallax correlation prediction vector generator |
| 335 | Selector |
| 336 | Arithmetic operation unit |
| 337 | Predicted image generator |

**Claims**

1.  An image processing device comprising:

a restrictor for restricting, according to a prediction direction of a focused region of a multi-viewpoint image, use of a correlated region where a candidate for a prediction vector which is a prediction value of a vector of the focused region is to be obtained; and

a prediction vector generator for generating the prediction vector by using a vector of a correlated region whose use is not restricted by the restrictor.

2. The image processing device according to claim 1, wherein the restrictor prohibits use of a correlated region of a same view as and a different time from the focused region, for performing prediction in a parallax direction.

3. The image processing device according to claim 1, wherein the restrictor prohibits use of a correlated region of a focused region where prediction is to be performed only in a parallax direction, the correlated region being of a same view as and a different time from the focused region and being for performing prediction in a temporal direction.

4. The image processing device according to claim 1, wherein the restrictor prohibits use of a correlated region of a different view from and a same time as the focused region, for performing prediction in a parallax direction.

5. The image processing device according to claim 1, wherein the restrictor generates restriction information indicating restriction of the correlated region.

6. The image processing device according to claim 5, further comprising:

   a transmitter for transmitting the restriction information generated by the restrictor.

7. An image processing method of an image processing device, the method comprising:

   restricting, by a restrictor, according to a prediction direction of a focused region of a multi-viewpoint image, use of a correlated region where a candidate for a prediction vector which is a prediction value of a vector of the focused region is to be obtained; and
   generating, by a prediction vector generator, the prediction vector by using a vector of a correlated region whose use is not restricted.

8. An image processing device comprising:

   a receiver for receiving restriction information restricting a correlated region where a candidate for a prediction vector which is a prediction value of a vector of a focused region of a multi-viewpoint image is to be obtained; and
   a prediction vector generator for generating the prediction vector by using a vector of a correlated region whose use is not prohibited by the restriction information received by the receiver.

9. An image processing method of an image processing device, the method comprising:

   receiving, by a receiver, restriction information restricting a correlated region where a candidate for a prediction vector which is a prediction value of a vector of a focused region of a multi-viewpoint image is to be obtained; and
   generating, by a prediction vector generator, the prediction vector by using a vector of a correlated region whose use is not prohibited by the restriction information received.

**Amended claims under Art. 19.1 PCT**

1. An image processing device comprising:

   a restrictor for restricting use of a correlated region where a candidate for a prediction vector which is a prediction value of a vector of a focused region is to be obtained, the correlated region being of a same view as and a different time from the focused region; and
   a prediction vector generator for generating the prediction vector by using a vector of a correlated region whose use is not restricted by the restrictor.

2. The image processing device according to claim 1, wherein the restrictor prohibits use of the correlated region according to a prediction direction of a focused region of a multi-viewpoint image.

3. The image processing device according to claim 2, wherein the restrictor prohibits use of a correlated region which is of a same view as and a different time from a focused region and which is for performing prediction in a temporal direction, the correlated region being a correlated region of the focused region where prediction is to be performed only in a parallax direction.

**4.** The image processing device according to claim 1, wherein the restrictor prohibits use of a correlated region of a different view from and a same time as the focused region, for performing prediction in a parallax direction.

**5.**
The image processing device according to claim 2, wherein the restrictor generates restriction information indicating restriction of the correlated region.

**6.** The image processing device according to claim 5, further comprising:

a transmitter for transmitting the restriction information generated by the restrictor.

**7.** The image processing device according to claim 1, wherein the restrictor restricts use of the correlated region based on flag data.

**8.** The image processing device according to claim 7, wherein the flag data is transmitted as a sequence parameter set of encoded data including the focused region.

**9.** An image processing method of an image processing device, the method comprising:

restricting, by a restrictor, use of a correlated region where a candidate for a prediction vector which is a prediction value of a vector of a focused region is to be obtained, the correlated region being of a same view as and a different time from the focused region; and
generating, by a prediction vector generator, the prediction vector by using a vector of a correlated region whose use is not restricted.

**10.** An image processing device comprising:

a receiver for receiving restriction information restricting use of a correlated region where a candidate for a prediction vector which is a prediction value of a vector of a focused region is to be obtained, the correlated region being of a same view as and a different time from the focused region; and
a prediction vector generator for generating the prediction vector by using a vector of a correlated region whose use is not restricted by the restriction information received by the receiver.

**11.** An image processing method of an image processing device, the method comprising:

receiving, by a receiver, restriction information restricting use of a correlated region where a candidate for a prediction vector which is a prediction value of a vector of a focused region is to be obtained, the correlated region being of a same view as and a different time from the focused region; and
generating, by a prediction vector generator, the prediction vector by using a vector of a correlated region whose use is not restricted by the restriction information received.

# FIG. 1

EP 2 760 204 A1

PartMode = PART_2Nx2N

PartIdx

| 0 |
|---|

PartMode = PART_2NxN

| 0 |
|---|
| 1 |

PartMode = PART_Nx2N

| 0 | 1 |
|---|---|

PartMode = PART_Nx2N

| 0 | 1 |
|---|---|
| 2 | 3 |

## FIG. 2

PartMode = PART_2NxN

PartMode = PART_Nx2N

PartMode = PART_Nx2N

## FIG. 3

# FIG. 4

| refIdxLX | refIdxLA | refIdxLB | refIdxLC |
|---|---|---|---|
| refIdxLA | x | −1 | −1 |
| refIdxLB | −1 | x | −1 |
| refIdxLC | x | −1 | −1 |
| refIdxLA | x | x | −1 |
| refIdxLA | x | −1 | x |
| refIdxLB | −1 | x | x |
| 0 | −1 | −1 | −1 |
| min(refIdxLB,refIdxLC) | −1 | x | Y |
| min(refIdxLA,refIdxLC) | x | −1 | y |
| min(refIdxLA,refIdxLB) | x | −1 | y |
| min(min(refIdxLA,refIdxLB),refIdxLC) | x | y | z |

# FIG. 5

2. REGION INCLUDING CENTER POSITION
   IS TAKEN AS colPU

colPU

CurrPU

colPU

1. REGION INCLUDING
   BOTTOM RIGHT POSITION
   IS TAKEN AS colPU

CurrPic

colPic

EP 2 760 204 A1

## FIG. 6

1. WHEN SLICE TYPE IS B, AND
   collocated_from_l0_flag IS 0
2. WHEN SLICE TYPE IS P

WHEN SLICE TYPE IS B, AND
collocated_from_l0_flag IS 1

RefPicList0 [0]          CurrPic          RefPicList1 [0]

REFERENCE IMAGE
INDEX 0 OF LIST L0
IS TAKEN AS colPic

REFERENCE IMAGE
INDEX 0 OF LIST L1
IS TAKEN AS colPic

colPic          colPic

EP 2 760 204 A1

# FIG. 7

INTERLACED FLAG IS 1

RefColPic    CurrPic    colPic

POSITION OF REFERENCE IMAGE OF colPic SKIPS CurrPic

POC    RefPicOrderCnt(colPic,RefIdxColLX,LX)    PicOrderCnt(currPic)    PicOrderCnt(colPic)

INTERLACED FLAG IS 0

CurrPic    RefColPic    colPic

POSITION OF REFERENCE IMAGE OF colPic DOES NOT SKIP CurrPic

POC    PicOrderCnt(currPic)    RefPicOrderCnt(colPic,RefIdxColLX,LX)    PicOrderCnt(colPic)

EP 2 760 204 A1

## FIG. 8

A = TEMPORAL DISTANCE BETWEEN FOCUSED PICTURE AND PICTURE REFERRED
TO BY FOCUSED REGION
B = TEMPORAL DISTANCE BETWEEN PICTURE USED IN TEMPORAL CORRELATION AND
PICTURE REFERRED TO BY TEMPORALLY CORRELATED REGION

mvCol = MOTION VECTOR OF TEMPORALLY CORRELATED REGION
pmv   = PREDICTION VECTOR OF FOCUSED REGION

WHEN A AND B ARE EQUAL        $pmv = mvCol$

WHEN A AND B ARE NOT EQUAL    $pmv = mvCol * A/B$

PICTURE REFERRED       PICTURE REFERRED                                  PICTURE USED
TO BY FOCUSED          TO BY TEMPORALLY                                  IN TEMPORAL
REGION                 CORRELATED REGION        FOCUSED REGION           CORRELATION

EP 2 760 204 A1

# FIG. 9

# FIG. 10

A = TEMPORAL DISTANCE BETWEEN FOCUSED PICTURE AND PICTURE REFERRED TO BY FOCUSED REGION

B = TEMPORAL DISTANCE BETWEEN FOCUSED PICTURE AND PICTURE REFERRED TO BY SPATIALLY CORRELATED REGION

mvArr = MOTION VECTOR OF SPATIALLY CORRELATED REGION

pmv = PREDICTION VECTOR OF FOCUSED REGION

WHEN A AND B ARE EQUAL $\quad$ pmv = mvArr

WHEN A AND B ARE NOT EQUAL $\quad$ pmv = mvArr * A/B

PICTURE REFERRED TO BY FOCUSED REGION

PICTURE REFERRED TO BY SPATIALLY CORRELATED REGION

FOCUSED REGION

mvArr

B

A

# FIG. 11

| PicNum | 0 | 5 | 3 | 6 | 2 | 7 | 4 | 8 | 1 |
|--------|---|---|---|---|---|---|---|---|---|
| POC    | 0 | 1 | 2 | 3 | 4 | 5 | 6 | 7 | 8 |

view_id=0: I  B2  B1  B2  B0  B2  B1  B2  P

view_id=1: I  B2  B1  B2  B0  B2  B1  B2  P

view_id=2: I  B2  B1  B2  B0  B2  B1  B2  P

EP 2 760 204 A1

## FIG. 12

EP 2 760 204 A1

## FIG. 13

SPATIALLY CORRELATED
REGION MAY REFER
TO DIFFERENT VIEW

PICTURE REFERRED
TO BY SPATIALLY
CORRELATED REGION

PICTURE REFERRED
TO BY FOCUSED
REGION

USE OF SPATIALLY CORRELATED
REGION IN A CASE WHERE
REFERENCE IMAGE INDEX IS
DIFFERENT IS PROHIBITED

mvArr

FOCUSED PICTURE

B = 0?

A

TEMPORAL DISTANCE
IS 0, AND CORRECT
SCALING IS NOT POSSIBLE

EP 2 760 204 A1

# FIG. 14

EP 2 760 204 A1

**FIG. 15**

EP 2 760 204 A1

# FIG. 16

| FOCUSED REGION | TEMPORALLY CORRELATED REGION | TEMPORALLY CORRELATED REGION USE RESTRICTION FLAG |
|---|---|---|
| TEMPORAL PREDICTION | PARALLAX PREDICTION | 1 |
| PARALLAX PREDICTION | PARALLAX PREDICTION | 1 |
| TEMPORAL PREDICTION/ PARALLAX PREDICTION | PARALLAX PREDICTION | 1 |
| TEMPORAL PREDICTION | TEMPORAL PREDICTION | 0 |
| PARALLAX PREDICTION | TEMPORAL PREDICTION | 1 |
| TEMPORAL PREDICTION/ PARALLAX PREDICTION | TEMPORAL PREDICTION | 0 |
| TEMPORAL PREDICTION | TEMPORAL PREDICTION/ PARALLAX PREDICTION | 1 |
| PARALLAX PREDICTION | TEMPORAL PREDICTION/ PARALLAX PREDICTION | 1 |
| TEMPORAL PREDICTION/ PARALLAX PREDICTION | TEMPORAL PREDICTION/ PARALLAX PREDICTION | 1 |

| FOCUSED REGION | SPATIALLY CORRELATED REGION USE RESTRICTION FLAG |
|---|---|
| TEMPORAL PREDICTION | 0 |
| PARALLAX PREDICTION | 1 |
| TEMPORAL PREDICTION/ PARALLAX PREDICTION | 1 |

# FIG. 17

| seq_parameter_set_rbsp() { | Descriptor |
|---|---|
| profile_idc | u(8) |
| reserved_zero_8bits /* equal to0 */ | u(8) |
| level_idc | u(8) |
| seq_parameter_set_id | ue(v) |
| pic_width_in_luma_samples | u(16) |
| pic_height_in_luma_samples | u(16) |
| bit_depth_luma_minus8 | ue(v) |
| bit_depth_chroma_minus8 | ue(v) |
| log2_max_frame_num_minus4 | ue(v) |
| pic_order_cnt_type | ue(v) |
| if(pic_order_cnt_type= = 0 ) | |
|    log2_max_pic_order_cnt_lsb_minus4 | ue(v) |
| else if(pic_order_cnt_type  = = 1 ) { | |
|    delta_pic_order_always_zero_flag | u(1) |
|    offset_for_non_ref_pic | se(v) |
|    num_ref_frames_in_pic_order_cnt_cycle | ue(v) |
|    for( i = 0; i <num_ref_frames_in_pic_order_cnt_cycle; i++ ) | |
|      offset_for_ref_frame[ i ] | se(v) |
|    } | |
| max_num_ref_frames | ue(v) |
| gaps_in_frame_num_value_allowed_flag | u(1) |
| log2_min_coding_block_size_minus3 | ue(v) |
| log2_diff_max_min_coding_block_size | ue(v) |
| log2_min_transform_block_size_minus2 | ue(v) |
| log2_diff_max_min_transform_block_size | ue(v) |
| max_transform_hierarchy_depth_inter | ue(v) |
| max_transform_hierarchy_depth_intra | ue(v) |
| adaptive_ loop_filter_enabled_flag | u(1) |
| cu_qp_delta_enabled_flag | u(1) |
| num_views | |
| for(i=0;i< num_views ;i++){ | |
|    view_id [ i ] | |
|    num_ref_views_l0[ i ]<br>   for(j=0;j<num_ref_views_l0[ i ];j++) | |
|      ref_view_id_l0[ i ][ j ] | |
|    num_ref_views_l1[ i ]<br>   for(j=0;j<num_ref_views_l1[ i ];j++) | |
|      ref_view_id_l1[ i ][ j ] | |
|    } | |
| rbsp_trailing_bits () | |
| } | |

TOTAL NUMBER OF VIEWS

ID FOR IDENTIFYING VIEW

NUMBER OF PIECES FOR PARALLAX PREDICTION IN LIST L0

ID OF VIEW TO BE REFERRED TO IN PARALLAX PREDICTION IN LIST L0

NUMBER OF PIECES FOR PARALLAX PREDICTION IN LIST L1

ID OF VIEW TO BE REFERRED TO IN PARALLAX PREDICTION IN LIST L1

*FIG. 18*

| slice_header ( ) { | Descriptor |
|---|---|
| first_tb_in_slice | ue(v) |
| entropy_slice_flag | u(1) |
| if( !entropy_slice_flag) { | |
| slice_type | ue(v) |
| pic_parameter_set_id | ue(v) |
| frame_num | u(v) |
| if( IdrPicFlag) | |
| idr_pic_id | ue(v) |
| if( pic_order_cnt_type = = 0 ) | |
| pic_order_cnt_lsb   /* | u(v) |
| if(slice_type= = P \| \|slice_type= = B ) { | |
| num_ref_idx_active_override_flag | u(1) |
| if(num_ref_idx_active_override_flag) { | |
| num_ref_idx_l0_active_minus1 | ue(v) |
| if(slice_type= = B ) | |
| num_ref_idx_l1_active_minus1 | ue(v) |
| } | |
| } | |
| ref_pic_list_modification( ) | |
| ref_pic_list_combination( ) | |
| if(nal_ref_idc!= 0 ) | |
| dec_ref_pic_marking() | |
| if(entropy_coding_mode_flag && slice_type != I) | |
| cabac_init_idc | ue(v) |
| slice_qp_delta | se(v) |
| if( adaptive_loop_filter_enabled_flag) | |
| alf_param() | |
| if(deblocking_filter_control_present_flag) { | |
| disable_deblocking_filter_idc | |
| if(disable_deblocking_filter_idc!= 1 ) { | |
| slice_alpha_c0_offset_div2 | |
| slice_beta_offset_div2 | |
| } | |
| } | |
| collocated_restrict_flag | u(1) |
| if(collocated_restrict_flag == 0) { | |
| if(slice_type= = B ) | |
| collocated_from_l0_flag | u(1) |
| } | |
| spatial_predict_restrict_flag | |
| } else | |
| if(entropy_coding_mode_flag&&slice_type!= I) | |
| cabac_init_idc | ue(v) |
| } | |

USE OF TEMPORALLY CORRELATED REGION IS RESTRICTED

USE OF SPATIALLY CORRELATED REGION IN A CASE WHERE REFERENCE IMAGE INDEX IS DIFFERENT IS RESTRICTED

# FIG. 19

ENCODING PROCESS START

PERFORM A/D CONVERSION — S101

PERFORM REORDERING — S102

PERFORM INTRA PREDICTION PROCESS — S103

INTER MOTION PREDICTION PROCESS — S104

SELECT PREDICTED IMAGE — S105

COMPUTE DIFFERENCE BETWEEN IMAGE AND PREDICTED IMAGE — S106

PERFORM ORTHOGONAL TRANSFORM — S107

PERFORM QUANTIZATION — S108

PERFORM INVERSE QUANTIZATION — S109

PERFORM INVERSE ORTHOGONAL TRANSFORM — S110

ADD PREDICTED IMAGE — S111

PERFORM LOOP FILTERING PROCESS — S112

STORE — S113

PERFORM LOSSLESS ENCODING PROCESS — S114

ACCUMULATE — S115

CONTROL RATE — S116

END

## FIG. 20

```
         ┌─────────────────────────────┐
         │  INTER MOTION PREDICTION     │
         │      PROCESS START           │
         └─────────────────────────────┘
                      │
                      ▼
         ┌─────────────────────────────┐ S121
         │   PERFORM RESTRICTION        │
         │   DETERMINATION PROCESS      │
         └─────────────────────────────┘
                      │
                      ▼
         ┌─────────────────────────────┐ S122
         │    PERFORM MOTION SEARCH     │
         └─────────────────────────────┘
                      │
                      ▼
         ┌─────────────────────────────┐ S123
         │   GENERATE PREDICTED IMAGE   │
         └─────────────────────────────┘
                      │
                      ▼
         ┌─────────────────────────────┐ S124
         │   GENERATE DIFFERENCE IMAGE  │
         └─────────────────────────────┘
                      │
                      ▼
         ┌─────────────────────────────┐ S125
         │  PERFORM MERGE MODE PROCESS  │
         └─────────────────────────────┘
                      │
                      ▼
              ◁ MERGE MODE? ▷─────── S126
                      │ No      Yes
                      ▼
         ┌─────────────────────────────┐ S127
         │   PERFORM PARALLAX MOTION    │
         │ VECTOR PREDICTION PROCESS    │
         └─────────────────────────────┘
                      │◄─────────────
                      ▼
        ◁ PROCESS PERFORMED IN ALL ▷  S128
   No   ◁  INTER PREDICTION MODES? ▷
                      │ Yes
                      ▼
         ┌─────────────────────────────┐ S129
         │ CALCULATE COST FUNCTION VALUE│
         └─────────────────────────────┘
                      │
                      ▼
         ┌─────────────────────────────┐ S130
         │    DECIDE OPTIMAL INTER      │
         │     PREDICTION MODE          │
         └─────────────────────────────┘
                      │
                      ▼
         ┌─────────────────────────────┐ S131
         │  GENERATE PREDICTED IMAGE IN │
         │ OPTIMAL INTER PREDICTION MODE│
         └─────────────────────────────┘
                      │
                      ▼
         ┌─────────────────────────────┐ S132
         │   STORE MOTION INFORMATION   │
         └─────────────────────────────┘
                      │
                      ▼
              ┌──────────────┐
              │    RETURN     │
              └──────────────┘
```

## FIG. 21

LIMITLESS DETERMINATION PROCESS START

ACQUIRE REFERENCE IMAGE OF FOCUSED REGION — S141

ACQUIRE REFERENCE IMAGE OF TEMPORALLY CORRELATED REGION — S142

PARALLAX PREDICTION IS TO BE PERFORMED IN TEMPORALLY CORRELATED REGION? — S143

No

ONLY PARALLAX PREDICTION IS TO BE PERFORMED IN FOCUSED REGION? — S145

Yes

No

Yes

SET TEMPORALLY CORRELATED REGION USE RESTRICTION FLAG TO 1 — S144

SET TEMPORALLY CORRELATED REGION USE RESTRICTION FLAG TO 0 — S146

PARALLAX PREDICTION IS TO BE PERFORMED IN FOCUSED REGION? — S147

No

Yes

SET SPATIALLY CORRELATED REGION USE RESTRICTION FLAG TO 0 — S148

SET SPATIALLY CORRELATED REGION USE RESTRICTION FLAG TO 1 — S149

RETURN

EP 2 760 204 A1

## FIG. 22

```
( MERGE MODE PROCESS START )
              │
              ▼
┌──────────────────────────┐  S161
│    SPATIAL CORRELATION    │
│    PREDICTION PROCESS     │
└──────────────────────────┘
              │
              ▼
┌──────────────────────────┐  S162
│    TEMPORAL PARALLAX      │
│      CORRELATION          │
│    PREDICTION PROCESS     │
└──────────────────────────┘
              │
              ▼
┌──────────────────────────┐  S163
│  REMOVE OVERLAPPING VECTOR │
└──────────────────────────┘
              │
              ▼
        S164
   < VECTOR EXISTS? >──── No ──────────────┐
              │                            │
            Yes                            ▼
              │                  ┌──────────────────────────┐  S169
              ▼                  │ ASSIGN INITIAL VALUE (0) TO │
        S165                     │    PREDICTION VECTOR       │
   <  PLURALITY OF  >── No ──┐   └──────────────────────────┘
   < VECTORS EXISTS? >       │              │
              │              │              ▼
            Yes              │   ┌──────────────────────────┐  S170
              ▼  S166        │   │ ASSIGN INITIAL VALUE (0) TO │
┌──────────────────────┐    │   │   REFERENCE IMAGE INDEX    │
│   ACQUIRE MERGE INDEX  │    │   └──────────────────────────┘
└──────────────────────┘    │              │
              │◄────────────┘              │
              ▼  S167                      │
┌──────────────────────┐                  │
│ ACQUIRE PREDICTION VECTOR │              │
└──────────────────────┘                  │
              ▼  S168                      │
┌──────────────────────────┐              │
│ ACQUIRE REFERENCE IMAGE INDEX │          │
└──────────────────────────┘              │
              │◄──────────────────────────┘
              ▼
         ( RETURN )
```

## FIG. 23

```
        ( SPATIAL CORRELATION      )
        ( PREDICTION PROCESS START )
                    │
                    ▼
      < SPATIALLY CORRELATED REGION >──── NO
      < USE RESTRICTION FLAG IS 0?  >
                  │ YES
                  ▼
        ┌─────────────────────────┐
        │   SEQUENTIALLY SELECT    │
        │  PERIPHERAL REGIONS A TO D│
        └─────────────────────────┘
                    │
                    ▼
      < PREDICTION MODE OF FOCUSED          >──── NO
      < PERIPHERAL REGION IS INTER PREDICTION? >
                  │ YES
                  ▼
  NO ── < PARTITION MODE IS 2N × N, AND >
        < INDEX OF FOCUSED REGION IS 1? >
                  │ YES
                  ▼
        < MOTION INFORMATION SAME AS THAT >──── YES
        < OF PERIPHERAL REGION B IS HELD? >
                  │ NO
                  ▼
  NO ── < PARTITION MODE IS N × 2N, AND >
        < INDEX OF FOCUSED REGION IS 1? >
                  │ YES
                  ▼
        < MOTION INFORMATION SAME AS THAT >──── YES
        < OF PERIPHERAL REGION A IS HELD? >
                  │ NO
                  ▼
  NO ── < PARTITION MODE IS N × N, AND >
        < INDEX OF FOCUSED REGION IS 3? >
                  │ YES
                  ▼
        < PERIPHERAL REGION X AND PERIPHERAL    >──── YES
        < REGION A HAVE SAME MOTION INFORMATION, >
        < AND SAME MOTION INFORMATION AS THAT    >
        < OF PERIPHERAL REGION B IS HELD?        >
                  │ NO
                  ▼
        < PERIPHERAL REGION X AND PERIPHERAL    >──── YES
        < REGION B HAVE SAME MOTION INFORMATION, >
        < AND SAME MOTION INFORMATION AS THAT    >
        < OF PERIPHERAL REGION A IS HELD?        >
                  │ NO
                  ▼
        ┌─────────────────────────┐      ┌──────────────────────────┐
        │  HOLD MOTION VECTOR OF   │      │ REMOVE FOCUSED PERIPHERAL │
        │ FOCUSED PERIPHERAL REGION│      │ REGION FROM CANDIDATES    │
        └─────────────────────────┘      └──────────────────────────┘
                    │
                    ▼
        ┌─────────────────────────┐      < FOCUSED PERIPHERAL REGION >──── NO
        │ HOLD REFERENCE IMAGE INDEX│     < IS PERIPHERAL REGION D?   >
        │ OF FOCUSED PERIPHERAL REGION│              │ YES
        └─────────────────────────┘                 ▼
                    │                          (  RETURN  )
                    └──────────────────────────────┘
```

## FIG. 24

```
   ( TEMPORAL PARALLAX CORRELATION )
   (   PREDICTION PROCESS START   )
                  │
                  ▼
                                                    S201
   ╱ TEMPORALLY CORRELATED REGION ╲
   ╲  USE RESTRICTION FLAG IS 0?  ╱────────────────────────┐
                  │ YES           NO                        │
                  ▼                                         │
   ┌─────────────────────────────┐ S202                    │
   │      DECIDE REFERENCE IMAGE  │                         │
   │      INDEX OF FOCUSED REGION │                         │
   └─────────────────────────────┘                         │
                  │                                         │
                  ▼                                         │
   ┌─────────────────────────────────┐ S203                │
   │ DECIDE PICTURE WITH RESPECT TO WHICH │                 │
   │ MOTION INFORMATION IS TO BE PREDICTED │                │
   └─────────────────────────────────┘                     │
                  │                                         │
                  ▼                                         │
   ┌─────────────────────────────────┐ S204                │
   │ DECIDE REGION WITH RESPECT TO WHICH  │                 │
   │ MOTION INFORMATION IS TO BE PREDICTED │                │
   └─────────────────────────────────┘                     │
                  │                                         │
                  ▼                                         │
                                          S205              │
   ╱      FOCUSED CORRELATED      ╲                         │
   ╲ REGION IS INTRA-PREDICTED, OR ╱───────┐                │
   ╲  REFERENCE IS IMPOSSIBLE?    ╱  YES    │               │
                  │ NO                      ▼               │
                  ▼              S207       ┌──────────────────────────┐ S206
   ╱      FOCUSED CORRELATED      ╲         │ REMOVE FOCUSED CORRELATED │
   │NO╲ REGION IS L1 REFERENCE?   ╱         │ REGION FROM CANDIDATES   │
   │       │ YES                            └──────────────────────────┘
   │       ▼                                         │
   │  ┌─────────────────────────┐ S208              │
   │  │   ACQUIRE MOTION VECTOR  │                   │
   │  └─────────────────────────┘                   │
   │       │                                         │
   │       ▼                                         │
   │  ┌─────────────────────────┐ S209              │
   │  │ ACQUIRE REFERENCE IMAGE INDEX │              │
   │  └─────────────────────────┘                   │
   │       │                                         │
   │       ▼                                         │
   │  ┌─────────────────────────┐ S210              │
   │  │ DECIDE POSITIONAL RELATIONSHIP │             │
   │  │    FLAG OF REFERENCE IMAGE    │              │
   │  └─────────────────────────┘                   │
   │       │                                         │
   └───────┤                                         │
           ▼                          S211           │
   ╱      FOCUSED CORRELATED      ╲                  │
   │NO╲ REGION IS L1 REFERENCE?   ╱                  │
   │       │ YES                                     │
   │       ▼                                         │
   │  ┌─────────────────────────┐ S212              │
   │  │   ACQUIRE MOTION VECTOR  │                  ( 2 )────┐
   │  └─────────────────────────┘                   │       │
   │       │                                         │       │
   │       ▼                                         │       │
   │  ┌─────────────────────────┐ S213              │       │
   │  │ ACQUIRE REFERENCE IMAGE INDEX │              │       │
   │  └─────────────────────────┘                   │       │
   │       │                                         │       │
   │       ▼                                         │       │
   │  ┌─────────────────────────┐ S214              │       │
   │  │ DECIDE POSITIONAL RELATIONSHIP │             │       │
   │  │    FLAG OF REFERENCE IMAGE    │              │       │
   │  └─────────────────────────┘                   │       ▼
   └───────┤                                         │   ( RETURN )
           ▼
         ( 1 )
```

## FIG. 25

①

ONLY POSITIONAL RELATIONSHIP
FLAG OF L1 IS 1, OR POSITIONAL
RELATIONSHIP FLAGS OF L0/L1 ARE SAME
AND THERE IS REFERENCE TO L1?  S221

NO

YES

ACQUIRE MOTION VECTOR
OF L1 REFERENCE  S222

ACQUIRE MOTION VECTOR
OF L0 REFERENCE  S224

ACQUIRE REFERENCE IMAGE
INDEX OF L1 REFERENCE  S223

ACQUIRE REFERENCE IMAGE
INDEX OF L0 REFERENCE  S225

CALCULATE
PREDICTION VECTOR  S226

②

## FIG. 26

```
┌──────────────────────────────────┐
│   PARALLAX MOTION VECTOR          │
│ PREDICTION PROCESS START          │
└──────────────────────────────────┘
                │
                ▼
┌──────────────────────────────────┐  S231
│     SPATIAL CORRELATION           │
│     PREDICTION PROCESS            │
└──────────────────────────────────┘
                │
                ▼
┌──────────────────────────────────┐  S232
│ TEMPORAL PARALLAX CORRELATION     │
│     PREDICTION PROCESS            │
└──────────────────────────────────┘
                │
                ▼
┌──────────────────────────────────┐  S233
│   REMOVE OVERLAPPING VECTOR       │
└──────────────────────────────────┘
                │
                ▼
┌──────────────────────────────────┐  S234
│ ACQUIRE PREDICTION VECTOR INDEX   │
└──────────────────────────────────┘
                │
                ▼
┌──────────────────────────────────┐  S235
│   ACQUIRE PREDICTION VECTOR       │
└──────────────────────────────────┘
                │
                ▼
         ┌──────────────┐
         │    RETURN     │
         └──────────────┘
```

## FIG. 27

```
┌──────────────────────────────────┐
│     SPATIAL CORRELATION           │
│  PREDICTION PROCESS START         │
└──────────────────────────────────┘
                │
                ▼
┌──────────────────────────────────┐  S241
│  PERIPHERAL REGION A MOTION       │
│  VECTOR PREDICTION PROCESS        │
└──────────────────────────────────┘
                │
                ▼
┌──────────────────────────────────┐  S242
│   PERIPHERAL BLOCK B MOTION       │
│   VECTOR PREDICTION PROCESS       │
└──────────────────────────────────┘
                │
                ▼
         ┌──────────────┐
         │    RETURN     │
         └──────────────┘
```

# FIG. 28

```
        ╭─────────────────────────────────────────╮
        │   PERIPHERAL REGION A MOTION            │
        │  VECTOR PREDICTION PROCESS START        │
        ╰─────────────────────────────────────────╯
                          │
                          ▼
        ┌─────────────────────────────────────────┐  S251
        │ SEQUENTIALLY SELECT PERIPHERAL REGIONS A0 AND A1 │
        └─────────────────────────────────────────┘
                          │
                          ▼                                    S252
        ╱─────────────────────────────────────────╲
       ╱  FOCUSED PERIPHERAL REGION CAN BE REFERRED TO, ╲
      ╱    FOCUSED PERIPHERAL REGION IS NON-INTRA,       ╲  YES
      ╲   AND REFERENCE LIST AND REFERENCE IMAGE INDEX   ╱──────
       ╲    ARE SAME AS THOSE OF FOCUSED REGION?        ╱
        ╲─────────────────────────────────────────╱
                          │ NO
                          ▼                          S256
            ╱──────────────────────────────────╲
        NO ╱  FOCUSED PERIPHERAL REGION IS A1?   ╲
       ────╲──────────────────────────────────╱
                          │ YES
                          ▼
        ┌─────────────────────────────────────────┐  S257
        │ SEQUENTIALLY SELECT PERIPHERAL REGIONS A0 AND A1 │
        └─────────────────────────────────────────┘
                          │
                          ▼                                    S258
        ╱─────────────────────────────────────────╲
       ╱  FOCUSED PERIPHERAL REGION CAN BE REFERRED TO, ╲
      ╱ FOCUSED PERIPHERAL REGION IS NON-INTRA, REFERENCE LIST IS ╲  YES
      ╲ DIFFERENT FROM THAT OF FOCUSED REGION, REFERENCE IMAGE ╱──────
       ╲ INDEX IS SAME AS THAT OF FOCUSED REGION, AND SPATIALLY ╱
        ╲  CORRELATED REGION USE RESTRICTION FLAG IS 0?  ╱
         ╲─────────────────────────────────────────╱
                          │ NO
                          ▼                                    S259
        ╱─────────────────────────────────────────╲
       ╱  FOCUSED PERIPHERAL REGION CAN BE REFERRED TO, ╲
      ╱  FOCUSED PERIPHERAL REGION IS NON-INTRA, REFERENCE ╲  YES
      ╲  LIST IS SAME AS THAT OF FOCUSED REGION, AND SPATIALLY ╱──────
       ╲   CORRELATED REGION USE RESTRICTION FLAG IS 0?  ╱
        ╲─────────────────────────────────────────╱
                          │ NO
                          ▼                                    S260
        ╱─────────────────────────────────────────╲
       ╱  FOCUSED PERIPHERAL REGION CAN BE REFERRED TO, ╲
      ╱ FOCUSED PERIPHERAL REGION IS NON-INTRA, REFERENCE LIST IS ╲  YES
      ╲ DIFFERENT FROM THAT OF FOCUSED REGION, AND SPATIALLY ╱──────
       ╲   CORRELATED REGION USE RESTRICTION FLAG IS 0?  ╱
        ╲─────────────────────────────────────────╱
                          │ NO                    S261
            ╱──────────────────────────────────╲
        NO ╱  FOCUSED PERIPHERAL REGION IS A1?   ╲
       ────╲──────────────────────────────────╱
                          │ YES
```

S253
ACQUIRE PREDICTION VECTOR

S254
ACQUIRE REFERENCE INDEX

S255
CALCULATE PREDICTION VECTOR

RETURN

## FIG. 29

```
PERIPHERAL REGION B MOTION
VECTOR PREDICTION PROCESS START
```

SEQUENTIALLY SELECT PERIPHERAL REGIONS B0, B1 AND B2 — S271

S272
FOCUSED PERIPHERAL REGION CAN BE REFERRED TO,
FOCUSED PERIPHERAL REGION IS NON-INTRA,
AND REFERENCE LIST AND REFERENCE IMAGE INDEX
ARE SAME AS THOSE OF FOCUSED REGION? — YES

NO

S276
FOCUSED PERIPHERAL REGION IS B2? — NO

YES

SEQUENTIALLY SELECT PERIPHERAL REGIONS B0, B1 AND B2 — S277

S278
FOCUSED PERIPHERAL REGION CAN BE REFERRED TO,
FOCUSED PERIPHERAL REGION IS NON-INTRA, REFERENCE LIST IS
DIFFERENT FROM THAT OF FOCUSED REGION, REFERENCE IMAGE
INDEX IS SAME AS THAT OF FOCUSED REGION, AND SPATIALLY
CORRELATED REGION USE RESTRICTION FLAG IS 0? — YES

NO

S279
FOCUSED PERIPHERAL REGION CAN BE REFERRED TO,
FOCUSED PERIPHERAL REGION IS NON-INTRA, REFERENCE
LIST IS SAME AS THAT OF FOCUSED REGION, AND SPATIALLY
CORRELATED REGION USE RESTRICTION FLAG IS 0? — YES

NO

S280
FOCUSED PERIPHERAL REGION CAN BE REFERRED TO,
FOCUSED PERIPHERAL REGION IS NON-INTRA, REFERENCE LIST IS
DIFFERENT FROM THAT OF FOCUSED REGION, AND SPATIALLY
CORRELATED REGION USE RESTRICTION FLAG IS 0? — YES

NO

S281
FOCUSED PERIPHERAL REGION IS B2? — NO

YES

S273
ACQUIRE PREDICTION VECTOR

S274
ACQUIRE REFERENCE INDEX

S275
CALCULATE PREDICTION VECTOR

RETURN

# FIG. 30

IMAGE COMPRESSION INFORMATION → 301 ACCUMULATION BUFFER → 302 LOSSLESS DECODER → 303 INVERSE QUANTIZER → 304 INVERSE ORTHOGONAL TRANSFORMER → 305 (+) → 304 LOOP FILTER → 307 FRAME REORDERING BUFFER → 308 D/A CONVERTER → OUTPUT SIGNAL

311 INTRA PREDICTOR
310
313
312 MOTION PARALLAX COMPENSATOR

DECODED IMAGE OF ENCODED VIEWPOINT

DECODED PICTURE BUFFER — 309

DECODED IMAGE OF ENCODED VIEWPOINT

TEMPORALLY CORRELATED REGION USE RESTRICTION FLAG
SPATIALLY CORRELATED REGION USE RESTRICTION FLAG

DECODED IMAGE OF VIEWPOINT OTHER THAN ENCODED VIEWPOINT

DECODED MULTI-VIEWPOINT PICTURE BUFFER — 321

300

EP 2 760 204 A1

FIG. 31

# FIG. 32

DECODING PROCESS START

ACCUMULATE IMAGE — S301

PERFORM LOSSLESS DECODING PROCESS — S302

PERFORM INVERSE QUANTIZATION — S303

PERFORM INVERSE ORTHOGONAL TRANSFORM — S304

PERFORM PREDICTION PROCESS — S305

ADD PREDICTED IMAGE — S306

PERFORM LOOP FILTERING PROCESS — S307

PERFORM REORDERING — S308

PERFORM D/A CONVERSION — S309

STORE — S310

END

# FIG. 33

```
        ⟮ PREDICTION
        PROCESS START ⟯
               │
               ▼                           S331
        ⟨ INTRA-ENCODED? ⟩─────────────────────┐
               │                   No           │
             Yes│ S332                          ▼           S334
               ▼                        ┌──────────────────────┐
    ┌──────────────────────┐            │       PERFORM        │
    │ ACQUIRE INTRA PREDICTION│          │   MOTION PARALLAX    │
    │   MODE INFORMATION    │            │ COMPENSATION PROCESS │
    └──────────────────────┘            └──────────────────────┘
               │ S333                          │
               ▼                               │
    ┌──────────────────────┐                   │
    │      GENERATE        │                   │
    │   PREDICTED IMAGE     │                   │
    └──────────────────────┘                   │
               │◄──────────────────────────────┘
               ▼
        ⟮ RETURN ⟯
```

# FIG. 34

```
    ⟮    MOTION PARALLAX       ⟯
    ⟮ COMPENSATION PROCESS START ⟯
               │
               ▼
    ┌──────────────────────────┐  S351
    │    STORE PREDICTION      │
    │ INFORMATION AND THE LIKE │
    └──────────────────────────┘
               │
               ▼
    ┌──────────────────────────┐  S352
    │    GENERATE MOTION       │
    │    PARALLAX VECTOR       │
    └──────────────────────────┘
               │
               ▼
    ┌──────────────────────────┐  S353
    │  GENERATE PREDICTED IMAGE │
    └──────────────────────────┘
               │
               ▼
        ⟮ RETURN ⟯
```

# FIG. 35

MOTION PARALLAX VECTOR
GENERATION PROCESS START

S371
SKIP MODE? — No

Yes

S373
MERGE MODE? — Yes

No

S372
MERGE MODE PROCESS

S374
ACQUIRE INDEX OF
REFERENCE IMAGE

S375
ACQUIRE DIFFERENCE
MOTION PARALLAX VECTOR

S376
MOTION
PARALLAX VECTOR
PREDICTION PROCESS

S377
ADD PREDICTION VALUE OF
MOTION PARALLAX VECTOR
AND DIFFERENCE VALUE

RETURN

## FIG. 36

## FIG. 37

## FIG. 38

## FIG. 39

EP 2 760 204 A1

## FIG. 40

EP 2 760 204 A1

EP 2 760 204 A1

## FIG. 41

**INTERNATIONAL SEARCH REPORT**

| International application No. |
| --- |
| PCT/JP2012/065818 |

A. CLASSIFICATION OF SUBJECT MATTER
*H04N7/32*(2006.01)i, *H04N13/00*(2006.01)i

According to International Patent Classification (IPC) or to both national classification and IPC

B. FIELDS SEARCHED

Minimum documentation searched (classification system followed by classification symbols)
H04N7/26-7/68, H04N13/00-15/00

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2009-522986 A  (Thomson Licensing),<br>11 June 2009 (11.06.2009),<br>abstract; paragraphs [0071] to [0081];<br>fig. 5 to 6<br>& WO 2007/081926 A2      & EP 1972144 A1<br>& US 2009/0010323 A1     & KR 10-2008-0092357 A<br>& CN 101366285 A | 1,4-9<br>2-3 |
| Y | JP 2009-510892 A  (Samsung Electronics Co.,<br>Ltd.),<br>12 March 2009 (12.03.2009),<br>abstract; paragraphs [0018] to [0059];<br>fig. 3 to 10<br>& WO 2007/037645 A1      & US 2007/0071107 A1<br>& KR 10-2007-0036611 A   & CN 101248671 A | 2-3 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    07 September, 2012 (07.09.12) | Date of mailing of the international search report<br>    18 September, 2012 (18.09.12) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/065818

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-537484 A (Thomson Licensing), 02 December 2010 (02.12.2010), paragraphs [0002] to [0084]; fig. 1 to 8 & WO 2009/023091 A2 & EP 2177036 A2 & US 2010/0158129 A1 & CN 101785317 A & TW 200915228 A | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **THOMAS WIEGAND ; WOO-JIN HAN ; BENJAMIN BROSS ; JENS-RAINER OHM ; GARY J. SULLIVAN.** Working Draft 1 of High-Efficiency Video Coding. *JCTVC-C403, Joint Collaborative Team on Video Coding (JCT-VC)of ITU-T SG16 WP3 and ISO/IEC JTC1/SC29/WG113rd Meeting,* 07 October 2010
- **JOEL JUNG ; GUILLAUME LAROCHE.** Competition-Based Scheme for Motion Vector Selection and Coding. *VCEG-AC06,ITU - Telecommunications Standardization Sector STUDY GROUP 16 Question 6Video Coding Experts Group (VCEG) 29th Meeting,* 17 July 2006

- **MARTIN WINKEN ; SEBASTIAN BOSSE ; BENJAMIN BROSS ; PHILIPP HELLE ; TOBIAS HINZ ; HEINER KIRCHHOFFER ; HARICHARAN LAKSHMAN ; DETLEV MARPE ; SIMON OUDIN ; MATTHIAS PREISS.** Description of video coding technology proposed by Fraunhofer HHI. *JCTVC-A116,* April 2010